(19) Europäisches Patentamt
European Patent Office
Office européen des brevets

(11) EP 1 113 720 B1

# (12) EUROPÄISCHE PATENTSCHRIFT

(45) Veröffentlichungstag und Bekanntmachung des Hinweises auf die Patenterteilung:
**11.01.2006 Patentblatt 2006/02**

(21) Anmeldenummer: **99969311.2**

(22) Anmeldetag: **20.09.1999**

(51) Int Cl.:
*A01N 43/70* (2006.01) *A01N 43/68* (2006.01)
*A01N 43/66* (2006.01)

(86) Internationale Anmeldenummer:
**PCT/EP1999/006937**

(87) Internationale Veröffentlichungsnummer:
**WO 2000/016627 (30.03.2000 Gazette 2000/13)**

## (54) SYNERGISTISCHE WIRKSTOFFKOMBINATIONEN ZUR BEKÄMPFUNG VON SCHADPFLANZEN

SYNERGISTIC ACTIVE SUBSTANCE COMBINATIONS FOR CONTROLLING HARMFUL PLANTS

COMBINAISONS DE PRINCIPES ACTIFS SYNERGIQUES DESTINEES A COMBATTRE LES MAUVAISES HERBES

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **18.09.1998 DE 19842894**

(43) Veröffentlichungstag der Anmeldung:
**11.07.2001 Patentblatt 2001/28**

(73) Patentinhaber: **Bayer CropScience GmbH
65929 Frankfurt/Main (DE)**

(72) Erfinder:
- **HACKER, Erwin
D-65239 Hochheim (DE)**
- **BIERINGER, Hermann
D-65817 Eppstein (DE)**
- **AULER, Thomas
D-65812 Bad Soden (DE)**
- **WILLMS, Lothar
D-65719 Hofheim (DE)**
- **MINN, Klemens
D-65795 Hattersheim (DE)**
- **HOLLANDER, Jens
D-61389 Schmitten (DE)**
- **ZINDEL, Jürgen
D-37242 Bad Sooden-Allendorf (DE)**
- **GIENCKE, Wolfgang
D-65719 Hofheim (DE)**

(56) Entgegenhaltungen:
**EP-A- 0 467 204**
**EP-A- 0 469 406**
**EP-A- 0 471 221**
**EP-A- 0 471 284**
**EP-A- 0 888 714**
**WO-A-98/15537**
**WO-A-98/34925**

- **PATENT ABSTRACTS OF JAPAN vol. 016, no. 329 (C-0963), 17. Juli 1992 (1992-07-17) & JP 04 095003 A (IDEMITSU KOSAN CO LTD), 27. März 1992 (1992-03-27)**
- **DATABASE WPI Section Ch, Week 199551 Derwent Publications Ltd., London, GB; Class C02, AN 1995-397094 XP002125908 & JP 07 267804 A (IDEMITSU KOSAN CO LTD), 17. Oktober 1995 (1995-10-17)**
- **DATABASE WPI Section Ch, Week 199551 Derwent Publications Ltd., London, GB; Class C02, AN 1995-397095 XP002125909 & JP 07 267805 A (IDEMITSU KOSAN CO LTD), 17. Oktober 1995 (1995-10-17)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 113 720 B1

## Beschreibung

Die Erfindung betrifft das technische Gebiet der Pflanzenschutzmittel, insbesondere der Kombination von Wirkstoffgruppen mit unterschiedlichen Wirkungsmodus und Wirktyp, die hervorragend für den Einsatz gegen Schadpflanzen in Nutzpflanzenkulturen geeignet sind.

In vielen Nutzpflanzenkulturen treten Schadpflanzen als unerwünschte Konkurrenten auf, die nur mit erheblichem Aufwand und unter hohen Kosten zu bekämpfen sind. Sie keimen und wachsen im Boden über einen längeren Zeitraum hinweg heran und können daher nur mit Herbiziden effektiv bekämpft werden, die ihre Wirkung über Blatt und Boden entfalten.

Als wichtige Ungräser, die weltweit in Nutzpflanzenkulturen vorkommen und von hohem wirtschaftlichen Stellenwert sind, seien exemplarisch aufgeführt:

Alcopecurus myosuroides, Avena fatua und andere Formen von Flughafer, Lolium spp., Phalaris spp., Setaria spp., Echinochloa spp., Poa spp., Bromus spp., Elymus repens, Sorghum spp. und andere, wie Agrostis spp. und Panicum spp.

Herbizide Wirkungen einiger in 6-Stellung substituierter Derivate des 2,4-Diamino-1,3,5-triazins sind bereits seit längerem bekannt.

In WO-A 97108156, WO-A-97/31904, DE-A-19826670, WO-A-98/15536, WO-A-8/15537, WO-A-98/15538. WO-A-98/15539 sowie auch DE-A-19828519, WO-A-98/34925. WO-A-98/42684, WO-A-99/18100, WO-A-99/19309 und WO-A-99/37627 sind neuere Klassen von Aminotriazinherbiziden beschrieben.

Die Wirksamkeit dieser Herbizide gegen Schadpflanzen in den Pflanzenkulturen liegt auf einem hohen Niveau, hängt jedoch im Allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z.B. weil damit häufig die Selektivität der Herbizide verschlechtert wird oder eine Wirkungsverbesserung auch bei höhere Aufwandmenge nicht eintritt. Teilweise kann die Selektivität in Kulturen durch Zusatz von Safenern verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z.B. mangelnde Stabilität in einer Coformulierung, Zersetzung eines Wirkstoffs bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Es wird in den oben zitierten Druckschriften bereits vorgeschlagen, die beschriebenen Wirkstoffe mit bekannten Herbiziden zu kombinieren, wobei eine umfangreiche Liste mögliche Kombinationspartner angegebenen ist. Hinweise auf günstige, insbesondere synergistische Eigenschaften bestimmter Kombinationen finden sich jedoch nicht.

Einige Herbizidkombinationen mit Herbiziden aus der Gruppe der 2,4-Diamino-1,3,5-triazine als ein Komponente sind bereits bekannt; vgl. WO-A-98/10654, JP-A-10025211, WO-A-97/35481, JP-A-08198712. EP-A-573897 und EP-A-573898.

Die folgenden Druckschriften beschreiben synergistische herbizide Zubereitungen, welche bestimmte Herbizide aus einer eng definierten Gruppe von Triazinderivaten der Formel (I')

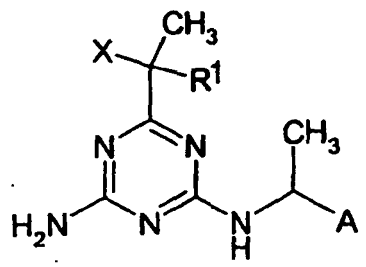

(I')

worin

- $R^1$ H oder Methyl,
- X ein Chlor- oder Fluoratom und
- A eine Phenoxymethylgruppe, die im Phenylring unsubstituiert oder mit ein oder zwei Resten aus der Gruppe Methyl und Fluor substituiert ist, oder

einen Benzofuran-2-yl- oder Benzothiophen-2-yl-rest bedeuten, in Kombination mit bestimmten Herbiziden enthalten:

EP-A-0471284 beschreibt Kombinationen mit Sulfonylhamstoffen, z. B. Bensulfuron-methyl, Chlorsulfuron, Metsulfuron, Nicosulfuron, Primisulfuron, Pyrazosulfuron, Rimsulfuron, Thifensulfuron, Triasulfuron und Tribenuron-methyl;
EP-A-0471221 betrifft Kombinationen mit Thiocarbamatherbizide wie Prosulfocarb;
EP-A-0469406 betrifft Kombinationen mit bestimmten Phenyl-, Phenoxy-, Pyridyl- oder Pyridyloxycarbonsäurederivaten wie Dicamba, Clopyralid, Fluroxypyr und Picloram;
EP-A-0467204 Kombinationen mit Hamstoffderivaten der Formel $R^2R^3NCONR^4R^5$ wie Diuron, Chlortoluron, Fluometuron, Isoproturon, Linuron und Methabenzthiazuron; Patent Abstracts of Japan, Vol. 16 (1992), no 329 (c-0963) (= JP 04-095003) betrifft Kombinationen mit bestimmten Dinitroanilin-Herbiziden wie Benfluralin, Dinitramin, Ethalfluralin, Oryzalin, Pendimethalin und Trifluralin;
JP 7-267804 betrifft Kombinationen mit Herbiziden aus der Gruppe Prodiamin, Dithiopyr, Halosulfuron, Triclopyr, Napropamid, Bensulide, Propyzamide, Flazasulfuron, Imazosulfuron und Imazaquin;
JP 07-267805 betrifft Kombinationen mit Herbiziden aus der Gruppe Pyrazosulfuron-ethyl, MCPP, Pendimethalin, Besulodine und Simazine.

Überraschenderweise wurde nun gefunden, daß Wirkstoffe aus der Gruppe der genannten Aminotriazinherbizide in Kombination mit bestimmten strukturell anderen Herbiziden in besonders günstiger Weise zusammenwirken, wenn sie in Pflanzenkulturen eingesetzt werden, die für die selektive Anwendung der Herbizide geeignet sind.

Gegenstand der Erfindung sind im Vergleich zum Stand der Technik alternative oder technisch vorteilhafte Herbizidkombinationen mit einem synergistisch wirksamen Gehalt an Komponenten (A) und (B), wobei

(A) eine oder mehrere herbizid wirksame Aminotriazinverbindungen (I) aus der gruppe der Verbindungen der Formeln (II), (III), (IV) und (V) wie unten definiert
und
(B) ein oder mehrere Herbizide aus der Gruppe der Verbindungen, welche aus

(B1) gegen monokotyle Schadpflanzen wirksamen Herbiziden mit Blatt- und/oder Bodenwirkung aus der Gruppe

(B1.1.1) Isoproturon,
(B1.1.2) Chlorotoluron,
(B1.2.1) Flufenacet,
(B1.2.2) Pendimethalin,
(B1.2.3) Prosulfocarb,
(B1.3.1) Clodinafop-propargyl,
(B1.3.2) Diclofop-methyl.
(B1.3.3) Fenoxaprop-P-ethyl und Fenoxaprop-ethyl,
(B1.3.4) Quizalofop-P und dessen Salze und Ester und Quizalofop und dessen Salze und Ester,
(B1.3.5) Fluazifop-P und dessen Ester und Fluazifop und dessen Ester,
(B1.3.6) Haloxyfop und Haloxyfop-P unde deren Ester,
(B1.3.7) Propaquizafop (PM, S. 1021-1022).

(B1.3.8) Cyhalofop und dessen Ester,
(B1.4.1) Sethoxydim,
(B1.4.2) Cycloxydim,
(B1.4.3) Clethodim,
(B1.4.4) Clefoxidim,
(B1.4.5) Tralkoxidim,
(B1.5.1) Dimethenamid,
(B1.5.2) Penthoxamid,
(B1.5.3) Butachlor,
(B1.5.4) Pretilachlor,
(B1.6.1) Imazamethabenz-methyl
(B1.6.2) Simazin
(B1.6.3) Molinate
(B1.6.4) Thiobencarb
(B1.6.4) MY 100,
(B1.6.5) Anilofos,
(B1.6.6) Cafenstrole,
(B1.6.7) Mefenacet,
(B1.6.8) Fentrazamid,
(B1.6.9) Thiazopyr,
(B1.6.10) Oxadiazon,
(B1.6.11) Esprocarb,
(B1.6.12) Pyributicarb,
(B1.6.13) Azimsulfuron,
(B1.6.14) AEB391 und verwandte Azole,
(B1.6.15) Thenylchlor,
(B1.6.16) Pentoxazone,
(B1.6.17) Pyriminobac und Pyriminobac-methyl,
(B1.6.18) Flucarbazone und dessen Salze und
(B1.6.19) Procarbazone und dessen Salze,

(B2) überwiegend gegen dikotyle Schadpflanzen wirksamen Herbiziden aus der Gruppe

(B2.1.1.) Tribenuron-methyl,
(B2.1.2) Thifensulfuron und dessen Ester,
(B2.1.3) Prosulfuron,
(B2.1.4) Amidosulfuron,
(B2.1.5) Chlorimuron und dessen Ester,
(B2.1.6) Halosulfuron und dessen Ester und Salze,
(B2.1.7) LAB271272, (= Tritosulfuron),
(B2.1.8) Bensulfuron-methyl,
(B2.1.9) Ethoxysulfuron,
(B2.1.10) Cinosulfuron,
(B2.1.11) Pyrazosulfuron und dessen Ester,
(B2.1.12) Imazosulfuron,
(B2.1.13) Cyclosulfamuron,
(B2.2.1) MCPA,
(B2.2.2) 2,4-D,
(B2.2.3) Dichlorprop,
(B2.2.4) Mecoprop-(P),
(B2.2.5) Fluoroxypyr,
(B2.2.6) Dicamba,
(B2.2.7) Clopyralid,
(B2.2.8) Picloram,
(B.2.3.1) Bromoxynil,
(B.2.3.2) loxynil,
(B2.4.1) Fluoroglycofen-ethyl,
(B2.4.2) Aclonifen,

(B2.4.3) Acifluorfen und dessen Salze,
(B2.5.1) Cloransulam und dessen Ester
(B2.5.2) Florasulam,
(B2.6.1) Bentazone,
(B2.6.2) Bifenox,
(B2.6.3) Carfentrazone-ethyl,
(B2.6.4) Pyraflufen,
(B2.6.5) Pyridate,
(B2.6.6) Linuron,
(B2.6.7) Diflufenzopyr und dessen Salze,
(B2.6.8) Cinidon-ethyl,
(B2.6.9) Clopyralid und dessen Salze und Ester,
(B2.6.10) Metribuzin,
(B2.6.11) Picolinafen,
(B2.6.12) Clomazone,
(B2.6.13) Bromobutide,
(B2.6.14) Benfuresate,
(B2.6.15) Dithiopyr und
(B2.6.16) Triclopyr und dessen Salze und Ester,

(B3) gegen monokotyle und dikotyle Schadpflanzen wirksamen Herbiziden aus der Gruppe

(B3.1.1) Metsulfuron und dessen Ester,
(B3.1.2) Triasulfuron,
(B3.1.3) Chlorsulfuron,
(B3.1.4) lodosulfuron-methyl,
(B3.1.5) AEF060,
(B3.1.6) Sulfosulfuron,
(B3.1.7) Flupyrsulfuron und dessen Salze,
(B3.1.8) Nicosulfuron,
(B3.1.9) Rimsulfuron,
(B3.1.10) Primisulfuron und Ester,
(B3.1.11) AEF360,
(B3.2.1) Cyanazin
(B3.2.2) Atrazin
(B3.2.3) Terbuthylazin,
(B3.2.4) Terbutryn,
(B3.3.1) Acetochlor
(B3.3.2) Metolachlor,
(B3.3.3) Alachlor,
(B3.4.1) Clomazone,
(B3.4.2) Diflufenican,
(B3.4.3) Flumetsulam,
(B3.4.4) Flurtamone,
(B3.4.5) Isoxaflutole,
(B3.4.6) Metosulam,
(B3.4.7) Metribuzin,
(B3.4.8) Paraquat (Salze),
(B3.4.9) Benoxacor
(B3.4.10) Sulcotrione,
(B3.4.11) Mesotrione,
(B3.4.12) Quinclorac,
(B3.4.13) Propanil,
(B3.4.14) Bispyribac, Bispyribac-Na,
(B3.4.15) LGC 40863 (Pyribenzoxim),
(B3.4.16) Oxadiargyl,
(B3.4.17) Norflurazon,
(B3.4.18) Fluometuron,

(B3.4.19) Methylarsonsäure und deren Salze (DSMA, MSMA).
(B3.4.20) Prometryn,
(B3.4.21) Trifluralin,

(B4) gegen monokotyle und dikotyle Schadpflanzen wirksame Herbizide, die speziell in toleranten Kulturen oder auf Nichtkulturland eingesetzt werden können, aus der Gruppe

(B4.1.1) Glufosinate,
(B4.1.2) Glufosinate-monoammoniumsalz,
(B4.1.3) L-Glufosinate,
(B4.1.4) L-Glufosinate-monoammoniumsalz,
(B4.1.5) Bilanafos,
(B4.2.1) Glyphosate,
(B4.2.2) Glyphosate-monoisopropylammoniumsatz,
(B4.2.3) Glyphosate-natriumsalz,
(B4.2.4) Sulfosate,
(B4.3.1) Imazapyr,
(B4.3.2) Imazethapyr
(B4.3.3) Imazamethabenz,und dessen Salze und Ester,
(B4.3.4) Imazamox und dessen Salze und Ester,
(B4.3.5) Imazaquin und dessen Salze und Ester,
(B4.3.6) Imazapic (AC 263,222) und dessen Salze und Ester
(B4.4.1) WC9717 oder CGA276854,
(B4.4.2) Azafenidin,
(B4.4.3) Diuron und
(B4.4.4) Oxyfluorfen,

und gegebenenfalls jeweils deren in der Landwirtschaft einsetzbaren Salze besteht, bedeuten.

Die synergistischen Wirkungen werden bei gemeinsamer Ausbringung der Wirkstoffe (A) und (B) beobachtet, können jedoch häufig auch bei zeitlich versetzter Anwendung (Splitting) festgestellt werden. Möglich ist auch die Anwendung der Herbizide oder der Herbizid-Kombinationen in mehreren Portionen (Sequenzanwendung), z.B. nach Anwendungen im Vorauflauf, gefolgt von Nachauflauf-Applikationen oder nach frühen Nachauflaufanwendungen, gefolgt von Applikationen im mittleren oder späteren Nachauflauf. Bevorzugt ist dabei die gemeinsame oder die zeitnahe Anwendung der Wirkstoffe der jeweiligen Kombination.

Die synergistischen Effekte erlauben eine Reduktion der Aufwandmengen der Einzelwirkstoffe, eine höhere Wirkungsstätte bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Beispielsweise werden durch die erfindungsgemäßen Kombinationen aus (A)+(B) synergistische Wirkungssteigerungen möglich, die in unerwarteter Weise über die Wirkungen hinausgehen, die mit den Einzelwirkstoffen (A) und (B) erreicht werden.

Die Aminotriazine (I) für die Herbizidkombinationen sind Verbindungen der nachstehenden Formeln (II) bis (V) und deren Salze:

1. Verbindungen der Formel (II) und deren Salze,

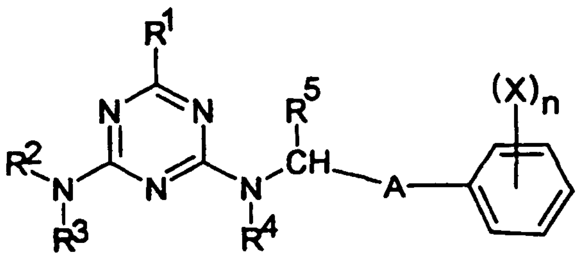

(II)

worin

| | |
|---|---|
| $R^1$ | $(C_1-C_6)$Alkyl, das unsubstituiert oder durch einen oder mehrere Reste aus der Gruppe Halogen, Cyano, Nitro, Thiocyanato, $(C_1-C_4)$Alkoxy, $(C_1-C_4)$Alkylthio, $(C_1-C_4)$Alkylsulfinyl, $(C_1-C_4)$Alkylsulfonyl, $(C_2-C_4)$Alkenyl, $(C_2-C_4)$Alkinyl, Phenyl, das unsubstituiert oder substituiert ist, und Heterocyclyl mit 3 bis 6 Ringatomen und 1 bis 3 Heteroringatomen aus der Gruppe N, O und S, wobei der Ring unsubstituiert oder substituiert ist, substituiert ist, |
| $R^2$ und $R^3$ | jeweils unabhängig voneinander Wasserstoff, Amino oder Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder<br>$R^2$ und $R^3$ gemeinsam mit dem Stickstoffatom der Gruppe $NR^2R^3$ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist, |
| $R^4$ | Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest, |
| $R^5$ | Wasserstoff, Halogen, Nitro, Cyano, Thiocyanato oder einen Rest der Formel $-B^1-Y^1$, wobei $B^1$ und $Y^1$ wie unten definiert sind, |
| A | einen Alkylenrest mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiocyanato und einen Rest der Formel $-B^2-Y^2$ substituiert ist, |
| $(X)_n$ | n Substituenten X und dabei X jeweils unabhängig voneinander Halogen, $(C_1-C_6)$Alkyl, $(C_2-C_6)$Alkenyl, $(C_2-C_6)$Alkinyl, $(C_1-C_6)$Alkoxy, $(C_2-C_6)$Alkenyloxy, $(C_2-C_6)$Alkinyloxy, $[(C_1-C_4)$Alkyl]-carbonyl, $[(C_1-C_4)$Alkoxy]-carbonyl oder $[(C_1-C_4)$Alkylthio]-carbonyl, wobei die kohlenwasserstoffhaltigen Teile in den letztgenannten 9 Resten unsubstituiert oder substituiert sind, oder einen Rest der Formel -B°-R°, wobei B° wie unten definiert und R° einen aromatischen, gesättigten oder teilgesättigten carbocyclischen oder heterocyclischen Rest bedeutet, wobei der cyclische Rest substituiert oder unsubstituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, $(C_1-C_4)$Alkyl und Oxo substituiert ist, |
| n | 0, 1, 2, 3, 4 oder 5, |
| $B^0$,$B^1$,$B^2$ | jeweils unabhängig voneinander eine direkte Bindung oder eine divalente Gruppe der Formel -O-, $-S(O)_p-$, $-S(O)_p-O-$, $-O-S(O)_p-$, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist, |
| $Y^1$,$Y^2$ | jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N, O und S, wobei jeder der drei letztgenannten Reste unsubstituiert oder substituiert ist, |

bedeuten;

2. Verbindungen der Formel (III) oder deren Salze,

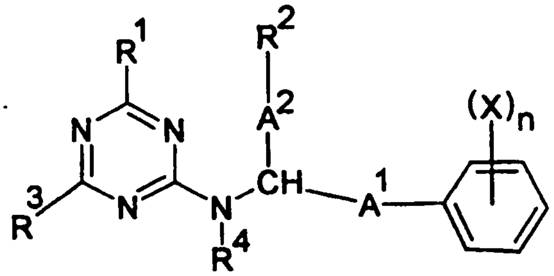

(III)

worin

$R^1$ Aryl, das unsubstituiert oder substituiert ist, oder $(C_3$-$C_9)$Cycloalkyl, das unsubstituiert oder substituiert ist, oder Heterocyclyl, das substituiert oder unsubstituiert ist, oder $(C_1$-$C_6)$Alkyl, $(C_2$-$C_6)$Alkenyl oder $(C_2$-$C_6)$Alkinyl,
wobei jeder der letztgenannten 3 Reste unsubstituiert oder durch einen oder mehrere Reste aus der Gruppe Halogen, Hydroxy, Cyano, Nitro, Thiocyanato, $(C_1$-$C_4)$Alkoxy, $(C_1$-$C_4)$Haloalkoxy, $(C_2$-$C_4)$Alkenyloxy, $(C_2$-$C_4)$Hatoalkenyloxy, $(C_1$-$C_4)$Alkylthio, $(C_1$-$C_4)$Alkylsulfinyl, $(C_1$-$C_4)$Alkylsulfonyl, $(C_1$-$C_4)$Haloalkylsulfinyl, $(C_1$-$C_4)$Haloalkylsulfonyl und $(C_3$-$C_9)$Cycloalkyl, das unsubstituiert oder substituiert ist, und Phenyl, das unsubstituiert oder substituiert ist, und Heterocyclyl, das unsubstituiert oder substituiert ist, und Reste der Formeln R'-C(=Z')-, R'-C(=Z')-Z-, R'-Z-C(=Z')-, R'R"N-C(=Z')-, R'-Z-C(=Z')-O-, R'R"N-C(=Z')-Z-, R'-C(=Z')-NR"- und R'R"N-C(=Z')-NR'''-, worin R', R" und R''', jeweils unabhängig voneinander $(C_1$-$C_6)$Alkyl, Aryl, Aryl-$(C_1$-$C_6)$alkyl, $(C_3$-$C_9)$Cycloalkyl oder $(C_3$-$C_9)$Cycloalkyl-$(C_1$-$C_6)$alkyl, wobei jeder der 5 letztgenannten Reste unsubstituiert oder substituiert ist, bedeuten und worin Z und Z' unabhängig voneinander jeweils ein Sauerstoff- oder Schwefelatom sind, substituiert ist,

$R^2$ $(C_3$-$C_9)$Cycloalkyl, das unsubstituiert oder substituiert ist, $(C_4$-$C_9)$Cycloalkenyl, das unsubstituiert oder substituiert ist, Heterocyclyl, das unsubstituiert oder substituiert ist, oder Phenyl, das unsubstituiert oder substituiert ist,

$R^3$ Wasserstoff, $(C_1$-$C_6)$Alkyl, Aryl oder $(C_3$-$C_9)$Cycloalkyl, wobei jeder der letztgenannten 3 Reste unsubstituiert oder substituiert ist, oder einen Rest der Formel $-N(B^1-D^1)(B^2-D^2)$ oder $-NR'-N(B^1-D^1)(B^2-D^2)$, worin jeweils $B^1$, $B^2$, $D^1$ und $D^2$ wie unten definiert sind und R' Wasserstoff, $(C_1$-$C_6)$Alkyl oder $[(C_1$-$C_4)$Alkyl]- carbonyl bedeutet,

$R^4$ einen Rest der Formel-$B^3$-$D^3$, wobei $B^3$und $D^3$ wie unten definiert sind,

$A^1$ geradkettiges Alkylen mit 1 bis 5 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -$B^4$-$D^4$ substituiert ist, wobei $B^4$ und $D^4$ wie unten definiert sind,

$A^2$ eine direkte Bindung oder geradkettiges Alkylen mit 1 bis 4 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -$B^5$-$D^5$ substituiert ist, oder einen divalenten Rest der Formel $V^1$, $V^2$, $V^3$, $V^4$ oder $V^5$,

$$-CR^6R^7-W^*-CR^8R^9- \quad (V^1)$$

$$-CR^{10}R^{11}-W^*-CR^{12}R^{13}-CR^{14}R^{15}- \quad (V^2)$$

$$-CR^{16}R^{17}-CR^{18}R^{19}-W^*-CR^{20}R^{21}- \quad (V^3)$$

$$-CR^{22}R^{23}-CR^{24}R^{25}-W^*- \quad (V^4)$$

$$-CR^{26}R^{27}-W^*- \quad (V^5)$$

wobei jeder der Reste $R^6$ bis $R^{27}$ jeweils unabhängig voneinander Wasserstoff, Halogen, Nitro, Cyano, Thiocyanato oder einen Rest der Formel $-B^6-D^6$ ist, W* jeweils ein Sauerstoffatom, ein Schwefelatom oder eine Gruppe der Formel $N(B^7-D^7)$ ist und $B^5$, $B^6$, $B^7$, $D^5$, $D^6$ und $D^7$ wie unten definiert sind,

$B^1$, $B^2$, $B^3$ und $B^7$ jeweils unabhängig voneinander eine direkte Bindung oder eine divalente Gruppe der Formeln -C(=Z*)-, -C(=Z*)-Z**-, -C(=Z*)-NH- oder -C(=Z*)-NR*-, wobei Z* = ein Sauerstoff- oder Schwefelatom, Z** = ein Sauerstoff- oder Schwefelatom und R* = $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist,

$B^4$, $B^5$ und $B^6$ jeweils unabhängig voneinander eine direkte Bindung oder eine divalente Gruppe der Formeln -O-, $-S(O)_p-$, $-S(O)_p-O-$, $-O-S(O)_p-$, -CO-, -O-CO-, -CO-O-, -S-CO-, -CO-S-, -S-CS-, -CS-S-, -O-CO-O-, $-NR^0-$, $-O-NR^0-$, $-NR^0-O-$, $-NR^0-CO-$, $-CO-NR^0-$, $-O-CO-NR^0-$ oder $-NR^0-CO-O-$, wobei p die ganze Zahl 0, 1 oder 2 ist und R° Wasserstoff, $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist, bedeutet,

$D^1$, $D^2$, $D^3$, $D^4$, $D^5$ und $D^6$ jeweils unabhängig voneinander Wasserstoff, $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist, oder jeweils zwei Reste $D^5$ von an einem C-Atom gebundenen zwei Gruppen $-B^5-D^5$ miteinander verbunden sind und eine Alkylengruppe mit 2 bis 4 C-Atomen ergeben, die unsubstituiert oder durch einen oder mehrere Reste aus der Gruppe $(C_1-C_4)$alkyl und $(C_1-C_4)$alkoxy substituiert ist,

$(X)_n$ n Substituenten X und dabei X jeweils unabhängig voneinander Halogen, Hydroxy, Amino, Nitro, Formyl, Carboxy, Cyano, Thiocyanato, Aminocarbonyl oder $(C_1-C_6)$Alkyl, $(C_1-C_6)$Alkoxy, $(C_1-C_6)$Alkylthio, Mono$(C_1-C_6)$alkylamino, Di$(C_1-C_4)$alkylamino, $(C_2-C_6)$Alkenyl, $(C_2-C_6)$Alkinyl, $[(C_1-C_6)$Alkyl]carbonyl, $[(C_1-C_6)$Alkoxy]carbonyl, Mono$(C_1-C_6)$alkylamino-carbonyl Di$(C_1-C_4)$alkylamino-carbonyl, N-$(C_1-C_6)$Alkanoyl-amino oder N-$(C_1-C_4)$Alkanoyl-N-$(C_1-C_4)$alkyl-amino, wobei jeder der letztgenannten 13 Reste unsubstituiert oder substituiert ist, vorzugsweise unsubstituiert oder durch einen oder mehrere Reste aus der Gruppe Halogen, Hydroxy, Amino, Nitro, Formyl, Carboxy, Cyano, Thiocyanato, $(C_1-C_4)$Alkoxy, $(C_1-C_4)$Haloalkoxy, $(C_1-C_4)$Alkylthio, $(C_1-C_4)$Haloalkylthio, Mono$(C_1-C_4)$alkylamino, Di$(C_1-C_4)$alkylamino, $(C_3-C_9)$Cycloalkyl, $(C_3-C_9)$Cycloalkyl-amino, $[(C_1-C_4)$Alkyl]carbonyl, $[(C_1-C_4)$Alkoxy]carbonyl, Aminocarbonyl, Mono$(C_1-C_4)$alkylamino-carbonyl, Di$(C_1-C_4)$alkylamino-carbonyl, Phenyl, Phenoxy, Phenylthio, Phenylcarbonyl, Heterocyclyl, Heterocyclyloxy, Heterocyclylthio und Heterocyclylamino, wobei jeder der letztgenannten 8 Reste unsubstituiert ist oder einen oder mehrere Substituenten aus der Gruppe Halogen, Nitro, Cyano, $(C_1-C_4)$Alkyl, $(C_1-C_4)$Alkoxy, $(C_1-C_4)$Alkylthio, $(C_1-C_4)$Haloalkyl, $(C_1-C_4)$Haloalkoxy, Formyl, $(C_1-C_4)$Alkyl-carbony und $(C_1-C_4)$Alkoxy-carbonyl aufweist, substituiert ist, oder $(C_3-C_9)$Cycloalkyl, $(C_3-C_9)$Cycloalkoxy, $(C_3-C_9)$Cycloalkylamino, Phenyl, Phenoxy, Phenylthio, Phenylcarbonyl, Heterocyclyl, Heterocyclyloxy, Heterocyclylthio oder Heterocyclylamino, wobei jeder der letztgenannten 11 Reste unsubstituiert oder substituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, $(C_1-C_4)$Alkyl und Oxo substituiert ist,

n 0, 1, 3, 4 oder 5 und

"Heterocyclyl" in den vorstehend genannten Resten unabhängig voneinander jeweils einen heterocyclischen Rest mit 3 bis 7 Ringatomen und 1 bis 3 Heteroatomen aus der Gruppe N, O und S
bedeuten, wobei

a) die Gesamtsumme der C-Atome in den Resten $A^1$ und $A^2-R^2$ mindestens 6 C-Atome beträgt oder
b) die Gesamtsumme der C-Atome in den Resten $A^1$ und $A^2-R^2$ 5 C-Atome beträgt und $A^1$ = eine Gruppe der Formel $-CH_2-$ oder $-CH_2CH_2-$ bedeutet sowie $R^1$ = $(C_1-C_4)$Alkyl, $(C_1-C_4)$Haloalkyl, $(C_2-C_6)$Haloalkenyl oder $(C_3-C_9)$Cycloalkyl, das unsubstituiert oder substituiert ist, bedeutet;

3. Verbindungen der Formel (IV) oder deren Salze,

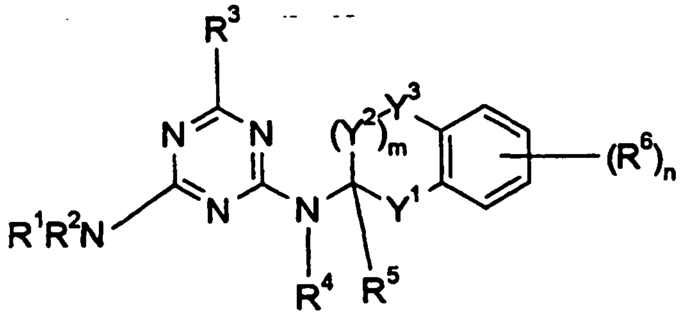

(IV)

worin

| | |
|---|---|
| $R^1$ und $R^2$ | jeweils unabhängig voneinander Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest, Heterocyclylthiorest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder |
| $R^1$ und $R^2$ | gemeinsam mit dem Stickstoffatom der Gruppe $NR^1R^2$ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist, |
| $R^3$ | Halogen, Cyano, Thiocyanato, Nitro oder einen Rest der Formel $-Z^1-R^7$, |
| $R^4$ | Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclyfaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest, |
| $R^5$ | Halogen, Cyano, Thiocyanato, Nitro oder einen Rest der Formel $-Z^2-R^8$, |
| $R^6$, | wenn n=1, oder die Reste $R^6$ jeweils unabhängig voneinander, wenn n größer als 1 ist, Halogen, Cyano, Thiocyanato, Nitro oder eine Gruppe der Formel $-Z^3-R^9$, |
| $R^7$, $R^8$, $R^9$ | jeweils unabhängig voneinander |

- Wasserstoff oder
- einen acyclischen Kohlenwasserstoffrest, wobei in der Kette Kohlenstoffatome durch Heteroatome aus der Gruppe N, O und S substituiert sein können, oder
- einen cyclischen Kohlenwasserstoffrest oder
- einen heterocyclischen Rest,

wobei jeder der letztgenannten 3 Reste unsubstituiert oder substituiert ist,

$Z^1$, $Z^2$, $Z^3$ jeweils unabhängig voneinander

- eine direkte Bindung oder
- eine divalente Gruppe der Formel -O-, $-S(O)_p-$, $-S(O)_p-O-$, $-O-S(O)_p-$, -CO-, -CS-, -S-CO-, -CO-S-. -O-CS-, -CS-O-, -S-CS-, -CS-S-, -OCO-, -CO-O-, -NR'-. -O-NR'-, -NR'-O-, -NR'-CO- oder -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,

$Y^1$, $Y^2$, $Y^3$ und weitere Gruppen $Y^2$, wenn m 2, 3 oder 4 ist, jeweils unabhängig voneinander

- eine divalente Gruppe der Formel $CR^aR^b$, wobei $R^a$ und $R^b$ gleich oder verschieden sind und jeweils einen Rest aus der Gruppe der für $R^7$ bis $R^9$ möglichen Reste bedeuten, oder
- eine divalente Gruppe der Formel -O-, -CO-, -C(=NR*)-, -S(O)q-, -NR*- oder -N(O)-, wobei q =

0, 1 oder 2 ist und R* Wasserstoff oder Alkyl mit 1 bis 4 C-Atomen ist, oder

- $Y^1$ oder $Y^3$ eine direkte Bindung,

wobei zwei Sauerstoffatome der Gruppen $Y^2$ und $Y^3$ nicht benachbart sind,

m 1, 2, 3 oder 4,

n 0, 1, 2, 3 oder 4

bedeuten;

4. Substituierte 2,4-Diamino-1,3,5-triazine der allgemeinen Formel (V),

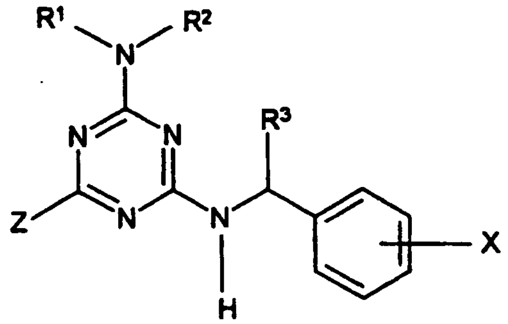

(V)

in welcher

$R^1$ für Wasserstoff oder für gegebenenfalls durch Hydroxy, Cyano, Halogen oder $C_1$-$C_4$-Alkoxy substituiertes Alkyl mit 1 bis 6 Kohlenstoffatomen steht,

$R^2$ für Wasserstoff, für Formyl, für jeweils gegebenenfalls durch Cyano, Halogen oder $C_1$-$C_4$-Alkoxy substituiertes Alkyl, Alkylcarbonyl, Alkoxycarbonyl oder Alkylsulfonyl mit jeweils 1 bis 6 Kohlenstoffatomen in den Alkylgruppen, oder für jeweils gegebenenfalls durch Cyano, Halogen-$C_1$-$C_4$-alkyl, $C_1$-$C_4$-Alkoxy, Halogen-$C_1$-$C_4$-alkoxy oder $C_1$-$C_4$-Alkoxy-carbonyl substituiertes Phenylcarbonyl, Naphthylcarbonyl, Phenylsulfonyl oder Naphthylsulfonyl steht,

$R^3$ für gegebenenfalls durch Cyano, Halogen oder $C_1$-$C_4$-Alkoxy substituiertes Alkyl mit 1 bis 6 Kohlenstoffatomen oder für gegebenenfalls durch Cyano, Halogen oder $C_1$-$C_4$-Alkyl substituiertes Cycloalkyl mit 3 bis 6 Kohlenstoffatomen steht,

X für einen Substituenten aus folgender Gruppe steht:
Hydroxy, Cyano, Nitro, Halogen, jeweils gegebenenfalls durch Hydroxy, Cyano oder Halogen substituiertes Alkyl oder Alkoxy mit jeweils 1 bis 6 Kohlenstoffatomen, jeweils gegebenenfalls durch Halogen substituiertes Alkylcarbonyl, Alkoxycarbonyl, Alkylthio, Alkylsulfinyl oder Alkylsulfonyl mit jeweils 1 bis 6 Kohlenstoffatomen in den Alkylgruppen, jeweils gegebenenfalls durch Hydroxy, Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Phenoxy, und

Z für Wasserstoff, Hydroxy, Halogen, für jeweils gegebenenfalls durch Hydroxy, Cyano, Nitro, Halogen, $C_1$-$C_4$-Alkoxy, $C_1$-$C_4$-Alkylcarbonyl, $C_1$-$C_4$-Alkoxy-carbonyl, $C_1$-$C_4$-Alkylthio, $C_1$-$C_4$-Alkylsulfinyl oder $C_1$-$C_4$-Alkylsulfonyl substituiertes Alkyl, Alkoxy, Alkylcarbonyl, Alkoxycarbonyl, Alkylthio, Alkylsulfinyl oder Alkylsulfonyl, mit jeweils 1 bis 6 Kohlenstoffatomen in den Alkylgruppen, für jeweils gegebenenfalls durch Halogen substituiertes Alkenyl oder Alkinyl mit jeweils 2 bis 6 Kohlenstoffatomen oder für gegebenenfalls durch Cyano, Halogen oder $C_1$-$C_4$-Alkyl substituiertes Cycloalkyl mit 3 bis 6 Kohlenstoffatomen steht.

Besonders bevorzugte erfindungsgemäß einzusetzende Aminotriazine (I) sind solche der Formel (X),

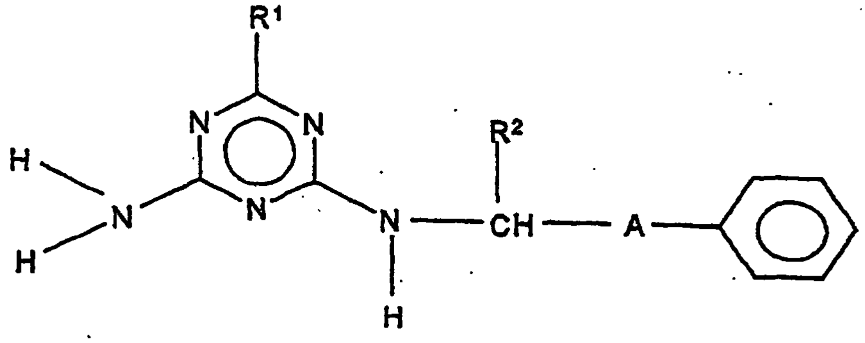

(X)

worin

$R^1$ $(C_1\text{-}C_4)$-Alkyl oder $(C_1\text{-}C_4)$-Haloalkyl;
$R^2$ $(C_1\text{-}C_4)$-Alkyl, $(C_3\text{-}C_6)$-Cycloalkyl oder $(C_3\text{-}C_6)$-Cycloalkyl-$(C_1\text{-}C_4)$-Alkyl und
A $-CH_2-$, $-CH_2-CH_2-$ oder $CH_2-CH_2-CH_2$,

bedeuten.

Halogen ist vorzugsweise Chlor, Brom und iod, in Haloalkyl ist Halogen bevorzugt Fluor.

$R^1$ ist bevorzugt $-CF(CH_3)_2$,
$R^2$ ist bevorzugt $(C_1\text{-}C_4)$-Alkyl oder $(C_3\text{-}C_4)$-Cycloalkyl.
A ist $-CH_2-$, $-CH_2-CH_2-$ oder $-CH_2-CH_2-CH_2-$.

Besonders bevorzugte Verbindungen der Formel (X) sind die Verbindungen (A1), (A2), (A3):

(A1)

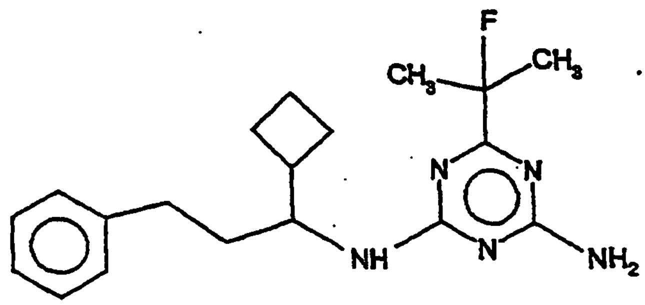

(A2)

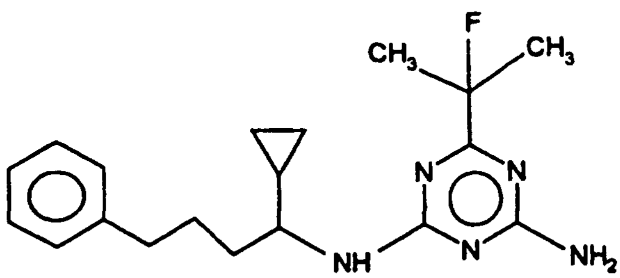

(A3) 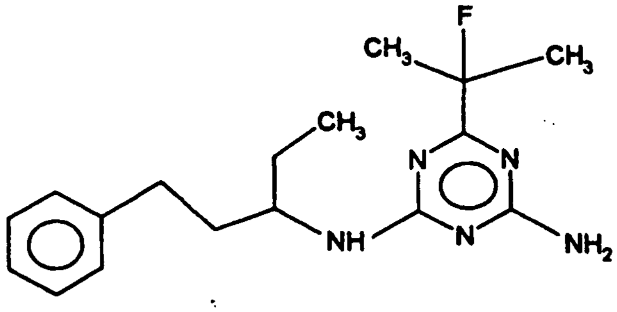

Aminotriazine (I) sind bekannt. Die Herstellung solcher Verbindungen ist beispielsweise beschrieben in den nachstehenden Druckschriften oder kann beispielsweise nach den in diesen Druckschriften beschriebenen Methoden erfolgen:

- WO-A 97/08 156 (Verbindungen der Formel (II)),
- DE-A 198 26 670 (Verbindungen der Formel (III)),
- WO-A 97/31 904 (Verbindungen der Formel (IV)),
- WO-A 98/15 536 (Verbindungen der Formel (V)),

Weiterhin kommen als Aminotriazine (1) oder deren Salze Verbindungen in Frage, wie sie in den Druckschriften WO-A-98/42684, und WO-A-99/19309 aufgeführt sind.

Bezüglich der bevorzugten Verbindungen, deren Herstellung und allgemeinen Bedingungen für deren Anwendungs sowie insbesondere bezüglich der konkreten Beispielverbindungen wird auf die Beschreibungen der genannten Druckschriften Bezug genommen und sind diese Beschreibungen insofern Bestandteil der vorliegenden Erfindung.

Die Wirkstoffe (A) sind zur Bekämpfung in einer Reihe von Pflanzenkulturen geeignet, beispielsweise in wirtschaftlich bedeutenden Kulturen wie Getreide (Weizen, Gerste, Roggen, Reis, Mais), Zuckerrübe, Zuckerrohr, Raps, Baumwolle und Soja. Von besonderem Interesse ist dabei die Anwendung in Getreide wie Weizen und Mais, insbesondere Mais. Für die Kombinationen (A)+(B) sind diese Kulturen ebenfalls bevorzugt.

Als Kombinationspartner (B) kommen eine oder mehrere der folgenden Verbindungen der Untergruppen (B1) bis (B4) in Frage (die Bezeichnung der Herbizide erfolgt weitgehend mit dem "common name" nach der Referenzstelle "The Pesticide Manual" 11 th Ed., British Crop Protection Council 1997, abgekürzt "PM".

(B1) gegen monokotyle Schadpflanzen wirksame Herbizide mit Blatt- und/oder Bodenwirkung, vorzugsweise

(B1.1) Harnstoffe mit überwiegend Bodenwirkung:

(B1.1.1) Isoproturon (PM, S. 732-734), d.h. 3-(4-Isopropylphenyl)-1,1-dimethylhamstoff und/oder
(B1.1.2) Chlorotoluron (PM, S. 229-231), d.h. 3-(3-chlor-p-tolyl)-1,1-dimethylharnstoff und/oder

(B1.2) Verbindungen mit unterschiedlichen Strukturen und überwiegend Bodenwirkung:

(B1.2.1) Fluthiamide (= Flufenacet, siehe PM, S. 82-83), d.h. 4'-Fluor-N-isopropyl-2-(5-trifluormethyl-1,3,4-thiadiazol-2-yloxy)acetanilid und/oder
(B1.2.2) Pendimethalin (PM, S. 937-939), d.h. N-(1-Ethylpropyl)-2,6-dinitro-3,4-xylidin und/oder
(B1.2.3) Prosulfocarb (PM, S. 1039-1041), d.h. s-Benzyldipropylthiocarbamat und/oder

(B1.3) 2-(4-Heteroaryl- oder 4-Aryloxyphenoxy)propionsäuren mit überwiegend Blattwirkung;

(B1.3.1) Clodinafop-propargyl (PM S. 251-253), d.h. Prop-2-inyl (R)-2-[4-[(5-Chlor-3-fluor-2-pyridinyl)oxy]phenoxy]propanoat und/oder
(B1.3.2) Diclofop-methyl (PM, S. 374-377), d.h. Methyl (RS)-2-[4-(2,4-dichlorphenoxy)phenoxy]propanoat und/oder
(B1.3.3) Fenoxaprop-P-ethyl (PM, S. 519-520), d.h. Ethyl-(R)-2-[4-[(6-chlor-2-benzoxazolyl)oxy]phenoxy]propanoat, auch in der Form der Gemische der optischen Isomeren, z. B. dem racemischen Gemisch Fenoxaprop-ethyl und/oder

(B1.3.4) Quizalofop-P und dessen Ester wie der Ethyl- oder Tefurylester (PM, S. 1089-1092), auch in der Form der Gemische der optischen Isomeren, z.

B. dem racemischen Gemisch Quizalofop und dessen Ester und/oder (B1.3.5) Fluazifop-P und dessen Ester wie der Butylester (PM, S. 556-557), auch in der Form der Gemische der optischen Isomeren, z. B. dem racemischen Gemisch Fluazifop-butyl und/oder

(B1.3.6) Haloxyfop und Haloxyfop-P und deren Ester wie der Methyl- oder der Etotylester (PM, S. 660-663) und/oder

(B1.3.7) Propaquizafop (PM, S. 1021-1022) und/oder

(B1.3.8) Cyhalofop und dessen Ester wie der Butylester (PM, S. 297-298) (= (R)-2-[4-(4-Cyano-2-fluor-phenoxy)-phenoxy]-propionsäure bzw. -butylester) und/oder

(B1.4) Cyclohexandionoxime mit überwiegend Blattwirkung

(B1.4.1) Sethoxydim (PM, S. 1101-1103), d. h. (E,Z)-2-(1-Ethoxyiminobutyl)-5-[2-(ethylthio)-propyl]-3-hydroxy-cyclohex-2-enon, und/oder

(B1.4.2) Cycloxydim (PM, S. 290-291), d. h. 2-(1-Ethoxyiminobutyl)-3-hydroxy-5-thian-3-ylcyclohex-2-enon, und/oder

(B1.4.3) Clethodim (PM, S. 250-251), d. h. 2-{(E)1-[(E)-3-Chlorallyloxyimino]-propyl}-5-[-2(ethylthio)-propyl]-3-hydroxy-cyclohex-2-enon und/oder

(B1.4.4) Clefoxidim oder "BAS 625 H" (siehe AG Chem New Compound Review, Vol. 17, 1999, S. 26, herausgegeben von AGRANOVA) (= 2-[1-2-(4-Chlorphenoxy)-propoxyimino)-butyl]-3-oxo-5-thion-3-yl-cyclohex-1-enol).

(B1.4.5) Tralkoxidim (PM, S. 1211-1212), d.h. 2-[1-(Ethoxyimino)propyl]-3-hydroxy-5-mesitylcyclohex-2-enon, und/oder

(B1.5) Chloracetamide mit überwiegend Bodenwirkung,

(B1.5.1) Dimethenamid (PM, S. 409-410), d. h. 2-Chlor-N-(2,4-dimethyl-3-thienyl)-N-(2-methoxy-1-methylethyl)-acetamid, und/oder

(B1.5.2) Penthoxamid, d.h. 2-Chlor-N-(2-ethoxyethyl)-N-(2-methyl-1-phenyl-1-propenyl)-acetamid (TKC-94, bekannt aus AG Chem New Compound, Review Vol. 17 (1999), EP-A-206 251), und/oder

(B1.5.3) Butachlor (PM, S. 159-160), d. h. N-(Butoxymethyl)-2-chlor-N-(2,6-diethylphenyl)-acetamid, und/oder

(B1.5.4) Pretilachlor (PM, S. 995-996), d. h. 2-Chlor-N-(2,6-diethylphenyl)-N-(propoxyethyl)-acetamid, und/oder

(B1.6) Verbindungen mit unterschiedlichen Strukturen und Blatt- und/oder Bodenwirkung,

(B1.6.1) Imazamethabenz-methyl (PM, S. 694-696), d.h. Methyl (±)-2-(4-isopropyl-4-methyl-5-oxo-2-imidazolin-2-yl)-para- und -meta-toluat, und/oder

(B1.6.2) Simazin (PM, S. 1106-1108), d. h. 6-Chlor-N,N'-diethyl-2,4-diamino-1,3,5-triazin, und/oder

(B1.6.3) Molinate (PM, S. 847-849), d. h. Azepan-1-thiocarbonsäure-S-ethylester, und/oder

(B1.6.4) Thiobencarb (Benthiocarb) (PM, S. 1192-1193), d. h. Diethylthiocarbaminsäure-S-4-chlorbenzylester, und/oder

(B1.6.4) MY 100, d. h. 3-[1-(3,5-Dichlorphenyl)-1,1-dimethyl]-6-methyl-5-phenyl-2H,3H-1,3-oxazin-4-on (Fa. Rhone Poulenc), und/oder

(B1.6.5) Anilofos (PM, S. 47-48), d. h. Dithiophosphorsäure-S-4-chlor-N-isopropylcarbaniloylmethyl-O,O-dimethyl-ester, und/oder

(B1.6.6) Cafenstrole (CH 900) (PM, S. 173-174), d. h. N,N-Diethyl-3-mesitylsulfonyl-1H-1,2,4-triazol-1-carboxamid, und/oder

(B1.6.7) Mefenacet (PM, S. 779-781), d. h. 2-(1,3-Benzthiazol-2-yloxy)-N-methylacetanilid, und/oder

(B1.6.8) Fentrazamid (NBA 061), d. h. 4-(2-Chlorphenyl)-5-oxo-4,5-dihydro-tetrazol-1-carbonsäure-N-cyclohexyl-N-ethyl-amid, und/oder

(B1.6.9) Thiazopyr (PM, S. 1185-1187), d. h. 2-Difluormethyl-5-(4,5-dihydro-1,3-thiazol-2-yl)-4-isobutyl-6-trifluormethyl-nicotinsäuremethylester, und/oder

(B1.6.10) Oxadiazon (PM, S. 905-907), d. h. 3-tert.-Butyl-3-(2,4-dichlor-5-isopropoxy-phenyl)-1,3,4-oxadiazol-2(3H)-on, und/oder

(B1.6.11) Esprocarb (PM, S. 472-473), d. h. 1,2-Dimethylpropyl(ethyl)thiocarbaminsäure-S-benzylester,

und/oder
(B1.6.12) Pyributicarb (PM, S. 1060-1061), d. h. 6-(Methoxy-2-pyridyl(methyl)thiocarbaminsäure-O-3-tert-butylphenylester, und/oder
(B1.6.13) Azimsulfuron (PM, S. 63-65), d. h. 1-(4,6-Dimethoxypyrimidin-2-yl)-3-[1-methyl-4-(2-methyl-2H-tetrazol-5-yl)-pyrazol-5-ylsulfonyl]-hamstoff, und/oder
(B1.6.14) Azole, wie sie aus der EP-A-0663913 bekannt sind, z. B. AEB391, d. h. 1-(3-Chlor-4,5,6,7-tetrajydropyrazolo-[1,5-a]-pyridin-2-yl)-5-methylpropargylamino)-4-pyrazolylcarbonsäurenitril, und/oder
(B1.6.15) Thenylchlor (PM, S. 1182-1183), d. h. 2-Chlor-N-(2,6-dimethylphenyl)-N[(3-methoxy-2-thienyl)-methyl]-acetamid, und/oder
(B1.6.16) Pentoxazone (KPP 314) (PM, S. 942-943), d. h. 3-(4-Chlor-5-cyclopentyloxy-2-fluorphenyl)-5-isopropyliden-1,3-oxazolidin-2,4-dion, und/oder
(B1.6.17) Pyriminobac, Pyriminobac-methyl (KIH 6127) (PM, S. 1071-1072), d. h. 2-(4,6-Dimethoxy-2-pyrimidinyloxy)-6-(1-methoxyiminoethyl)-benzoesäure), und dessen Salze und Ester wie der Methylester, und/oder
(B1.6.18) Flucarbazone und dessen Salze wie das Flucarbazone-natriumsalz (BAY MKH 6562, bekannt aus AG Chem New Compound, Review Vol. 17 (1999), Seite 28 und EP-A-507171), d. h. 1H-1,2,4-Triazol-1-carboxamid-4,5-dihydro-3-methoxy-4-methyl-5-oxo-N-[[2-(trifluormethoxy)-phenyl]-sulfonyl]-Natriumsalz, vorzugsweise in Mengen von 5-100, insbesondere 10-80 g A.S./ha, und/oder
(B1.6.19) Procarbazone (BAY MKH 6561, bekannt aus AG Chem New Compound, Review Vol. 17 (1999), Seite 27 und EP A-507171), d. h. 2-[[[(4,5-dihydro-4-methyl-5-oxo-3-propoxy-1 H-1,2,4-triazol-1-yl)-carbonyl]-amino]-sulfonyl]-benzoesäuremethylester, und dessen Salze, vorzugsweise in Mengen von 10-150, insbesondere 20-120 g A.S./ha und/oder

(B2) überwiegend gegen Dikotylen wirksame Herbizide,

(B2.1) Sulfonylharnstoffe,

(B2.1.1) Tribenuron-methyl (PM, S. 1230-1232), d.h. Methyl 2-[4-methoxy-6-methyl-1,3,5-triazin-2-yl(methyl)carbamoylsulfamoyl]benzoat, und/oder
(B2.1.2) Thifehsulfuron und dessen Ester, vorzugsweise der Methylester (PM, S. 1188-1190), d.h. 3-[[[(4-Methoxy-6-methyl-1,3,5-triazin-2-yl)-amino]-carbonyl]-amino]sulfonyl]-2-thiophencarbonsäure bzw. -methylester und dessen Salze, und/oder
(B2.1.3) Prosulfuron (PM, S. 1041-1043), d.h. 1-(4-Methoxy-6-methyl-1,3,5-triazin-2-yl)-3-[2-(3,3,3-trifluorpropyl)-phenylsulfonyl]-hamstoff und dessen Salze, und/oder
(B2.1.4) Amidosulfuron (PM, S. 37-38), d.h. 1-(4,6-Dimethoxy-pyrimidin-2-yl)-3-mesyl(methyl)sulfarnoyl-harnstoff und dessen Salze, und/oder
(B2.1.5) Chlorimuron und dessen Ester wie Chlorimuron-ethyl (PM, S. 217-218) (= 2-(4-Chlor-2-methoxypyrimidin-2-ylcarbamoylsulfamoyl)-benzoesäure bzw. deren Ester wie der Ethylester) und/oder
(B2.1.6) Halosulfuron und dessen Ester, wie der Methylester (PM, S. 657-659), d.h. 3-Chlor-5-(4,6-dimethoxypyrimidin-2-ylcarbamoylsulfamoyl)-1-methylpyrazol-carbonsäuremethylester, auch in dessen Salzform, und/oder
(B2.1.7) LAB271272, (= Tritosulfuron, CAS Reg. Nr. 142469-14-5; siehe AG Chem New Compound Review, Vol. 17, 1999, S. 24, herausgegeben von AGRANOVA)), d.h. N-[[[4-Methoxy-6-(trifluormethyl)-1,3,5-triazin-2-yl)-amino]-carbonyl]-2-(trifluormethyl)benzolsulfonamid), vorzugsweise in einer Menge von 2-250, insbesondere 10-150 g AS/ha, und/oder
(B2.1.8) Bensulfuron-methyl (PM, S. 104-105), d. h. 2-[[[[[(4,6-Dimethoxy-2-pyrimidinyl)-amino]-carbonyl]-amino]-sulfonyl]-methyl]-benzoesäure-methylester, und/oder
(B2.1.9) Ethoxysulfuron (PM, S. 488-489), d. h. 1-(4,6-Dimethoxypyrimidin-2-yl)-3-(2-ethoxyphenoxysulfonyl)-hamstoff, und/oder
(B2.1.10) Cinosulfuron (PM, S. 248-250), d. h. 1-(4,6-Dimethoxy-1,3,5-triazin-2-yl)-3-[2-(2-methoxyethoxy)-phenylsulfonyl)-harnstoff, und/oder
(B2.1.11) Pyrazosulfuron und dessen Ester wie Pyrazosulfuron-ethyl (PM, S. 1052-1054) (= 5-(4,6-Dimethoxypyrimidin-2-ylcarbamoytsulfamoyl)-1-methyl-pyrazol-4-carbonsäure bzw. deren Salze und Ester wie der Ethylester), und/oder
(B2.1.12) Imazosulfuron (PM, S. 703-704), d. h. 1-(2-Chlorimidazo[1,2-a]pyridin-3-ylsulfonyl)-3-(4,6-dimethoxypyrimidin-2-yl)-harnstoff, und/oder
(B2.1.13) Cyclosulfamuron (PM, S. 288-289), d. h. 1-(2-(Cyclopropylcarbonyl)-phenylsulfamoyl]-3-(4,6-dimethoxypyrimidin-2-yl)-harnstoff, und/oder

(B2.2) Wuchsstoffe (vom Auxintyp),

(B2.2.1) MCPA (PM, S. 767-769), d.h. (4-Chlor-2-methyl-phenoxy)-essigsäure und deren Salze und Ester, und/oder
(B2.2.2) 2,4-D (PM, S. 323-327), d.h. 2,4-Dichlorphenoxyessigsäure und deren Salze und Ester, und/oder
(B2.2.3) Dichlorprop (PM, S. 368-370), d.h. (RS)-2-(2,4-dichlorphenoxy)propionsäure, und/oder
(B2.2.4) Mecoprop-P (PM, S. 776-779), d.h. (RS) oder (R)-2-(4-chlor-o-tolyloxy)propionsäure, und/oder
(B2.2.5) Fluoroxypyr (PM S. 597-600), d.h. 4-Amino-3,5-dichlor-6-fluor-2-pyridyloxyessigsäure, und/oder
(B2.2.6) Dicamba (PM, S. 356-359), d.h. 3,6-Dichlor-o-anisolsäure, und/oder
(B2.2.7) Clopyralid (PM, S. 260-263), d.h. 3,6-Dichlor-2-pyridincarbonsäure, und/oder
(B2.2.8) Picloram (PM, S. 977-979), d.h. 4-Amino-3,5,6-trichlorpicolinsäure, und/oder

(B2.3) Hydroxybenzonitrile,

(B2.3.1) Bromoxynil (PM S. 149-151), d.h. 3,5-Dibrom-4-hydroxybenzonitril, und/oder
(B2.3.2) Ioxynil (PM, S. 718-721), d.h. 4-Hydroxy-3,5-diiodbenzonitril, und/oder

(B2.4) Diphenylether,

(B2.4.1) Fluoroglycofen-ethyl (PM, S. 580-582), d.h. O-[5-(2-Chlor-α,α,α-trifluor-p-tolyloxy)-2-nitrobenzoyl]glykolsäure, und/oder
(B2.4.2) Aclonifen (PM, S. 14-16), d. h. 2-Chlor-6-nitro-3-phenoxyanilin, vorzugsweise in einer Menge von 10-5000, insbesondere 20-3000 g AS/ha, und/oder
(B2.4.3) Acifluorfen (PM, S. 12-14) und dessen Salze wie das Natriumsalz (= 5-[2-Chlor-4-(trifluormethyl)-phenoxy]-2-nitrobenzoesäure bzw. deren Salze wie das Na-Salz), und/oder

(B2.5) [1,2,4]Triazolopyrimidinsulfonamide,

(B2.5.1) Cloransulam und vorzugsweise der Methylester (PM, S. 165), d.h. 3-Chlor-2-(5-ethoxy-7-fluor-[1,2,4]triazolo-[1,5-c]pyrimidin-2-ylsulfonamido)benzoesäure oder -methylester, und/oder
(B2.5.2) Florasulam, d.h. N-(2,6-Difluorphenyl)-8-fluor-5-methoxy-1,2,4-triazolo[1,5C]-pyrimidin-2-sulfonamid (DE-570, vgl. Zeitschrift Pfl. Krankh. PflSchutz, Sonderblatt XVI, 527-534 81998), und/oder

(B2.6) Verbindungen mit unterschiedlichen Strukturen,

(B2.6.1) Bentazone (PM, S. 109-111), d.h. 3-Isopropyl-1H-2,1,3-benzothiadiazin-4(3H)-on-2,2-dioxid, und/oder
(B2.6.2) Bifenox (PM, S. 116-117), d.h. Methyl 5-(2,4-dichlorphenoxy)-2-nitrobenzoat, und/oder
(B2.6.3) Carfentrazone-ethyl (PM, S. 191-193), d.h. Ethyl (RS)-2-Chlor-3-[2-Chlor-4-(4-difluormethyl-4,5-dihydro-3-methyl-5-oxo-1H-1,2,4-triazol-1-yl)-4-fluorphenyl]propionat, und/oder
(B2.6.4) Pyraflufen (PM S. 1048-1049). d.h. 2-Chlor-5-(4-chlor-5-difluormethoxy-1-methylpyrazol-3-yl)-4-fluorphenoxyessigsäure, und/oder
(B2.6.5) Pyridate (PM, S. 1064-1066), d. h. Thiokohlensäure-O-(6-Chlor-3-phenyl-pyridazin-4-yl)-S-(octyl)-diester, und/oder
(B2.6.6) Linuron (PM, S. 751-753), d. h. 3-(3,4-Dichlorphenyl)-1-methoxy-1-methyl-harnstoff, und/oder
(B2.6.7) Diflufenzopyr (BASF 654 00 H) (PM, S. 81-82), d.h. 2-{1-[4-(3,5-Difluorphenyl)semicarbazon]-ethyl}nicotinsäure, und dessen Salze,
(B2.6.8) Cinidon-ethyl (BAS 615005, vgl. AG Chem New Compound Review Vol. 17 (1999), Seite 26), vorzugsweise in einer Menge von 5-500, insbesondere 10-400 g AS/ha, und/oder
(B2.6.9) Clopyralid und dessen Salze und Ester (PM, S. 260-263), vorzugsweise in einer Menge von 10-2000, insbesondere 20-1000 g AS/ha,
(B2.6.10) Metribuzin (PM, S. 840-841), vorzugsweise in einer Menge von 50-3000, insbesondere 60-2000 g AS/ha, und/oder
(B2.6.11) Picolinafen, d. h. N-4-Fluorphenyl-6-(3-trifluormethylphenoxy)-pyridin-2-carbonsäureamid (AC 900001, vgl. AG Chem New Compound Review Vol. 17 (1999), Seite 35), vorzugsweise in einer Menge von 1-90, insbesondere 2-80 g AS/ha, und/oder
(B2.6.12) Clomazone (PM, S. 256-257), vorzugsweise in einer Menge von 50-5000, insbesondere 100-3000

g AS/ha, und/oder
(B2.6.13) Bromobutide (PM, S. 144-145), d. h. 2-Brom-3,3-dimethyl-N-(1-methyl-1-phenylethyl)-butyramid, und/oder
(B2.6.14) Benfuresate (PM, S. 98-99), d. h. Ethansulfonsäure-2,3-Dihydro--3,3-dimethyl-benzofuran-5-ylester, und/oder
(B2.6.15) Dithiopyr (PM, S. 442-443) (= 2-Difluormethyl-4-isobutyl-6-trifluormethylpyridin-3,5-di-(thiocarbonsäure) S,S'-dimethylester), und/oder
(B2.6.16) Triclopyr, d. h. 3,5,6-Trichlor-2-pyridyloxyessigsäure, und dessen Salze und Ester, und/oder

(B3) gegen monokotyle und dikotyle Schadpflanzen wirksame Herbizide,

(B3.1) Sulfonylharnstoffe,

(B3.1.1) Metsulfuron (PM S. 842-844), d.h. 2-[(4-Methoxy-6-methyl-1,3,5-triazin-2-yl)-carbamoyl-sulfamoyl]benzoesäure, und dessen Ester wie vorzugsweise der Methylester Methsulfuron-methyl, und/oder
(B3.1.2) Triasulfuron (PM S.1222-1224), d.h. 1-[2-(2-Chlorethoxy)phenylsulfonyl]-3-(4-methoxy-6-methyl-1,3,5-triazin-2-yl)harnstoff, und/oder
(B3.1.3) Chlorsulfuron (PM S. 239-240), d.h. 1-(2-Chlor-sulfonyl)-3-(4-methoxy-6-methyl-1,3,5-triazin-2-yl)harnstoff, und/oder
(B3.1.4) Iodosulfuron (proposed common name) und vorzugsweise der Methylester (vgl. WO 96/41537), d.h. 4-Iod-2-(4-Methoxy-6-methyl-1,3,5-triazin-2-ytcarbamoylsulfamoyl)-benzoesäure bzw. -methylester, bekannt aus WO-A-92/13845, und/oder
(B3.1.5) AEF060, d.h. 4-Methylsulfonylamino-2-(4,6-dimethoxy-pyrimidin-2-ylcarbamoylsulfamoyl)-benzoesäure-methylester, bekannt aus WO-A-95/10507, und/oder
(B3.1.6) Sulfosulfuron (PM S. 1130-1131), d.h. 1-(4,6-Dimethoxypyrimidin-2-yl)-3-(2-ethylsulfonylimidazol[1,2-a]pyridin-3-yl)sulfonylharnstoff, und/oder
(B3.1.7) Flupyrsulfuron (PM S. 586-588), d.h. 2-(4,6-Dimethoxypyrimidin-2-yl-carbamoylsulfamoyl)-6-trifluormethylnicotrinsäure, vorzugsweise das Natriumsalz des Methylesters, und/oder
(B3.1.8) Nicosulfuron (PM, S. 877-879), d. h. 2-(4,6-Dimethoxypyrimidin-2-yl)-3-(3-dimethylcarbamoyl-2-pyridylsulfonyl)-hamstoff, und/oder
(B3.1.9) Rimsulfuron (PM, S. 1095-1097), d. h. 1-(4,6-Dimethoxypyrimidin-2-yl)-3-(3-ethylsulfonyl-2-pyridylsulfonyl)-hamstoff, und/oder
(B3.1.10) Primisulfuron und Ester wie der Methylester (PM, S. 997-999), d.h. 2-[4,6-Bis(difluormethoxy)-pyrimidin-2-ylcarbamoylsulfamoyl]-benzoesäure bzw. -methylester, und/oder
(B3.1.11) AEF360, d.h. 4-Formylamino-2-[[(4,6-dimethoxy-pyrimidin-2-yl)-carbamoyl]-sulfamoyl]-N,N-dimethylbenzamid, bekannt aus WO-A-95/29899 und/oder

(B3.2) Triazinderivate,

(B3.2.1) Cyanazine (PM, S. 280-283), d. h. 2-(4-Chlor-6-ethylamino-1,3,5-triazin-2-ylamino)-2-methyl-propionsäurenitril, und/oder
(B3.2.2) Atrazin (PM, S. 55-57), d. h. N-Ethyl-N'-isopropyl-6-chlor-2,4-diamino-1,3,5-triazin, und/oder
(B3.2.3) Terbuthylazin (PM, S. 1168-1170), d. h. N-Ethyl-N'-tert.-butyl-6-chlor-2,4-diamino-1,3,5-triazin, und/oder
(B3.2.4) Terbutryn (PM, S. 1170-1172), d. h. N-(1,1-Dimethylethyl)-N'-ethyl-6-methylthio-2,4-diamino-1,3,5-triazin, und/oder

(B3.3) Chloracetamide,

(B3.3.1) Acetochlor (PM, S. 10-12), d. h. 2-Chlor-N-(ethoxymethyl)-N-(2-ethyl-6-methylphenyl)-acetamid, und/oder
(B3.3.2) Metolachlor (PM, S. 833-834), d. h. 2-Chlor-N-(2-ethyl-6-methylphenyl)-N-(2-methoxy-1-methylethyl)-acetamid, und/oder
(B3.3.3) Alachlor (PM, S. 23-24), d. h. 2-Chlor-N-(2,6-diethylphenyl)-N-(methoxymethyl)-acetamid, und/oder

(B3.4) Verbindungen mit unterschiedlichen Strukturen,

(B3.4.1) Clomazone (PM S. 256-257), d.h. 2-(2-Chlorbenzyl)-4,4-dimethyl-1,2-oxalzolidin-3-on, und/oder
(B3.4.2) Diflufenican (PM S. 397-399), d.h. 2', 4'-Difluor-2-(α,α,α-trifluor-m-tolyloxy)nicotrinanilid, und/oder
(B3.4.3) Flumetsulam (PM S. 573-574), d.h. 2',6'-Difluor-5-methyl[1,2,4]triazolo[1,5-a]-pyrimidin-2-sulfoanilid, und/oder
(B3.4.4) Flurtamone (PM s. 602-603), d.h. (RS)-5-Methylamino-2-phenyl-4-(α,α,α,-trifluor-m-tolyl)furan-3(2H)-on, und/oder
(B3.4.5) Isoxaflutole (PM S. 737-739), d.h. 5-Cyclopropyl-1,2-oxazol-4-yl α,α,α-trifluor-2-mesyl-p-tolyl keton, und/oder
(B3.4.6) Metosulam (PM S. 836-838), d.h. 2',6'-Dichlor-5,7-dimethoxy-3'-methyl[1,2,4]triazol[1,5-a]pyrimidin-2-sulfoanilid, und/oder
(B3.4.7) Metribuzin (PM S. 840-841), d.h. 4-Amino-6-tert.-butyl-4,5-dihydro-3-methylthio-1,2,4-triazin-5-on, und/oder
(B3.4.8) Paraquat (Salze), z.B. das Dichlorid (PM, S. 923-925), d.h. 1,1'-(dimethyl)-4,4'-Bipyridiniumdichlorid oder andere Salze, und/oder
(B3.4.9) Benoxacor (PM, S. 102-103), d. h. 4-Dichloracetyl-3,4-dihydro-3-methyl-2H-1,4-benzoxazin, und/oder
(B3.4.10) Sulcotrione (PM, S. 1124-1125), d. h. 2-(2-Chlor-4-mesylbenzoyl)-cyclohexan-1,3-dion, und/oder
(B3.4.11) Mesotrione, d. h. 2,(4-Mesyl-2-nitrobenzoyl)-cyclohexan-1,3-dion (ZA1296, vgl. Weed Science Society of America (WSSA) in WSSA Abstracts 1999, Bd. 39, Seite 65-66, Ziffern 130-132), und/oder
(B3.4.12) Quinclorac (PM, S. 1079-1080), d. h. 3,7-Dichlorchinolin-8-carbonsäure, und/oder
(B3.4.13) Propanil (PM, S. 1017-1019), (= N-(3,4-dichlorphenyl)-propanamid), und/oder
(B3.4.14) Bispyribac, Bispyribac-Na (KIH 2023)(PM, S. 129-131), d. h. 2,6-Bis-(4,6-dimethoxy-2-pyrimidin-2-yloxy)-benzoesäurenatriumsalz, und/oder
(B3.4.15) LGC 40863, d. h. Pyribenzoxim (= 2,6-Bis-(4,6-dimethoxy-pyridin-2-yl)-1-[N-(diphenylmethyl)-iminooxycarbonyl]-benzol, vorgestellt auf der Brighton Crop Protection Conference Weeds 1997), und/oder
(B3.4.16) Oxadiargyl (PM, S. 904-905), d. h. 5-tert.-Butyl-3-[2,4-dichlor-5-(prop-2-inyloxy)-phenyl]-1,3,4-oxadiazol-2(3H)-on, und/oder
(B3.4.17) Norflurazon (PM, S. 886-888), d.h. 4-Chlor-5-(methylamino)-2-[3-trifluormethyl)-phenyl]-3-(2H)-pyridazinon, und/oder
(B3.4.18) Fluometuron (PM, S. 578-579), d.h. N,N-Dimethyl-N'-[3-trifluormethyl)-phenyl]harnstoff; und/oder
(B3.4.19) Methylarsonsäure der Formel $CH_3AS(=O)(OH)_2$ und deren Salze wie DSMA = Dinatriumsalz oder MSMA = Mononatriumsalz von Methylarsonsäure (PM, S. 821 - 823), und/oder
(B3.4.20) Prometryn (Promethyrin) (PM, S. 1011-1013), d. h. N,N'-Bis(1-methylethyl)-6-methylthio)-2,4-diamino-1,3,5-triazin, und/oder
(B3.4.21) Trifluralin (PM, S. 1248-1250), d.h. 2,6-Dinitro-N,N-dipropyl-4-trifluormethyl-anilin, und/oder

(B4) gegen monokotyle und dikotyle Schadpflanzen wirksame Herbizide, die speziell in toleranten Kulturen oder auf Nichtkulturland eingesetzt werden können,

(B4.1) Verbindungen vom Typ Glufosinate oder Phosphinothricin (= L-Glufosinate) und dessen Salzen und Derivate,

(B4.1.1) Glufosinate im engeren Sinne (PM, S. 643-645), d. h. D,L-2-Amino-4-[hydroxy(methyl)phosphinyl]-butansäure,
(B4.1.2) Glufosinate-monoammoniumsalz (PM, S. 643-645),
(B4.1.3) L-Glufosinate, L- oder (2S)-2-Amino-4-[hydroxy(methyl)phosphinyl]-butansäure (Phosphinothricin)(PM, S. 643-645),
(B4.1.4) L-Glufosinate-monoammoniumsalz (PM, S. 643-645),
(B4.1.5) Bilanafos (oder Bialaphos) (PM, S. 120-121), d.h. L-2-Amino-4-[hydroxy(methyl)phosphinyl]-butanoyl-L-alanyl-L-alanin, insbesondere dessen Natriumsalz.

(B4.2) Verbindungen vom Typ des Phosphonomethylglycins und dessen Salzen,

(B4.2.1) Glyphosate (PM, S. 646-649), d. h. N-(Phosphonomethyl)-glycin, und/oder
(B4.2.2) Glyphosate-monoisopropylammoniumsalz (PM, S. 646-649), und/oder
(B4.2.3) Glyphosate-natriumsalz (PM, S. 646-649), und/oder
(B4.2.4) Sulfosate, d. h. N-(Phosphonomethyl)-glycin-trimesiumsalz = N-(Phosphonomethyl)-glycin-trimethylsulfoxoniumsalz (PM, S. 646-649), und/oder

(B4.3) Imidazolinone,

(B4.3.1) Imazapyr (PM, S. 697-699) und dessen Salze und Ester, und/oder
(B4.3.2) Imazethapyr (PM, S. 701-703)und dessen Salze und Ester, und/oder
(B4.3.3) Imazamethabenz (PM, S. 694-696) und dessen Salze und Ester, und/oder
(B4.3.4) Imazamox (PM, S. 696-697)und dessen Salze und Ester, und/oder
(B4.3.5) Imazaquin (PM, S. 699-701)und dessen Salze und Ester, z. B. das Ammoniumsalz, und/oder
(B4.3.6) Imazapic (AC 263,222) (PM, S. 5-6) und dessen Salze und Ester, z. B. das Ammoniumsalz, und/oder

(B4.4) Verbindungen unterschiedlichen Stukturtyps,

(B4.4.1) WC9717 oder CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (bekannt aus US-A-5183492)
(B4.4.2) Azafenidin (PM, S. 60,61), d. h. 2-(2-Dichlor-5-prop-2-inyloxyphenyl)-5,6,7,8-tetrahydro-1,2,4-triazolo[4,3-a]pyridin-3(2H)-on, und/oder
(B4.4.3) Diuron (PM, S. 443-444), d. h. 3-(3,4-Dichlorphenyl)-1,1-dimethylharnstoff, und/oder
(B4.4.4) Oxyfluorfen (PM, S. 919-920), d. h. 2-Chlor-1-(3-ethoxy-4-nitrophenoxy)-4-(trifluormethyl)-benzol.

Wenn die Kurzform des "common name" verwendet wird, so sind damit alle gängigen Derivate, wie die Ester und Salze umfaßt, insbesondere die handesüblichen Form bzw. Formen. Bei Sulfonylharnstoffen sind mit Salzen auch die umfaßt, die durch Austausch eines Wasserstoffatoms an der Sulfonamidgruppe durch ein Kation entstehen.

Bevorzugt sind Herbizid-Kombinationen aus einer oder mehreren Verbindungen (A) mit einer oder mehreren Verbindungen der Gruppe (B1) oder (B2) oder (B3) oder (B4). Weiter bevorzugt sind Kombinationen von Verbindungen (A) mit einer oder mehreren Verbindungen (B) nach dem Schema:

(A) + (B1) + (B2), (A) + (B1) + (B3), (A) + (B1) + (B4) oder (A) + (B2) + (B3), (A) + (B2) + (B4), (A) + (B3) + (B4) oder (A) + (B1) + (B2) + (B3), (A) + (B1) + (B2) + (B4), (A) + (B4) + (B2) + (B3), (A) + (B1) + (B3) + (B4) oder (A) + (B1) + (B2) + (B3) + (B4).

Dabei sind auch solche Kombinationen erfindungsgemäß, denen noch ein oder mehrere weitere Wirkstoffe anderer Struktur [Wirkstoffe (C)] zugesetzt werden wie
(A) + (B1) + (C), (A) + (B2) + (C) oder (A) + (B3) + (C), (A) + (B4) + (C), (A) + (B1) + (B2) + (C), (A) + (B1) + (B3) + (C), (A) + (B1) + (B4) + (C) oder (A) + (B2) + (B3) + (C), (A) + (B2) + (B4) + (C), (A) + (B3) + (B4) + (C) oder (A) + (B1) + (B2) + (B3) + (C), (A) + (B1) + (B2) + (B4) + (C), (A) + (B4) + (B2) + (B3) + (C), (A) + (B1) + (B3) + (B4) + (C) oder (A) + (B1) + (B2) + (B3) + (B4) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind.

Die Aufwandmenge der Herbizide A kann breit variiert werden, die optimale Menge hängt vom jeweiligen Herbizid, dem Schadpflanzenspektrum und den Kulturpflanzen ab. In der Regel liegt die Aufwandmenge im Bereich von 10 bis 1200, vorzugsweise 15 bis 800, ganz bevorzugt bei 10 bis 150 g Wirkstoff (A. S.)/ha.

Die Aufwandmengen der Herbizide (B) können von Herbizid zu Herbizid stark variieren. Als Richtgröße für bevorzugte Aufwandmengen können folgende Angaben gelten, wobei in den erfindungsgemäßen Kombinationen auch Mengen unterhalb der niedrigsten Menge sinnvoll sein können (A.S. = Aktive Substanz).

Verbindungen der Gruppen (B1.1) und (B1.2): 0,5-5000, insbesondere 50 - 5000 g A.S./ha vorwiegend gegen Ungräser im Nachauflauf - aber auch Vorauflaufverfahren;
Verbindungen der Gruppen (B1.3) und (B1.4): 0,5 bis 5000, insbesondere 10 -1500 g A.S./ha gegen überwiegend Ungräser im Nachauflauf gegebenenfalls in Verbindung mit Safenern;
Verbindungen der Gruppen (B1.5): 10 bis 5000, insbesondere 20 bis 4000 g A.S./ha gegen überwiegend Ungräser im Nachauflauf- und Vorauflaufverfahren;
Verbindungen der Gruppen (B1.6): 0,5 bis 2000, insbesondere 10 bis 1500 g A.S./ha gegen überwiegend Ungräser im Nachauflauf- und Vorauflaufverfahren;
Verbindungen der Gruppe (B2.1): 0,5 bis 500, insbesondere 2,5 - 80 g A.S./ha vorwiegend gegen Unkräuter im Nachauflaufverfahren;
Verbindungen der Gruppe (B2.2.): 20 bis 5000, insbesondere 50 -2000g A.S./ha vorwiegend gegen Unkräuter und Cyperaceen im Nachauflaufverfahren;
Verbindungen der Gruppe (B2.3): 1-3000, insbesondere 5 - 2000 g A.S./ha vorwiegend gegen Unkräuter im Nachauflaufverfahren;

Verbindungen der Gruppe (B2.4): 1 bis 3000, insbesondere 2 bis 1500 g A.S./ha vorwiegend gegen Unkräuter im Nachauflaufverfahren;
Verbindungen der Gruppe (B2.5): 1 bis 1000, insbesondere 2 bis 200 g A.S./ha gegen Unkräuter im Vor- und Nachauflaufverfahren;
Verbindungen der Gruppe (B2.6): 0,5 bis 5000, insbesondere 10 bis 1500 g A.S./ha gegen Unkräuter im Vor- und/oder Nachauflaufverfahren;
Verbindungen der Gruppe (B3.1): 0,5 bis 2000, insbesondere von 1 bis 500 g A.S/ha vorwiegend gegen Unkräuter und Ungräser im Nachauflauf-, aber auch im Vorauflaufverfahren;
Verbindungen der Gruppe (B3.2): 10 bis 5000, insbesondere von 100 bis 4000, ganz besonders 300-3000 g A.Slha gegen Unkräuter und Ungräser im Nachauflauf- und/oder Vorauflaufverfahren;
Verbindungen der Gruppe (B3.3): 10 bis 5000, insbesondere von 100 bis 4000, ganz besonders 200-3000 g A.S/ha gegen Unkräuter und Ungräser im Nachauflauf- und/oder Vorauflaufverfahren;
Verbindungen der Gruppe (B3.4): 0,5 bis 5000, insbesondere von 10 bis 1500 g A. S/ha gegen Unkräuter und Ungräser im Nachauflauf- und/oder Vorauflaufverfahren;
Verbindungen der Gruppe (B4.1): 10 bis 1000, insbesondere von 20 bis 600;
Verbindungen der Gruppe (B4.2): 20 bis 1000, insbesondere von 20 bis 800;
Verbindungen der Gruppe (B4.3): 1 bis 1000, insbesondere von 10 bis 200;
Verbindungen der Gruppe (B4.4): 10 bis 8000, insbesondere von 10 bis 6000.

Bereiche für geeignete Mengenverhältnisse der Verbindungen (A) und (B) ergeben sich aus den genannten Aufwandmengen für die Einzelstoffe. In den erfindungsgemäßen Kombinationen können die Aufwandmengen in der Regel reduziert werden.

Bevorzugte Mischungsverhältnisse (bezogen auf das Gewicht) für die Kombinationen sind im folgenden aufgeführt:

(A):(B1) im Bereich von 2000:1 bis 1:500, vorzugsweise 500:1 bis 1:150, insbesondere 75:1 bis 1:80;
(A):(B2) im Bereich von 1600:1 bis 1:500, vorzugsweise 600:1 bis 1:150, insbesondere 40:1 bis 1:60;
(A):(B3) im Bereich von 9000:1 bis 1:600, vorzugsweise 700:1 bis 1:250, insbesondere 100:1 bis 1:150;
(A):(B4) im Bereich von 120:1 bis 1:400, vorzugsweise 40:1 bis 1:250, insbesondere 20:1 bis 1:150.

Von besonderem Interesse ist die Anwendung von herbiziden Mitteln mit einem synergistisch wirksamen Gehalt an einer oder mehreren der folgenden Kombinationen von zwei Verbindungen (A) + (B):

(A1)+(B1.1.1), (A1)+(B1.1.2.),
(A1)+(B1.2.1), (A1)+(B1.2.2.), (A1)+(B1.2.3),
(A1)+(B1.3.1), (A1)+(B1.3.2.), (A1)+(B1.3.3), (A1)+(B1.3.4), (A1)+(B1.3.5),
(A1)+(B1.3.6), (A1)+(B1.3.7), (A1)+(B1.3.8)
(A1)+(B1.4.1). (A1)+(B1.4.2), (A1)+(B1.4.3), (A1)+(B1.4.4), (A1)+(B1.4.5);
(A1)+(B1.5.1), (A1)+(B1.5.2), (A1)+(B 1.5.3), (A1)+(B1.5.4);
(A1)+(B1.6.1), (A1)+(B1.6.2), (A1)+(B1.6.3), (A1)+(B1.6.4), (A1)+(B1.6.5),
(A1)+(B1.6.6), (A1)+(B1.6.7), (A1)+(B1.6.8), (A1)+(B1.6.9), (A1)+(B1.6.10),
(A1)+(B1.6.11), (A1)+(B1.6.12), (A1)+(B1.6.13), (A1)+(B1.6.14), (A1)+(B1.6.15),
(A1)+(B1.6.16), (A1)+(B1.6.17), (A1)+(B1.6.18), (A1)+(B1.6.19);
(A1)+(B2.1.1), (A1)+(B2.1.2), (A1)+(B2.1.3), (A1)+(B2.1.4), (A1)+(B2.1.6).
(A1)+(B2.1.7), (A1)+(B2.1.8), (A1)+(B2.1.9), (A1)+(B2.1.10), (A1)+(B2.1.11),
(A1)+(B2.1.12), (A1)+(B2.1.13), (A1)+(B2.1.13);
(A1)+(B2.2.1), (A1)+(B2.2.2), (A1)+(B2.2.3), (A1)+(B2.2.4), (A1)+(B2.2.5),
(A1)+(B2.2.6), (A1)+(B2.2.7), (A1)+(B2.2.8),
(A1)+(B2.3.1), (A1)+(B2.3.2);
(A1)+(B2.4.1); (A1)+(B2.4.2.), (A1)+(B2.4.3);
(A1)+(B2.5.1), (A1)+(B2.5.2);
(A1)+(B2.6.1), (A1)+(B2.6.2), (A1)+(B2.6.3), (A1)+(B2.6.4), (A1)+(B2.6.5),
(A1)+(B2.6.6), (A1)+(B2.6.7), (A1)+(B2.6.8), (A1)+(B2.6.9), (A1)+(B2.6.10),
(A1)+(B2.6.11), (A1)+(B2.6.12), (A1)+(B2.6.13), (A1)+(B2.6.14), (A1)+(B2.6.15),
(A1)+(B2.6.16);
(A1)+(B3.1.1), (A1)+(B3.1.2), (A1)+(B3.1.3), (A1)+(B3.1.4), (A1)+(B3.1.5),
(A1)+(B3.1.6), (A1)+(B3.1.7), (A1)+(B3.1.8), (A1)+(B3.1.9), (A1)+(B3.1.10),
(A1)+(B3.1.11);
(A1)+(B3.2.1), (A1)+(B3.2.2), (A1)+(B3.2.3), (A1)+(B3.2.4);

(A1)+(B3.3.1), (A1)+(B3.3.2), (A1)+(B3.3.3);
(A1)+(B3.4.1), (A1)+(B3.4.2), (A1)+(B3.4.3), (A1)+(B3.4.4), (A1)+(B3.4.5), (A1)+(B3.4.6), (A1)+(B3.4.7), (A1)+(B3.4.8), (A1)+(B3.4.9), (A1)+(B3.4.10), (A1)+(B3.4.11), (A1)+(B3.4.12), (A1)+(B3.4.13), (A1)+(B3.4.14), (A1)+(B3.4.15), (A1)+(B3.4.16), (A1)+(B3.4.17), (A1)+(B3.4.18);(A1)+(B3.4.19), (A1)+(B3.4.20), (A1)+(B3.4.21),
(A1)+(B4.1.1), (A1)+(B4.1.2),(A1)+(B4.1.3), (A1)+(B4.1.4); (A1)+(B4.1.5),
(A1)+(B4.2.1), (A1)+(B4.1.2), (A1)+(B4.2.3), (A1)+(B4.2.4),
(A1)+(B4.3.1), (A1)+(B4.3.2), (A1)+(B4.3.3), (A1)+(B4.3.4), (A1)+(B4.3.5), (A1)+(B4.3.6);
(A1)+(B4.4.1). (A1)+(B4.4.2), (A1)+(B4.4.3), (A1)+(B4.4.4);

(A2)+(B1.1.1), (A2)+(B1.1.2.),
(A2)+(B1.2.1), (A2)+(B1.2.2.), (A2)+(B1.2.3),
(A2)+(B1.3.1), (A2)+(B1.3.2.), (A2)+(B1.3.3), (A2)+(B1.3.4), (A2)+(B1.3.5), (A2)+(B1.3.6), (A2)+(B1.3.7), (A2)+(B1.3.8)
(A2)+(B1.4.1), (A2)+(B1.4.2), (A2)+(B1.4.3), (A2)+(B1.4.4), (A2)+(B1.4.5);
(A2)+(B1.5.1), (A2)+(B1.5.2), (A2)+(B1.5.3), (A2)+(B1.5.4);
(A2)+(B1.6.1), (A2)+(B1.6.2), (A2)+(B1.6.3), (A2)+(B1.6.4), (A2)+(B1.6.5), (A2)+(B1.6.6), (A2)+(B1.6.7), (A2)+(B1.6.8), (A2)+(B1.6.9), (A2)+(B1.6.10), (A2)+(B1.6.11), (A2)+(B1.6.12), (A2)+(B1.6.13), (A2)+(B1.6.14), (A2)+(B1.6.15), (A2)+(B1.6.16), (A2)+(B1.6.17), (A2)+(B1.6.18), (A2)+(B1.6.19);
(A2)+(B2.1.1), (A2)+(B2.1.2), (A2)+(B2.1.3), (A2)+(B2.1.4), (A2)+(B2.1.6), (A2)+(B2.1.7), (A2)+(B2.1.8), (A2)+(82.1.9), (A2)+(82.1.10). (A2)+(B2. 1.11), (A2)+(B2.1.12), (A2)+(B2.1.13), (A2)+(B2.1.13);
(A2)+(B2.2.1), (A2)+(B2.2.2). (A2)+(B2.2.3), (A2)+(B2.2.4), (A2)+(B2.2.5), (A2)+(B2.2.6), (A2)+(B2.2.7), (A2)+(B2.2.8),
(A2)+(B2.3.1), (A2)+(B2.3.2);
(A2)+(B2.4.1), (A2)+(B2.4.2.), (A2)+(B2.4.3);
(A2)+(B2.5.1), (A2)+(B2.5.2);
(A2)+(B2.6.1), (A2)+(B2.6.2), (A2)+(B2.6.3), (A2)+(B2.6.4), (A2)+(B2.6.5), (A2)+(B2.6.6), (A2)+(B2.6.7), (A2)+(B2.6.8), (A2)+(B2.6.9), (A2)+(B2.6.10), (A2)+(B2.6.11), (A2)+(B2.6.12), (A2)+(B2.6.13), (A2)+(B2.6.14), (A2)+(B2.6.15), (A2)+(B2.6.16);
(A2)+(B3.1.1), (A2)+(B3.1.2), (A2)+(B3.1.3), (A2)+(B3.1.4), (A2)+(B3.1.5), (A2)+(B3.1.6), (A2)+(B3.1.7), (A2)+(B3.1.8), (A2)+(B3.1.9), (A2)+(B3.1.10), (A2)+(B3.1.11);
(A2)+(B3.2.1), (A2)+(B3.2.2), (A2)+(B3.2.3), (A2)+(B3.2.4);
(A2)+(B3.3.1), (A2)+(B3.3.2), (A2)+(B3.3.3);
(A2)+(B3.4.1), (A2)+(B3.4.2), (A2)+(B3.4.3), (A2)+(B3.4.4), (A2)+(B3.4.5), (A2)+(B3.4.6), (A2)+(B3.4.7), (A2)+(B3.4.8), (A2)+(B3.4.9), (A2)+(B3.4.10), (A2)+(B3.4.11), (A2)+(B3.4.12), (A2)+(B3.4.13), (A2)+(B3.4.14), (A2)+(B3.4.15), (A2)+(B3.4.16), (A2)+(B3.4.17), (A2)+(B3.4.18);(A2)+(B3.4.19), (A2)+(B3.4.20), (A2)+(B3.4.21);
(A2)+(B4.1.1), (A2)+(B4.1.2),(A2)+(B4.1.3), (A2)+(B4.1.4); (A2)+(B4.1.5),
(A2)+(B4.2.1), (A2)+(B4.1.2), (A2)+(B4.2.3), (A2)+(B4.2.4),
(A2)+(B4.3.1), (A2)+(B4.3.2), (A2)+(B4.3.3), (A2)+(B4.3.4), (A2)+(B4.3.5), (A2)+(B4.3.6);
(A2)+(B4.4.1), (A2)+(B4.4.2), (A2)+(B4.4.3), (A2)+(B4.4.4);

(A3)+(B1.1.1), (A3)+(B1.1.2.),
(A3)+(B1.2.1), (A3)+(B1.2.2.), (A3)+(B1.2.3),
(A3)+(B1.3.1), (A3)+(B1.3.2.), (A3)+(B1.3.3), (A3)+(B1.3.4), (A3)+(B1.3.5), (A3)+(B1.3.6), (A3)+(B1.3.7), (A3)+(B1.3.8)
(A3)+(B1.4.1), (A3)+(B1.4.2), (A3)+(B1.4.3), (A3)+(B1.4.4), (A3)+(B1.4.5);
(A3)+(B1.5.1), (A3)+(B1.5.2), (A3)+(B1.5.3), (A3)+(B1.5.4);
(A3)+(B1.6.1), (A3)+(B1.6.2), (A3)+(B1.6.3), (A3)+(B1.6.4), (A3)+(B1.6.5), (A3)+(B1.6.6), (A3)+(B1.6.7), (A3)+(B1.6.8), (A3)+(B1.6.9), (A3)+(B1.6.10),

(A3)+(B1.6.11), (A3)+(B1.6.12), (A3)+(B1.6.13), (A3)+(B1.6.14), (A3)+(B1.6.15), (A3)+(B1.6.16), (A3)+(B1.6.17), (A3)+(B1.6.18), (A3)+(B1.6.19);
(A3)+(B2.1.1), (A3)+(B2.1.2), (A3)+(B2.1.3), (A3)+(B2.1.4), (A3)+(B2.1.6), (A3)+(B2.1.7), (A3)+(B2.1.8), (A3)+(B2.1.9), (A3)+(B2.1.10), (A3)+(B2.1.11), (A3)+(B2.1.12), (A3)+(B2.1.13), (A3)+(B2.1.13);
(A3)+(B2.2.1), (A3)+(B2.2.2), (A3)+(B2.2.3), (A3)+(B2.2.4), (A3)+(B2.2.5), (A3)+(B2.2.6), (A3)+(B2.2.7), (A3)+(B2.2.8),
(A3)+(B2.3.1), (A3)+(B2.3.2);
(A3)+(B2.4.1), (A3)+(B2.4.2.), (A3)+(B2.4.3);
(A3)+(B2.5.1), (A3)+(B2.5.2);
(A3)+(B2.6.1), (A3)+(B2.6.2), (A3)+(B2.6.3), (A3)+(B2.6.4), (A3)+(B2.6.5), (A3)+(B2.6.6), (A3)+(B2.6.7), (A3)+(B2.6.8), (A3)+(B2.6.9), (A3)+(B2.6.10), (A3)+(B2.6.11), (A3)+(B2.6.12), (A3)+(B2.6.13), (A3)+(B2.6.14), (A3)+(B2.6.15), (A3)+(B2.6.16);
(A3)+(B3.1.1), (A3)+(B3.1.2), (A3)+(B3.1.3), (A3)+(B3.1.4), (A3)+(B3.1.5), (A3)+(B3.1.6), (A3)+(B3.1.7), (A3)+(B3.1.8), (A3)+(B3.1.9), (A3)+(B3.1.10), (A3)+(B3.1.11);
(A3)+(B3.2.1), (A3)+(B3.2.2), (A3)+(B3.2.3), (A3)+(B3.2.4);
(A3)+(B3.3.1), (A3)+(B3.3.2), (A3)+(B3.3.3);
(A3)+(B3.4.1), (A3)+(B3.4.2), (A3)+(B3.4.3), (A3)+(B3.4.4), (A3)+(B3.4.5), (A3)+(B3.4.6), (A3)+(B3.4.7), (A3)+(B3.4.8), (A3)+(B3.4.9), (A3)+(B3.4.10), (A3)+(B3.4.11), (A3)+(B3.4.12), (A3)+(B3.4.13), (A3)+(B3.4.14), (A3)+(B3.4.15), (A3)+(B3.4.16), (A3)+(B3.4.17), (A3)+(B3.4.18);(A3)+(B3.4.19), (A3)+(B3.4.20), (A3)+(B3.4.21);
(A3)+(B4.1.1), (A3)+(B4.1.2),(A3)+(B4-1.3), (A3)+(B4.1.4); (A3)+(B4.1.5),
(A3)+(B4.2.1), (A3)+(B4.1.2), (A3)+(B4.2.3), (A3)+(B4.2.4),
(A3)+(B4.3.1), (A3)+(B4.3.2), (A3)+(B4.3.3), (A3)+(B4.3.4), (A3)+(B4.3.5), (A3)+(B4.3.6);
(A3)+(B4.4.1), (A3)+(B4.4.2), (A3)+(B4.4.3), (A3)+(B4.4.4);

Dabei sind die obengenannten Aufwandmengenbereiche und Mengenverhältnisse jeweils bevorzugt.
In Einzelfällen kann es sinnvoll sein, eine der Verbindungen (A) mit mehreren Verbindungen (B) aus den Klassen (B1), (B2), (83) und/oder (B4) zu kombinieren. Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Bevorzugt sind erfindungsgemäße Herbizidkombinationen mit einem antidotisch wirksamen Gehalt an Safenem (C), die zur Reduzierung phytotoxischer Nebenwirkungen der eingesetzten Herbizide in wirtschaftlich bedeutenden Kulturen wie Getreide (Weizen, Gerste, Roggen, Mais, Reis, Hirse), Zuckerrübe, Zuckerrohr, Raps, Baumwolle und Soja eingesetzt werden können. Ein bevorzugter Anwendungsbereich für die Herbizidkombinationen ist Getreide. Folgende Gruppen von Verbindungen sind kommen beispielsweise als Safener für die oben erwähnten herbiziden Wirkstoffe (A) und (B) in Frage:

a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3- carbonsäureethylester (S1-1) ("Mefenpyr-diethyl", PM, S. 781-782), und verwandte Verbindungen, wie sie in der WO 91/07874 beschrieben sind,
b) Derivate der Dichlorphenylpyrazolcarbonsäure, vorzugsweise Verbindungen wie
1-(2,4-Dichlorphenyl)-5-methyl-pyrazol-3-carbonsäureethylester (S1-2),
1-(2,4-Dichlorphenyl)-5-isopropyl-pyrazol-3-carbonsäureethylester (S1-3),
1-(2,4-Dichiorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5)
und verwandte Verbindungen, wie sie in EP-A-333 131 und EP-A-269 806 beschrieben sind.
c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO

91/08202 beschrieben sind, bzw. der 5,5-Diphenyl-2-isoxazolin-carbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.

e) Verbindungen vom Typ der 8-Chinolinoxyessigsäure (S2), vorzugsweise
(5-Chlor-8-chinolinoxy)-essigsäure-(1-methyl-hex-1-yl)-ester (Common name "Cloquintocet-mexyl" (S2-1) (siehe PM, S. 263-264)
(5-Chlor-8-chinolinoxy)-essigsäure-(1,3-dimethyl-but-1-yl)-ester (S2-2),
(5-Chlor-8-chinolinoxy)-essigsäure-4-allyl-oxy-butylester (S2-3),
(5-Chlor-8-chinolinoxy)-essigsäure-1-allyloxy-prop-2-ylester (S2-4),
(5-Chlor-8-chinolinoxy)-essigsäureethylester (S2-5),
(5-Chlor-8-chinolinoxy)-essigsäuremethylester (S2-6),
(5-Chlor-8-chinolinoxy)-essigsäureallylester (S2-7),
(5-Chlor-8-chinolinoxy)-essigsäure-2-(2-propyliden-iminoxy)-1-ethylester (S2-8),
(5-Chlor-8-chinolinoxy)-essigsäure-2-oxo-prop-1-ylester (S2-9)
und verwandte Verbindungen, wie sie in EP-A-86 750, EP-A-94 349 und EP-A-191 736 oder EP-A-0 492 366 beschrieben sind.

f) Verbindungen vom Typ der (5-Chlor-8-chinolinoxy)-malonsäure, vorzugsweise Verbindungen wie (5-Chlor-8-chinolinoxy)-malonsäure-diethylester,
(5-Chlor-8-chinolinoxy)-malonsäurediallylester,
(5-Chlor-8-chinolinoxy)-malonsäure-methyl-ethylester und verwandte Verbindungen, wie sie in EP-A-0 582 198 beschrieben sind.

g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

h) Wirkstoffe vom Typ der Pyrimidine, die als bodenwirksame Safener in Reis angewendet werden, wie z. B.
"Fenclorim" (PM, S. 512-511) (= 4,6-Dichlor-2-phenylpyrimidin), das als Safener für Pretilachlor in gesätem Reis bekannt ist,

i) Wirkstoffe vom Typ der Pyrimidine, die als bodenwirksame Safener in Reis angewendet werden, wie z. B.
"Fenclorim" (PM, S. 512-511) (= 4,6-Dichlor-2-phenylpyrimidin), das als Safener gegen Schäden von Pretilachlor in gesätem Reis bekannt ist,

j) Wirkstoffe vom Typ der Dichloracetamide, die häufig als Vorauflaufsafener (bodenwirksame Safener) angewendet werden, wie z. B.
"Dichlormid" (PM, S. 363-364) (= N,N-Diallyl-2,2-dichloracetamid),
"R-29148" (= 3-Dichloracetyl-2,2,5-trimethyl-1,3-oxazolidin von der Firma Stauffer),
"Benoxacor" (PM, S. 102-103) (= 4-Dichloracetyl-3,4-dihydro-3-methyl-2H-1,4-benzoxazin).
"PPG-1292" (= N-Allyl-N-[(1,3-dioxolan-2-yl)-methyl]-dichloracetamid von der Firma PPG Industries),
"DK-24" (= N-Allyl-N-[(allylaminocarbonyl)-methyl]-dichloracetamid von der Firma Sagro-Chem),
"AD-67" oder "MON 4660" (= 3-Dichloracetyl-1-oxa-3-aza-spiro[4,5]decan von der Firma Nitrokemia bzw. Monsanto),
"Diclonon" oder "BAS145138" oder "LA8145138" (= (= 3-Dichloracetyl-2,5,5-trimethyl-1,3-diazabicyclo[4.3.0]nonan von der Firma BASF) und
"Furilazol" oder "MON 13900" (siehe PM, 637-638) (= (RS)-3-Dichloracetyl-5-(2-furyl)-2,2-dimethyloxazolidin)

k) Wirkstoffe vom Typ der Dichloracetonderivate, wie z. B.
"MG 191" (CAS-Reg. Nr. 96420-72-3) (= 2-Dichlormethyl-2-methyl-1,3-dioxolan von der Firma Nitrokemia), das als Safener für Mais bekannt ist,

l) Wirkstoffe vom Typ der Oxyimino-Verbindungen, die als Saatbeizmittel bekannt sind, wie z. B.
"Oxabetrinil" (PM, S. 902-903) (= (Z)-1,3-Dioxolan-2-ylmethoxyimino(phenyl)acetonitril), das als Saatbeiz-Safener für Hirse gegen Schäden von Metolachlor bekannt ist,
"Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener für Hirse gegen Schäden von Metolachlor bekannt ist, und
"Cyometrinil" oder "-CGA-43089" (PM, S. 1304) (= (Z)-Cyanomethoxyimino(phenyl)acetonitril), das als Saatbeiz-Safener für Hirse gegen Schäden von Metolachlor bekannt ist,

m) Wirkstoffe vom Typ der Thiazolcarbonsäureester, die als Saatbeizmittel bekannt sind, wie z. B.
"Flurazol" (PM, S. 590-591) (= 2-Chlor-4-trifluormethyl-1,3-thiazol-5-carbonsäurebenzylester), das als Saatbeiz-Safener für Hirse gegen Schäden von Alachlor und Metolachlor bekannt ist,

n) Wirkstoffe vom Typ der Naphthalindicarbonsäurederivate, die als Saatbeizmittel bekannt sind, wie z. B.
"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,

o) Wirkstoffe vom Typ Chromanessigsäurederivate, wie z. B.
"CL 304415" (CAS-Reg. Nr. 31541-57-8) (= 2-(4-Carboxy-chroman-4-yl)-essigsäure von der Firma American Cyanamid), das als Safener für Mais gegen Schäden von Imidazolinonen bekannt ist,
p) Wirkstoffe, die neben einer herbiziden Wirkung gegen Schadpflanzen auch Safenerwirkung an Kulturpflanzen wie Reis aufweisen, wie z. B.
"Dimepiperate" oder "MY-93" (PM, S. 404-405) (= Piperidin-1-thiocarbonsäure-S-1-methyl-1-phenylethylester), das als Safener für Reis gegen Schäden des Herbizids Molinate bekannt ist,
"Daimuron" oder "SK 23" (PM, S. 330) (= 1-(1-Methyl-1-phenylethyl)-3-p-tolyl-harnstoff), das als Safener für Reis gegen Schäden des Herbizids Imazosulfuron bekannt ist,
"Cumyluron" = "JC-940" (= 3-(2-Chlorphenylmethyl)-1-(1-methyl-1-phenyl-ethyl)-harnstoff, siehe JP-A-60087254), das als Safener für Reis gegen Schäden einiger Herbizide bekannt ist,
"Methoxyphenon" oder "NK 049" (= 3,3'-Dimethyl-4-methoxy-benzophenon), das als Safener für Reis gegen Schäden einiger Herbizide bekannt ist,
"CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist,
q) N-Acylsulfonamide der Formel (S3) und ihre Salze,

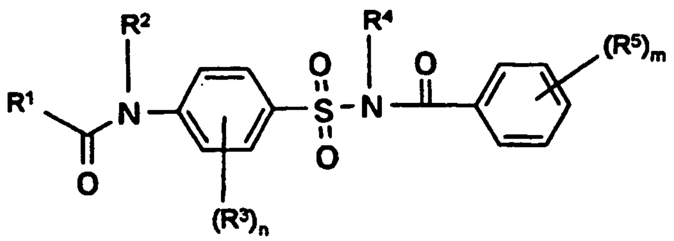

(S3)

wie sie in WO-A-97/45016 beschrieben sind,
r) Acylsulfamoylbenzoesäureamide der allgemeinen Formel (S4), gegebenenfalls auch in Salzform,

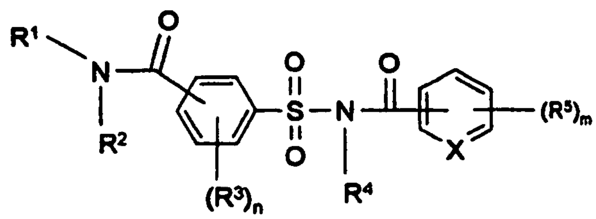

(S4)

wie sie in der Internationalen Anmeldung Nr. PCT/EP98/06097 beschrieben sind, und
s) Verbindungen der Formel (S5),

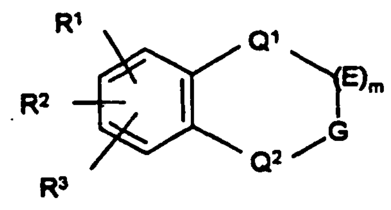

(S5)

wie sie in der WO-A 98/13 361 beschrieben sind,
einschließlich der Stereoisomeren und der in der Landwirtschaft gebräuchlichen Salze.

Von besonderem Interesse sind unter den genannten Safenem sind (S1-1) und (S1-9) und (S2-1), insbesondere (S1-1) und (S1-9).
Einige der Safener sind oben bereits als Herbizide genannt und entfalten somit neben der Herbizwirkung bei Schadpflanzen zugleich auch Schutzwirkung bei den Kulturpflanzen.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt.

Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden kann, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichem und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Unkräutern aufweisen, werden die Kulturpflanzne nur unwesentlich oder gar nicht geschädigt.

Darüber hinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhattsstoffe. So sind transgene Pflanzen

mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.
Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).
Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs, vorzugsweise in Pflanzenkulturen, dadurch gekennzeichnet, daß man ein oder mehrere Mittel des Typs (A) mit einem oder mehreren Herbiziden des Typs (B) auf die Schadpflanzen, Pflanzenteile davon oder die Anbaufläche appliziert.
Gegenstand der Erfindung ist auch die Verwendung der herbiziden Mittel aus Verbindungen (A)+(B) zur Bekämpfung von Schadpflanzen, vorzugsweise in Pflanzenkulturen.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige

Lösungen (SL), Emulsionen (EW) wie Öl-in-Wasser- und Wasser-in-Ö1-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchier, "Chemische Technologie", Band 7, C. Hauser Verlag München, 4. Aufl. 1986; van Valkenburg, "Pesticides Formulations", Marcel Dekker N.Y., 1973; K Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:
In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.
Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer, Mittel, die den pH-Wert oder die Viskosität beeinflussen, Verdickungsmittel, Düngemittel und/oder Farbstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die herbiziden Mittel können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf

den Ackerboden.
Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (7Triton X 207), 3 Gew.-Teilen Isotridecanolpolyglykolether (8 EO) und 71 Gew.-Teiten paraffinischem Mineralöl (Siedebereich z.B. ca. 255 bis 277EC) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Töpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdekkerde appliziert. Nach der Behandlung werden die Töpfe im Gewächshaus aufgestellt und unter guten Wachstumsbedingungen für die Unkräuter gehalten. Die optische Bonitur der Pflanzen- bzw. Aüflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Bonitur und Bewertung der synergistischen Herbizidwirkungen:

Die herbizide Wirksamkeit der Wirkstoffe bzw. Wirkstoffmischungen wurde anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(AxB/100)$$

Dabei bedeuten: A, B = Wirkung der Wirkstoffe A bzw. B in % bei der Aufwandmenge a bzw. b g AS/ha; E = Erwartungswert der Wirkung in % der Wirkstoffkombination bei einer Aufwandmenge von a+b g AS/ha (AS = Aktivsubstanz).

Die beobachteten Werte der Versuche zeigen bei geeigneten niedrigen Dosierungen eine Wirkung der Kombinationen, die über der formalen Summe der Wirkungen bei Einzelapplikation oder über den Erwartungswerten nach Colby liegen.

2. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert (vgl. Abschnitt 1). Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen.

Die beobachteten Werte der Versuche zeigen bei geeigneten niedrigen Dosierungen eine Wirkung der Kombinationen, die über der formalen Summe der Wirkungen bei Einzelapplikation oder über den Erwartungswerten nach Colby liegen.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent (vgl. Abschnitt 1) oder postemergent (vgl. Abschnitt 2) oder als Sequenzbehandlung teilweise preemergent und/oder postemergent. Nach der Anwendung, z. B. 2, 4, 6 und 8 Wochen nach Applikation die Wirkung der Präparate optisch im Vergleich zu unbehandelten Kontrollen bonitiert (vgl. Bonitur in Abschnitt 1). Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, daß die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby und weisen deshalb ebenfalls auf einen Synergismus hin. Die Kulturpflanzen dagegen wurden infolge der Behandlungen mit den herbiziden Mitteln nicht oder nur unwesentlich geschädigt.

Abkürzungen in den nachfolgenden Tabellen:

ai = AS = Aktivsubstanz (bezogen auf 100% Wirkstoff

$E^a$ = Formale Summe der Wirkungen der Einzelapplikationen (vgl. Abschnitt 1)
$E^c$ = Erwartungswert nach Colby (vgl. Bonitur nach Abschnitt 1)

Die Zahlenangaben in den Tabellenspalten unter den Bezeichnungen für die Schad- bzw. Kulturpflanzen betreffen die herbiziden Wirkungen bzw. Schäden an den Pflanzen in Prozent.

Beispiel 1

| Verbindung | g ai/ha | TRZAW | VERPE |
|---|---|---|---|
| (B1.1.1)+(B1.3.3)$^s$ | (750)+40 | 2 | 40 |
| (A3) | 50 | 0 | 55 |
| (A3)+(B1.1.1)+(B1.3.3)$^s$ | 50+(750+40) | 6 | 96 ($E^a$ = 95) |
| Feldversuch; Stadium Blühbeginn VERPE, Auswertung 28 Tage nach Applikation | | | |
| (A3) = Verbindung der Formel (A3), d. h. 4-Amino-6-(1-fluor-1-methyl-ethyl)-2-(3- phenyl-1-ethyl-propylamino)-1,3,5-triazin | | | |
| (B1.1.1) = Isoproturon | | | |
| (B1.3.3) = Fenoxaprop-P-ethyl | | | |
| $^s$ = mit dem Safener Mefenpyr diethyl | | | |
| TRZAW = Triticum aestivum (W) = Winterweizen | | | |
| VERPE = Veronica persicaria | | | |

Beispiel 2a

| Verbindung | g ai/ha | TRZAW | CHEAL |
|---|---|---|---|
| (B3.1.4)$^s$ | 2,5 | 6 | 74 |
| (A3) | 25 | 1 | 5 |
| | 50 | 0 | 35 |
| | 100 | 10 | 85 |
| (B3.1.4)$^s$+(A3) | 2,5+50 | 7 | 95 ($E^c$ = 85) |
| Feldversuch: 2 - 4 Blattstadium; Auswertung 28 Tage nach Applikation | | | |

Beispiel 2b

| Verbindung | g ai/ha | TRZAW | STEME |
|---|---|---|---|
| (B3.1.5)$^s$ | 10 | 2 | 20 |
| (A3) | 50 | 2 | 48 |
| (B3.1.5)$^s$+(A3) | 10+50 | 3 | 71 ($E^a$ = 20+48) |
| Feldversuch: 2 - 4 Blattstadium; Auswertung 28 Tage nach Applikation | | | |

Tabelle fortgesetzt

| Abkürzungen zu 7a und b: |
|---|
| s = mit dem Safener Mefenpyr diethyl |
| (A3) = siehe Beispiel 1 |
| (B3.1.4) = Iodosulfuron-methyl-natriumsalz |
| (B3.1.5) = (4-Methyl-sulfonylamino-2-(4,6-Dimethoxy-pyrimidin-2-ylcarbamoylsulfamoyl)-benzoesäure-methylester |
| CHEAL = Chenopodium album |
| STEME = Stellaria media |
| TRZAW = Triticum aestivum(W)=Winterweizen |

Beispiel 3 Aminotriazine in Getreide: (A1) und (A2)

| Wirstoff(e) | g ai/ha | HORVW | TRZAW | CAPBP | ALOMY |
|---|---|---|---|---|---|
| (A1) | 100 | 0 | 0 | 88 | 0 |
| (A2) | 100 | 0 | 0 | 90 | 0 |
| (B1.1.1) | 2000 | 0 | 0 | 0 | 0 |
| (A1)+(B1.1.1) | 100+2000 | 0 | 0 | 99 ($E^a$ = 88) | 92 ($E^a$ = 0) |
| (A2)+(B1.1.1) | 100+2000 | 0 | 0 | 97 ($E^a$ = 90) | 52 ($E^a$ = 0) |

Beispiele aus Feldversuchsreihe: Applikation 1 - 3 Blattstadium Unkräuter Auswertung 120 bis 160 Tage nach Applikation

(B1.1.1) = Isoproturon

(A1) = Verbindung der Formel (A1), d. h. 4-Amino-6-(1-fluor-1-methyl-ethyl)-2-(3-phenyl-1-cyclobutyl-propylamino)-1,3,5-triazin

(A2) = Verbindung der Formel (A2), d. h. 4-Amino-6-(1-fluor-1-methyl-ethyl)-2-(4-phenyl-1-cyclopropyl-butylamino)-1,3,5-triazin

CAPBP = Capsella bursa-pastoris

ALOMY = Alopecurus myosuroides

HORVW = Hordeum vulgare W (Wintergerste)

TRZAW = Triticum aestivum (W) = Winterweizen

VIOAR = Viola arvensis

Beispiel 4

| Wirkstoff(e) | g ai/ha | GALAP | TRZAW |
|---|---|---|---|
| (A1) | 50 | 45 | 1 |
| | 100 | 45 | 2 |
| (B1.2.1) | 180 | 45 | 2 |
| (A1)+(B1.2.1) | 50+180 | 75 ($E^c$=70) | 3 |
| | 100+180 | 88 ($E^c$=70) | 4 |
| (B1.2.2) | 1000 | 30 | |

Tabelle fortgesetzt

| Wirkstoff(e) | g ai/ha | GALAP | TRZAW |
|---|---|---|---|
| (A1)+(B1.2.2) | 50+1000 | 93 ($E^a$ = 75) | 3 |
| | 100+1000 | 96 ($E^a$ = 75) | 5 |
| (B1.1.1) | 1000 | 15 | 0 |
| (A1)+(B1.1.1) | 50+1000 | 98 ($E^a$ = 60) | 6 |
| (B3.4.4) | 250 | 50 | 2 |
| (A1)+(B3.4.4) | 50+250 | 98 ($E^a$ = 95) | 7 |
| | 100+250 | 99 ($E^a$ = 95) | 7 |

Applikation Vorauflauf Herbst, Auswertung 169 Tage nach Applikation

(A1) = siehe Beispiel 3

(B1.2.1) = Fluthiamide = Flufenacet,

(B1.2.2) = Pendimethalin

(B1.1.1) = Isoproturon

(B3.4.4) = Flurtamone

GALAP = Galium aparine

TRZAW = Triticum aestivum (W) = Winterweizen

Beispiel 5

| Wirkstoff(e) | g ai/ha | CAPPBP | TRZAW |
|---|---|---|---|
| (A1) | 25 | 40 | 0 |
| | 50 | 68 | 1 |
| | 75 | 73 | 1 |
| | 100 | 79 | 2 |
| (B1.3.3)[s] | 60 | 10 | 1 |
| (A1)+(B1.3.3)[s] | 50+60 | 100 ($E^a$ = 78) | 3 |
| (B3.4.2) | 75 | 45 | 0 |
| | 150 | 67 | 0 |
| (A1)+(B3.4.2) | 25+75 | 96 ($E^a$ = 95) | 2 |
| | 25+150 | 97 ($E^c$ = 80) | 3 |

Feldversuch: Applikation im 2- bis 4-Blattstadium Auswertung 28 Tage nach Applikation

(A1) = siehe Beispiel 3

(B1.3.3) = Fenoxaprop-P-ethyl

[s] = mit dem Safener Mefenpyr-diethyl

(B3.4.2) = Diflufenican

CAPBP = Capsella bursa-pastoris

TRZAW = Triticum aestivum (W) = Winterweizen

Beispiel 6

| Wirkstoff(e) | g ai/ha | LAMPU | TRZAW |
|---|---|---|---|
| (A1) | 12,5 | 25 | 0 |
| | 25 | 65 | 0 |
| | 50 | 70 | 0 |
| (B2.6.8) | 25 | 60 | 3 |
| | 50 | 60 | 3 |
| (A1)+(B2.6.8) | 12,5 + 25 | 93 (E[a] = 85) | 4 |
| (B2.5.2) | 3,7 | 35 | 3 |
| | 7,5 | 35 | 3 |
| | 15 | 40 | 6 |
| (A1)+(B2.5.2) | 12,5 + 3,7 | 78 (E[a] =60) | 4 |

Feldversuch: Applikation im 2- bis 4-Blattstadium Auswertung 42 Tage nach Applikation

(A1) = siehe Beispiel 3

(B2.6.8) = Cinidon-ethyl

(B2.5.2) = Florasulam

LAMPU = Lamium purpurea

TRZAW = Triticum aestivum (W) = Winterweizen

Beispiel 7

| Verbindung | g ai/ha | SORVE | TRZAS |
|---|---|---|---|
| (A1) | 62,5 | 35 | 5 |
| | 125 | 50 | 13 |
| (B2.3.1) | 225 | 0 | 0 |
| | 450 | 25 | 0 |
| (A1)+(B2.3.1) | 62,5 + 450 | 73 (E[a] = 60) | 8 |
| | 125 + 225 | 65 (E[a] = 50) | 12 |
| (B2.1.1) | 12,5 | 0 | 0 |
| (A1)+(B2.1.1) | 62,5 + 12,5 | 53 (E[a] = 35) | 3 |
| | 125 + 12,5 | 76 (E[a] = 50) | 8 |

Feldversuch: Applikation im 2- bis 4-Blattstadium Auswertung 17 Tage nach Applikation

(A1) = siehe Beispiel 3

(B2.3.1) = Bromoxynil

(B2.1.1) = Tribenuron-methyl

SORVE = Sorghum verticilliflorum

TRZAS = Triticum aestivum (S) = Sommerweizen

Beispiel 8

| Wirkstoff(e) | g ai/ha | MATCH | TRZAS |
|---|---|---|---|
| (A1) | 25 | 43 | 2 |
| | 50 | 58 | 2 |
| | 100 | 73 | 5 |
| (B2.2.4) | 750 | 54 | 0 |
| | 1500 | 63 | 0 |
| (A1)+(B2.2.4) | 25+750 | 98 ($E^c$ = 97) | 1 |
| | 25+1500 | 100 ($E^c$ = 80) | 2 |
| (B2.3.2) | 187 | 30 | 2 |
| | 375 | 45 | 3 |
| (A1)+(B2.3.2) | 25+187 | 99 ($E^a$ = 73) | 3 |
| | 25+375 | 100 ($E^a$ = 90) | 4 |

Feldversuch: Applikation im 2- bis 4-Blattstadium Auswertung 28 Tage nach Applikation

(A1) = siehe Beispiel 3

(B2.2.4) = Mecoprop-P (MCCP-P)

(B2.3.2) = loxynil

MATCH = Matricaria chamomilla

TRZAS = Triticum aestivum (S) = Sommerweizen

Beispiel 9

| Wirkstoffe | g ai/ha | LAMAM | TRZAW |
|---|---|---|---|
| (A1) | 25 | 60 | 0 |
| | 50 | 74 | 2 |
| | 100 | 80 | 2 |
| (B2.1.4) | 12,5 | 10 | 0 |
| | 25 | 25 | 0 |
| (A1)+(B2.1.4) | 25+25 | 100 ($E^a$ = 85) | 1 |
| | 25+12,5 | 97 ($E^a$ = 70) | 0 |
| | 50+25 | 100 ($E^a$ = 99) | 1 |
| | 100+12,5 | 99 ($E^a$ = 90) | 2 |

Feldversuch: Applikation im 2- bis 4-Blattstadium Auswertung 28 Tage nach Applikation

(A1) = siehe Beispiel 3

(B2.1.4) = Amidosulfuron

LAMAM = Lamium amplexicaule

TRZAW = Triticum aestivum (W) = Winterweizen

Beispiel 10: Synergistische Wirkung/Spektrumserweiterung

| Wirkstoff(e): | (A1) | (B1.2.1) | (A1)+(B1.2.1) |
|---|---|---|---|
| Aufwandmenge (g ai/ha): | 50 | 180 | 50+180 |
| Spezies / Herbizidwirkung (%): | | | |
| MYOAR | 81 | 16 | 99 ($E^a$ = 97) |
| ANTAR | 0 | 25 | 100 ($E^a$ = 25) |
| LAMSS | 53 | 87 | 97 ($E^c$ = 94) |
| MATCH | 19 | 61 | 97 ($E^a$ = 80) |
| GALAP | 66 | 68 | 92 ($E^c$ = 89) |
| HORVW | 0 | 0 | 0 |
| TRZAW | 0 | 0 | 0 |
| PAPRH | 96 | 12 | 100 ($E^c$ = 96) |
| VIOAR | 90 | 20 | 99 ($E^c$ = 92) |

Feldversuch: Nachauflauf, Applikation im 2- bis 3-Blattstadium Auswertung 69 Tage nach Applikation

(A1) = siehe Beispiel 3

(B1.2.1) = Flufenacet = Fluthiamide,

MYOAR = Myosotis arvensis

ANTAR = Anthemis arvensis

LAMSS = Lamium ssp.

MATCH = Matricaria chamomilla

GALAP = Galium aparine

HORVW = Hordeum vulgare W (Wintergerste)

TRZAW = Triticum aestivum (W) = Winterweizen

PAPRH = Papaver rhoeas

VIOAR = Viola arvensis

Beispiel 11

| Wirkstoff(e) | g ailha | IPOHE | SETFA | ZEAMA |
|---|---|---|---|---|
| (A1) | 50 | 85 | 85 | 0 |
| | 100 | 93 | 94 | 0 |
| (B3.4.5) | 105 | 87 | 90 | 0 |
| | 210 | 85 | 93 | 0 |
| (A1)+(B3.4.5) | 100+105 | 100 ($E^c$=99) | 100 ($E^c$=99) | 0 |
| | 50+105 | 100 ($E^c$=98) | 100 ($E^c$=98) | 0 |

Feldversuch: Vorauflauf, Auswertung 16 Tage nach Applikation

(A1) = siehe Beispiel 3

(B3.4.5) = Isoxaflutole

IPOHE = Ipomoea hederacea

Tabelle fortgesetzt

| |
|---|
| SETFA = Setaria faberi |
| ZEAMA = Zea mays (Mais) |

Beispiel 12

| Wirkstoffe | g ai/ha | ELEIN | Mais (LL) |
|---|---|---|---|
| (A1) | 100 | 0 | 0 |
| (B4.1.2) | 300 | 55 | 0 |
| | 600 | 78 | 0 |
| (A1)+(B4.1.2) | 100+300 | 90 ($E^a$ = 55) | 0 |
| | 100+600 | 93 ($E^a$ = 78) | 0 |
| (B3.1.11)$^s$ | 30 | 75 | 0 |
| | 45 | 80 | 0 |
| (A1)+(B3.1.11)$^s$ | 100+30 | 88 ($E^a$ = 75) | 0 |
| | 100+60 | 93 ($E^a$ = 80) | 0 |

Feldversuch: Applikation im 3-Blattstadium, Auswertung 31 Tage nach Applikation

Mais (LL) = Mais, der gegenüber Glufosinate-ammonium resistent ist,

(A1) = siehe Beispiel 3

(B4.1.2) = Glufosinate-ammonium

(B3.1.1.1) = AEF360

$^s$ = kombiniert mit Safener (S1-9) (Isoxadifen-ethyl)

ELEIN = Eleusine indica

Beispiel 13

| Wirkstoff | g ai/ha | ZEAMA | SETVI | ECHCG |
|---|---|---|---|---|
| (A1) | 100 | 0 | 0 | 0 |
| (B3.1.11)$^s$ | 45 | 0 | 68 | 78 |
| (A1)+(B3.1.11)$^s$ | (100+45) | 0 | 83 ($E^a$ = 68) | 90 ($E^a$ = 78) |
| (B3.1.11)$^s$+(B3.1.4) | (30+1) | 0 | 40 | 55 |
| (A1)+(B3.1.11)$^s$ +(B3.1.4) | 100(30+1) | 0 | 85 ($E^a$ = 40) | 95 ($E^a$ = 55) |

Feldversuch: Applikation im 4- bis 5-Blattstadium Auswertung 31 Tage nach Applikation

(A1) = siehe Beispiel 3

(B3.1.11) = AEF360

(B3.1.4) = Iodosulfuron-methyl-natriumsalz

$^s$ = kombiniert mit Safener (S1-9) (Isoxadifen-ethyl)

Tabelle fortgesetzt

| |
|---|
| SETVI = Setaria viridis |
| ECHCG = Echinochloa crus-galli |
| ZEAMA = Zea mays (Mais) |

Beispiel 14

| Wirkstoff(e) | g ai/ha | EPHHL | ORYSA |
|---|---|---|---|
| (A1) | 25 | 15 | 0 |
| | 50 | 50 | 0 |
| | 100 | 60 | 0 |
| (B2.1.9) | 22,5 | 45 | 0 |
| | 45 | 65 | 0 |
| (A1)+(B2.1.9) | 25+22,5 | 75 (E[a] = 60) | 0 |

Feldversuch: Applikation im 3-Blattstadium, Auswertung 31 Tage nach Applikation

(A1) = siehe Beispiel 3

(B2.1.9) = Ethoxysulfuron

EPHHL = Euphorbia heterophylla

ORYSA = Oryza sativa (Reis)

Beispiel 15

| Werkstoffe | g ai/ha | PHBPU | ORYSA |
|---|---|---|---|
| (A1) | 25 | 90 | 0 |
| | 50 | 95 | 0 |
| | 100 | 97 | 0 |
| (B1.3.3)[s] | 45 | 0 | 0 |
| | 60 | 0 | 0 |
| (A1)+(B1.3.3)[s] | 50+45 | 97 (E[a] = 95) | 0 |

Feldversuch: Applikation im 4-Blattstadium, Auswertung 42 Tage nach Applikation

(B1.3.3) = Fenoxaprop-P-ethyl

[s] = kombiniert mit Safener (S1-9) (Isoxadifen-ethyl)

PHBPU = Pharbitis purpurea

ORYSA = Oryza sativa (Reis)

Beispiel 16

| Wirkstoffe | g ai/ha | MOOVA | ORYSA |
|---|---|---|---|
| (A1) | 25 | 3 | 0 |
| | 50 | 90 | 10 |
| | 100 | 95 | 13 |
| (B1.6.5) | 250 | 95 | 5 |
| (A1)+ (B1.6.5) | 25+250 | 100 ($E^a$ = 98) | 0 |
| (B1.6.14) | 25 | 82 | 0 |
| (A1)+ (B1.6.14) | 25+25 | 100 ($E^a$ =85) | 9 |
| (B1.6.4) | 60 | 73 | 0 |
| (A1)+(B1.6.4) | 25+60 | 100 ($E^a$ = 76) | 0 |
| (B2.6.3) | 60 | 47 | 0 |
| (A1)+(B2.6.3) | 25+60 | 100 ($E^a$ = 47) | 0 |

Feldversuch: Applikation im 2-Blattstadium, Auswertung 14 Tage nach Applikation

(B1.6.5) = Anilofos

(B1.6.14) = AEB391

(B1.6.4) = MY 100

(B2.6.3) = Carfentrazone-ethyl

MOOVA = Monochoria vaginalis

ORYSA = Oryza sativa (Reis)

## Patentansprüche

**1.** Herbizidkombinationen mit einem synergistisch wirksamen Gehalt an Komponenten (A) und (B), wobei

(A) eine oder mehrere herbizid wirksame Aminotriazinverbindungen (I) aus der Gruppe der Verbindungen der Formeln (II), (III), (IV) und (V) enthält, wobei die Verbindungen bedeuten:

- Verbindungen der Formel (II) und deren Salze,

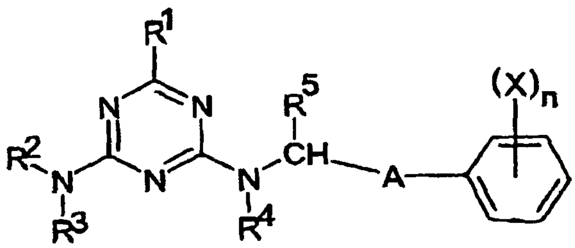

, (II)

worin

$R^1$ $(C_1-C_6)$Alkyl,
das unsubstituiert oder durch einen oder mehrere Reste aus der Gruppe Halogen, Cyano, Nitro. Thiocyanato, $(C_1-C_4)$Alkoxy, $(C_1-C_4)$Alkylthio. $(C_{1-}C_4)$Alkytsulfinyf. $(C_1-C_4)$Alkylsulfonyl, $(C_2-C_4)$Alkenyl, $(C_2-C_4)$Alkinyl, Phenyl, das unsubstituiert oder substituiert ist, und Heterocyclyl mit 3 bis 6 Ringatomen und 1 bis 3 Heteroringatvmen aus der Gruppe N, O und S, wobei der Ring unsubstituiert oder substituiert ist, substituiert ist.
$R^2$ und $R^3$ jeweils unabhängig voneinander Wasserstoff, Amino oder Alkylamino oder Dialkylamino mit jeweils 1 bis 6 C-Atomen im Alkylrest, einen acyclischen oder cydischen Kohlenwasserstoffrest oder

Kohlenwasserstoffoxyrest mit jeweils 1 bis 10 C-Atomen oder einen Heterocydylrest, Heterocyclytoxyrest oder Heterocyclylaminorest mit jeweils 3 bis 6 Ringatomen und 1 bis 3 Heteroringatomen aus der Gruppe N, O und S. wobei jeder der fünf letztgenannten Reste unsubstituiert oder substituiert ist, oder einen Acylrest oder

$R^2$ und $R^3$ gemeinsam mit dem Stickstoffatom der Gruppe $NR^2R^3$ einen heterocyclischen Rest mit 3 bis 6 Ringatomen und 1 bis 4 Heteroringatomen,

wobei neben dem N-Atom die gegebenenfalls weiteren Heteroringatome aus der Gruppe N, O und S ausgewählt sind und der Rest unsubstituiert oder substituiert ist,

$R^4$ Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,

$R^5$ Wasserstoff, Halogen, Nitro, Cyano, Thiocyanato oder einen Rest der Formel $-B^1-Y^1$, wobei $B^1$ und $Y^1$ wie unten definiert sind,

A einen Alkylenrest mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiocyanato und einen Rest der Formel $-B^2-Y^2$ substituiert ist.

$(X)_n$ n Substituenten X und dabei X jeweils unabhängig voneinander Halogen. $(C_1-C_6)$Alkyl, $(C_2-C_6)$Alkenyl, $(C_2-C_6)$Alkinyl, $(C_1-C_8)$Alkoxy, $(C_2-C_6)$Alkenyloxy, $(C_2-C_6)$Alkinyloxy, $[(C_1-C_4)$Alkyl]-carbonyl, $[(C_1-C_4)$Alkoxy]-carbonyl oder $[(C_1-C_4)$Alkylthio]-carbonyl, wobei die kohlenwasserstoffhaltigen Teile in den letztgenannten 9 Resten unsubstituiert oder substituiert sind, oder einen Rest der Formel $-B^0-R^0$, wobei $B^0$ wie unten definiert und $R^0$ einen aromatischen, gesättigten oder teilgesättigten carbocyclischen oder heterocyclischen Rest bedeutet, wobei der cyclische Rest substituiert oder unsubstituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, $(C_1-C_4)$Alkyl und Oxo substituiert ist,

n 0, 1, 2, 3, 4 oder 5,

$B^0,B^1,B^2$ jeweils unabhängig voneinander eine direkte Bindung oder eine divalente Gruppe der Formel -O-, $-S(O)_p-$, $-S(O)_p-O-$, $-O-S(O)_p-$, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 8 C-Atomen ist,

$Y^1,Y^2$ jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N, O und S, wobei jeder der drei letztgenannten Reste unsubstituiert oder substituiert ist,

bedeuten:

- Verbindungen der Formel (III) oder deren Salze,

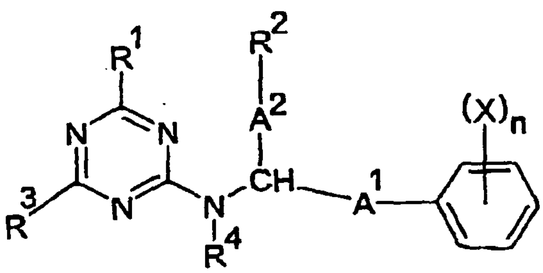

(III)

worin

$R^1$ Aryl, das unsubstituiert oder substituiert ist, oder $(C_3-C_9)$Cycloalkyl, das unsubstituiert oder substituiert ist, oder Heterocyclyl, das substituiert oder unsubstituiert ist, oder $(C_1-C_6)$Alkyl, $(C_2-C_8)$Alkenyl oder $(C_2-C_8)$Alkinyl,

wobei jeder der letztgenannten 3 Reste unsubstituiert oder durch einen oder mehrere Reste aus der Gruppe Halogen, Hydroxy, Cyano, Nitro, Thiocyanato, $(C_1-C_4)$Alkoxy, $(C_1-C_4)$Haloalkoxy, $(C_2-C_4)$Alkenyloxy, $(C_2-C_4)$Haloalkenyloxy, $(C_1-C_4)$Alkylthio, $(C_1-C_4)$Alkylsulfinyl, $(C_1-C_4)$Alkylsulfonyl, $(C_1-C_4)$Haloalkylsulfinyl, $(C_1-C_4)$Haloalkylsulfonyl und $(C_3-C_9)$Cycloalkyl, das unsubstituiert oder substituiert ist, und Phenyl, das unsubstituiert oder substituiert ist, und Heterocyclyl, das unsubstituiert oder substituiert ist, und Reste der Formeln R'-C(=Z')-, R'-C(=Z')-Z-, R'-Z-C(=Z')-, R'R"N-C(=Z')-, R'-Z-C(=Z')-O-, R'R"N-C(=Z')-Z-, R'-C(=Z')-NR"- und R'R"N-C(=Z')-NR'''-, worin R', R" und R''', jeweils unabhängig voneinander $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist, bedeuten und worin Z und Z' unabhängig voneinander jeweils ein Sauerstoff- oder Schwefelatom sind, substituiert ist,

$R^2$ $(C_3-C_9)$Cycloalkyl, das unsubstituiert oder substituiert ist, $(C_4-C_9)$Cycloalkenyl, das unsubstituiert oder substituiert ist. Heterocyclyl, das unsubstituiert oder substituiert ist, oder Phenyl, das unsubstituiert oder substituiert ist,

$R^3$ Wasserstoff, $(C_1-C_8)$Alkyl, Aryl oder $(C_3-C_9)$Cycloalkyl, wobei jeder der letztgenannten 3 Reste unsubstituiert oder substituiert ist, oder einen Rest der Formel $-N(B^1-D^1)(B^2-D^2)$ oder $-NR'-N(B^1-D^1)(B^2-D^2)$, worin jeweils $B^1$, $B^2$, $D^1$ und $D^2$ wie unten definiert sind und R' Wasserstoff, $(C_1-C_8)$Alkyl oder $[(C_1-C_4)$Alkyl]-carbonyl bedeutet,

$R^4$ einen Rest der Formel $-B^3-D^3$, wobei $B^3$ und $D^3$ wie unten definiert sind,

$A^1$ geradkettiges Alkylen mit 1 bis 5 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel $-B^4-D^4$ substituiert ist, wobei $B^4$ und $D^4$ wie unten definiert sind.

$A^2$ eine direkte Bindung oder geradkettiges Alkylen mit 1 bis 4 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel $-B^5-D^5$ substituiert ist, oder einen divalenten Rest der Formel $V^1$, $V^2$, $V^3$, $V^4$ oder $V^5$,

$-CR^6R^7-W^*-CR^8R^9-$ $(V^1)$

$-CR^{10}R^{11}-W^*-CR^{12}R^{13}-CR^{14}R^{15}-$ $(V^2)$

$-CR^{16}R^{17}-CR^{18}R^{19}-W^*-CR^{20}R^{21}-$ $(V^3)$

$-CR^{22}R^{23}-CR^{24}R^{25}-W^*-$ $(V^4)$

$-CR^{26}R^{27}-W^*-$ $(V^5)$

wobei jeder der Reste $R^6$ bis $R^{27}$ jeweils unabhängig voneinander Wasserstoff, Halogen, Nitro, Cyano, Thiocyanato oder einen Rest der Formel $-B^8-D^6$ ist, W* jeweils ein Sauerstoffatom, ein Schwefelatom oder eine Gruppe der Formel $N(B^7-D^7)$ ist und

$B^5$, $B^6$, $B^7$, $D^5$, $D^6$ und $D^7$ wie unten definiert sind,

$B^1$, $B^2$, $B^3$ und $B^7$ jeweils unabhängig voneinander eine direkte Bindung oder eine divalente Gruppe der Formeln -C(=Z*)-, -C(=Z*)-Z**-, -C(=Z*)-NH- oder -C(=Z*)-NR*-, wobei Z* = ein Sauerstoff- oder Schwefelatom, Z** = ein Sauerstoff- oder Schwefelatom und R* = $(C_1-C_6)$Alkyl, Aryl. Aoyl-$(C_1-C_6)$alkyl $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist,

$B^4$, $B^5$ und $B^6$ jeweils unabhängig voneinander eine direkte Bindung oder eine divalente Gruppe der Formeln -O-, $-S(O)_p-$, $-S(O)_p-O-$, -O -S(O)p-, -CO-, -O-CO-, -CO-O-. -S-CO-, -CO-S-. -S-CS-. -CS-S-, -O-CO-O-. $-NR^0$ -, $-O-NR^0$, $-NR^0-O-$, $-NR^0-CO-$, $-CO-NR^0-$, $-O-CO-NR^0-$ oder $-NR^0-CO-O-$, wobei p die ganze Zahl 0, 1 oder 2 ist und $R^0$ Wasserstoff, $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist, bedeutet,

$D^1$, $D^2$, $D^3$, $D^4$, $D^5$ und $D^6$ jeweils unabhängig voneinander Wasserstoff, $(C_1-C_6)$Alkyl, Aryl, Aryl-$(C_1-C_6)$alkyl, $(C_3-C_9)$Cycloalkyl oder $(C_3-C_9)$Cycloalkyl-$(C_1-C_6)$alkyl, wobei jeder der 5 letztgenannten Reste unsubstituiert oder substituiert ist, oder jeweils zwei Reste $D^5$ von an einem C-Atom gebundenen zwei Gruppen $-B^5-D^5$ miteinander verbunden sind und eine Alkylengruppe mit 2 bis 4 C-Atomen ergeben, die unsubstituiert oder durch einen oder mehrere Reste aus der Gruppe $(C_1-C_4)$al-

kyl und ($C_1$-$C_4$)alkoxy substituiert ist,

$(X)_n$ n Substituenten X und dabei X jeweils unabhängig voneinander Halogen, Hydroxy, Amino, Nitro, Formyl, Carboxy, Cyano, Thiocyanato, Aminocarbonyl oder ($C_1$-$C_6$)Alkyl, ($C_1$-$C_6$)Alkoxy, ($C_1$-$C_6$)Alkylthio, Mono($C_1$-$C_6$)alkylamino, Di($C_1$-$C_4$)alkylamino, ($C_2$-$C_6$)Alkenyl, ($C_2$-$C_6$)Alkinyl, [($C_1$-$C_6$)Alkyl]carbonyl, [($C_1$-$C_6$)Alkoxy]carbonyl, Mono($C_1$-$C_6$)alkylamino-carbonyl Di($C_1$-$C_4$)alkylamino-carbonyl, N-($C_1$-$C_6$)Alkanoyl-amino oder N-($C_1$-$C_4$)Alkanoyl-N-($C_1$-$C_4$)alkyl-amino, wobei jeder der letztgenannten 13 Reste unsubstituiert oder substituiert ist, vorzugsweise unsubstituiert oder durch einen oder mehrere Reste aus der Gruppe Halogen, Hydroxy, Amino, Nitro. Formyl, Carboxy, Cyano, Thiocyanato, ($C_1$-$C_4$)Alkoxy, ($C_1$-$C_4$)Haloalkoxy, ($C_1$-$C_4$)Alkylthio, ($C_1$-$C_4$)Haloalkylthio, Mono($C_1$-$C_4$)alkylamino, Di($C_1$-$C_4$)alkylamino, ($C_3$-$C_9$)Cycloalkyl, ($C_3$-$C_9$)Cycloalkyl-amino, [($C_1$-$C_4$)Alkyl]carbonyl, [($C_1$-$C_4$)Alkoxy]carbonyl, Aminocarbonyl, Mono($C_1$-$C_4$)alkylamino-carbonyl, Di($C_1$-$C_4$)alkylamino-carbonyl, Phenyl, Phenoxy, Phenylthio, Phenylcarbonyl, Heterocyclyl, Heterocyclyloxy, Heterocyclylthio und Heterocyclylamino, wobei jeder der letztgenannten 8 Reste unsubstituiert ist oder einen oder mehrere Substituenten aus der Gruppe Halogen, Nitro, Cyano, ($C_1$-$C_4$)Alkyl, ($C_1$-$C_4$)Alkoxy, ($C_1$-$C_4$)Alkylthio, ($C_1$-$C_4$)Haloalkyl, ($C_1$-$C_4$)Haloalkoxy, Formyl, ($C_1$-$C_4$)Alkyl-carbony und ($C_1$-$C_4$)Alkoxy-carbonyl aufweist, substituiert ist,

oder ($C_3$-$C_9$)Cycloalkyl, ($C_3$-$C_9$)Cycloalkoxy, ($C_3$-$C_9$)Cycloalkylamino, Phenyl. Phenoxy. Phenylthio, Phenylcarbonyl, Heterocyclyl, Heterocyclyloxy, Heterocyclylthio oder Heterocyclylamino, wobei jeder der letztgenannten 11 Reste unsubstituiert oder substituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, ($C_1$-$C_4$)Alkyl und Oxo substituiert ist,

n 0, 1, 3, 4 oder 5 und

"Heterocyclyl" in den vorstehend genannten Resten unabhängig voneinander jeweils einen heterocyclischen Rest mit 3 bis 7 Ringatomen und 1 bis 3 Heteroatomen aus der Gruppe N, O und S

bedeuten, wobei

a) die Gesamtsumme der C-Atome in den Resten $A^1$ und $A^2$-$R^2$ mindestens 6 C-Atome beträgt oder
b) die Gesamtsumme der C-Atome in den Resten $A^1$ und $A^2$-$R^2$ 5 C-Atome beträgt und $A^1$ = eine Gruppe der Formel $-CH_2-$ oder $-CH_2CH_2-$ bedeutet sowie $R^1$ = ($C_1$-$C_4$)Alkyl, ($C_1$-$C_4$)Haloalkyl, ($C_2$-$C_6$)Haloalkenyl oder ($C_3$-$C_9$)Cycloalkyl, das unsubstituiert oder substituiert ist, bedeutet;

- Verbindungen der Formel (IV) oder deren Salze,

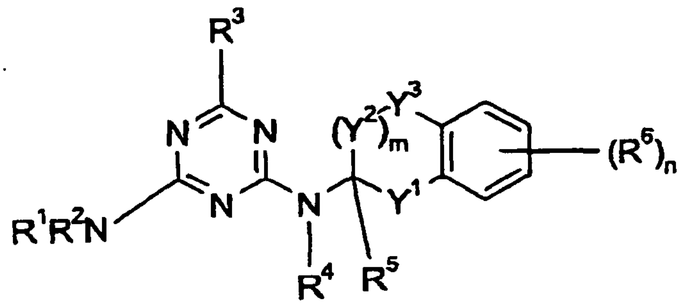

(IV)

worin

$R^1$ und $R^2$ jeweils unabhängig voneinander Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest, Heterocydylthiorest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder

$R^1$ und $R^2$ gemeinsam mit dem Stickstoffatom der Gruppe $NR^1R^2$ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder sub-

stituiert ist,
$R^3$ Halogen. Cyano, Thiocyanato, Nitro oder einen Rest der Formel $-Z^1-R^7$,
$R^4$ Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
$R^5$ Halogen, Cyano, Thiocyanato, Nitro oder einen Rest der Formel $-Z^2-R^8$,
$R^6$, wenn n=1, oder die Reste $R^6$ jeweils unabhängig voneinander, wenn n größer als 1 ist, Halogen, Cyano, Thiocyanato, Nitro oder eine Gruppe der Formel $-Z^3-R^9$,
$R^7$, $R^8$, $R^9$ jeweils unabhängig voneinander,

- Wasserstoff oder
- einen acyclischen Kohlenwasserstoffrest, wobei in der Kette Kohlenstoffatome durch Heteroatome aus der Gruppe N, O und S substituiert sein können, oder
- einen cyclischen Kohlenwasserstoffrest oder
- einen heterocyclischen Rest,

wobei jeder der letztgenannten 3 Reste unsubstituiert oder substituiert ist,
$Z^1$, $Z^2$, $Z^3$ jeweils unabhängig voneinander

- eine direkte Bindung oder
- eine divalente Gruppe der Formel -O-, $-S(O)_p-$, $-S(O)_p-O-$, $-O-S(O)_p-$, -CO-, -CS-, -S-CO-, -CO-S-, -O-CS-, -CS-O-, -S-CS-, -CS-S-, -OCO-, -CO-O-, -NR'-, -O-NR'-, -NR'-O-, -NR'-CO- oder -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,

$Y^1$,$Y^2$, $Y^3$ und weitere Gruppen $Y^2$, wenn m 2, 3 oder 4 ist, jeweils unabhängig voneinander

- eine divalente Gruppe der Formel $CR^aR^b$, wobei $R^a$ und $R^b$ gleich oder verschieden sind und jeweils einen Rest aus der Gruppe der für $R^7$ bis $R^9$ möglichen Reste bedeuten, oder
- eine divalente Gruppe der Formel -O-, -CO-, -C(=NR*)-, $-S(O)_q-$, -NR*- oder -N(O)-, wobei q = 0, 1 oder 2 ist und R* Wasserstoff oder Alkyl mit 1 bis 4 C-Atomen ist, oder

  - $Y^1$ oder $Y^3$ eine direkte Bindung,

wobei zwei Sauerstoffatome der Gruppen $Y^2$ und $Y^3$ nicht benachbart sind,

m 1, 2, 3 oder 4,
n 0, 1, 2, 3 oder 4

bedeuten;
- substituierte 2,4-Diamino-1,3,5-triazine der allgemeinen Formel (V),

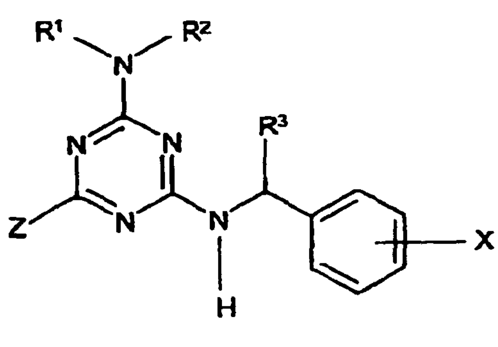

(V)

in welcher

$R^1$ für Wasserstoff oder für gegebenenfalls durch Hydroxy. Cyano, Halogen oder $C_1$-$C_4$-Alkoxy substituiertes Alkyl mit 1 bis 6 Kohlenstoffatomen steht,
$R^2$ für Wasserstoff, für Formyl, für jeweils gegebenenfalls durch Cyano, Halogen oder $C_1$-$C_4$-Alkoxy substituiertes Alkyl, Alkylcarbonyl, Alkoxycarbonyl oder Alkylsulfonyl mit jeweils 1 bis 6 Kohlenstoffatomen in den Alkylgruppen, oder für jeweils gegebenenfalls durch Cyano, Halogen-$C_1$-$C_4$-alkyl, $C_1$-$C_4$-Alkoxy, Halogen-$C_1$-$C_4$-alkoxy oder $C_1$-$C_4$-Alkoxy-carbonyl substituiertes Phenylcarbonyl, Naphthylcarbonyl, Phenylsulfonyl oder Naphthylsulfonyl steht,
$R^3$ für gegebenenfalls durch Cyano, Halogen oder $C_1$-$C_4$-Alkoxy substituiertes Alkyl mit 1 bis 6 Kohlenstoffatomen oder für gegebenenfalls durch Cyano, Halogen oder $C_1$-$C_4$-Alkyl substituiertes Cycloalkyl mit 3 bis 6 Kohlenstoffatomen steht,
X für einen Substituenten aus folgender Gruppe steht:
Hydroxy, Cyano, Nitro, Halogen, jeweils gegebenenfalls durch Hydroxy, Cyano oder Halogen substituiertes Alkyl oder Alkoxy mit jeweils 1 bis 6 Kohlenstoffatomen, jeweils gegebenenfalls durch Halogen substituiertes Alkylcarbonyl, Alkoxycarbonyl, Alkylthio, Alkylsulfinyl oder Alkylsulfonyl mit jeweils 1 bis 6 Kohlenstoffatomen in den Alkylgruppen, jeweils gegebenenfalls durch Hydroxy, Cyano, Nitro, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Phenoxy, und
Z für Wasserstoff, Hydroxy, Halogen, für jeweils gegebenenfalls durch Hydroxy, Cyano, Nitro, Halogen, $C_1$-$C_4$-Alkoxy, $C_1$-$C_4$-Alkylcarbonyl, $C_1$-$C_4$-Alkoxy-carbonyl, $C_1$-$C_4$-Alkylthio, $C_1$-$C_4$ Alkylsulfinyl oder $C_1$-$C_4$-Alkylsulfonyl substituiertes Alkyl, Alkoxy, Alkylcarbonyl, Alkoxycarbonyl, Alkylthio, Alkylsulfinyl oder Alkylsulfonyl, mit jeweils 1 bis 6 Kohlenstoffatomen in den Alkylgruppen, für jeweils gegebenenfalls durch Halogen substituiertes Alkenyl oder Alkinyl mit jeweils 2 bis 6 Kohlenstoffatomen oder für gegebenenfalls durch Cyano, Halogen oder $C_1$-$C_4$-Alkyl substituiertes Cycloalkyl mit 3 bis 6 Kohlenstoffatomen steht,

stehen,
und

(B) ein oder mehrere Herbizide aus der Gruppe der Verbindungen, welche aus

(B1) gegen monokotyle Schadpflanzen wirksamen Herbiziden mit Blatt- und/oder Bodenwirkung aus der Gruppe

(B1.1.1) Isoproturon,
(B1.1.2) Chloratoluron,
(B1.2.1) Flufenacet,
(B1.2.2) Pendimethalin,
(B1.2.3) Prosulfocarb,
(B1.3.1) Clodinafop-propargyl,
(B1.3.2) Diclofop-methyl,
(B1.3.3) Fenoxaprop-P-ethyl und Fenoxaprop-ethyl,
(B1.3.4) Quizalofop-P und dessen Salze und Ester und Quizalofop und dessen Salze und Ester,
(B1.3.5) Fluazifop-P und dessen Ester und Fluazifop und dessen Ester,
(B1.3.6) Haloxyfop und Haloxyfop-P unde deren Ester,
(B1.3.7) Propaquizafop (PM, S. 1021-1022),
(B1.3.8) Cyhalofop und dessen Ester,
(B1.4.1) Sethoxydim.
(B1.4.2) Cycloxydim,
(B1.4.3) Clethodim,
(B1.4.4) Clefoxidim,
(B1.4.5) Tralkoxidim,
(B1.5.1) Dimethenamid,
(B1.5.2) Penthoxamid,
(B1.5.3) Butachlor,
(B1.5.4) Pretilachlor,
(B1.6.1) Imazamethabenz-methyl
(B1.6.2) Simazin
(B1.6.3) Molinate

(B1.6.4) Thiobencarb
(B1.6.4) MY 100,
(B1.6.5) Anilofos,
(B1.6.6) Cafenstrole,
(B1.6.7) Mefenacet,
(B1.6.8) Fentrazamid,
(B1.6.9) Thiazopyr,
(B1.6.10) Oxadiazon,
(B1.6.11) Esprocarb,
(B1.6.12) Pyributicarb,
(B1.6.13) Azimsulfuron,
(B1.6.14) AEB391 und verwandte Azole,
(B1.6.15) Thenylchlor,
(B1.6.16) Pentoxazone,
(B1.6.17) Pyriminobac und Pyriminobac-methyl,
(B1.6.18) Flucarbazone und dessen Salze und
(B1.6.19) Procarbazone und dessen Salze,

(B2) überwiegend gegen dikotyle Schadpflanzen wirksamen Herbiziden aus der Gruppe

(B2.1.1.) Tribenuron-methyl,
(B2.1.2) Thifensulfuron und dessen Ester.
(B2.1.3) Prosulfuron,
(B2.1.4) Amidosulfuron.
(82.1.5) Chlorimuron und dessen Ester,
(B2.1.6) Halosulfuron und dessen Ester und Salze,
(B2.1.7) LAB271272. (= Tritosulfuron),
(B2.1.8) Bensulfuron-methyl,
(B2.1.9) Ethoxysulfuron,
(82.1.10) Cinosulfuron,
(B2.1.11) Pyrazosulfuron und dessen Ester,
(B2.1.12) Imazosulfuron,
(B2.1.13) Cyclosulfamuron,
(B2.2.1) MCPA,
(B2.2.2) 2,4-D, ,
(B2.2.3) Dichlorprop,
(B2.2.4) Mecoprop-(P),
(B2.2.5) Fluoroxypyr,
(B2.2.6) Dicamba,
(B2.2.7) Clopyralid,
(B2.2.8) Picloram,
(B.2.3.1) Bromoxynil,
(B.2.3.2) loxynil,
(B2.4.1) Fluoroglycofen-ethyl,
(B2.4.2) Aclonifen,
(B2.4.3) Acifluorfen und dessen Salze,
(B2.5.1) Cloransulam und dessen Ester
(B2.5.2) Florasulam,
(B2.6.1) Bentazone.
(B2.6.2) Bifenox,
(B2.6.3) Carfentrazone-ethyl,
(B2.6.4) Pyraflufen,
(B2.6.5) Pyridate,
(B2-6.6) Linuron,
(B2.6.7) Diflufenzopyr und dessen Salze,
(B2-6.8) Cinidon-ethyl,
(82.6.9) Clopyralid und dessen Salze und Ester,
(B2.6.10) Metribuzin.

(B2.6.1 1) Picolinafen,
(B2.6.12) Clomazone,
(B2.6.13) Bromobutide,
(82.6.14) Benfuresate,
(B2.6.15) Dithiopyr und
(B2.6.16) Tnctopyr und dessen Salze und Ester,

(B3) gegen monokotyle und dikotyle Schadpflanzen wirksamen Herbiziden aus der Gruppe

(B3.1.1) Metsulfuron und dessen Ester,
(B3.1.2) Triasulfuron,
(B3.1.3) Chlorsulfuron,
(B3.1.4) Iodosulfuron-methyl,
(B3.1.5) AEF060,
(B3.1.6) Sulfosulfuron ,
(B3.1.7) Flupyrsulfuron und dessen Salze,
(B3.1.8) Nicosulfuron,
(B3.1.9) Rimsulfuron,
(B3.1.10) Primisulfuron und Ester.
(B3.1.11) AEF360,
(B3.2.1) Cyanazin
(B3.2.2) Atrazin
(B3.2.3) Terbuthylazin,
(B3.2.4) Terbutryn,
(B3.3.1) Acebochlor
(B3.3.2) Metolachlor,
(B3.3.3) Alachlor,
(B3.4.1) Clomazone,
(B3.4.2) Diflufenican,
(B3.4.3) Fiumetsuiam,
(B3.4.4) Flurtamone,
(B3.4.5) Isoxaflutole,
(B3.4.6) Metosulam,
(B3.4.7) Metribuzin,
(B3.4.8) Paraquat (Salze),
(B3.4.9) Benoxacor
(B3.4.10) Sulcotrione,
(B3.4.11) Mesotrione,
(B3.4.12) Quinclorac,
(B3.4.13) Propanil,
(B3.4.14) Bispyribac, Bispyribac-Na,
(B3.4.15) LGC 40863 (Pyribenzoxim).
(B3.4.16) Oxadiargyl,
(B3.4.17) Norflurazon,
(B3.4.18) Fluometuron,
(B3.4.19) Methytarsunsäure und deren Salze (DSMA, MSMA).
(B3.4.20) Prometryn,
(B3.4.21) Trifluralin,

(B4) gegen monokotyle und dikotyle Schadpflanzen wirksame Herbizide, die speziell in toleranten Kulturen oder auf Nichtkulturland eingesetzt werden können, aus der Gruppe

(B4.1.1) Glufosinate,
(B4.1.2) Glufosinate-monoammoniumsalz,
(B4.1.3) L-Glufosinate,
(B4.1.4) L-Glufosinate-monvammoniumsalz,
(B4.1.5) Bilanafos.
(B4.2.1) Glyphosate,

(B4.2.2) Glyphosate-monoisopropylammoniumsalz,
(84.2.3) Glyphosate-natriumsalz,
(64.2.4) Sulfosate,
(B4.3.1) Imazapyr,
(B4.3.2) Imazethapyr
(B4.3.3) Imazamethabenz,und dessen Salze und Ester,
(B4.3.4) Imazamox und dessen Salze und Ester,
(B4.3.5) Imaraquin und dessen Salze und Ester,
(B4.3.6) Imazapic (AC 283,222) und dessen Salze und Ester
(B4.4.1) WC9717 oder CGA276854,
(B4.4.2) Azafenidin,
(B4.4.3) Diuron und
(B4.4.4) Oxyfluorfen,

und gegebenenfalls jeweils deren in der Landwirtschaft einsetzbaren Salze besteht, bedeuten.

2. Herbizidkombination nach Anspruch 1, **dadurch gekennzeichnet, dass** als Komponente (A) ein oder mehrere Verbindungen der Formel (II) und deren Salze,

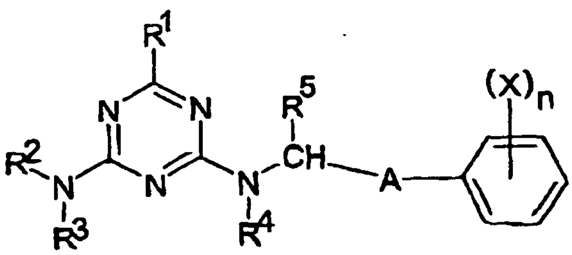

(II)

worin

$R^1$ $(C_1$-$C_6)$Alkyl,
das unsubstituiert oder durch einen oder mehrere Reste aus der Gruppe Halogen, Cyano, Nitro, Thiocyanato, $(C_1$-$C_4)$Alkoxy, $(C_1$-$C_4)$Alkylthio, $(C_{1-}C_4)$Alkylsulfinyl, $(C_1$-$C_4)$Alkylsulfonyl, $(C_2$-$C_4)$Alkenyl, $(C_2$-$C_4)$Alkinyl, Phenyl, das unsubstituiert oder substituiert ist, und Heterocyclyl mit 3 bis 6 Ringatomen und 1 bis 3 Heteroringatomen aus der Gruppe N, O und S, wobei der Ring unsubstituiert oder substituiert ist, substituiert ist,
$R^2$ und $R^3$ jeweils unabhängig voneinander Wasserstoff, Amino oder Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
$R^2$ und $R^3$ gemeinsam mit dem Stickstoffatom der Gruppe $NR^2R^3$ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
$R^4$ Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
$R^5$ Wasserstoff, Halogen, Nitro, Cyano, Thiocyanato oder einen Rest der Formel $-B^1$-$Y^1$, wobei $B^1$ und $Y^1$ wie unten definiert sind,
A einen Alkylenrest mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiocyanato und einen Rest der Formel $-B^2$-$Y^2$ substituiert ist.
$(X)_n$ n Substituenten X und dabei X jeweils unabhängig voneinander Halogen, $(C_1$-$C_6)$Alkyl, $(C_2$-$C_6)$Alkenyl, $(C_2$-$C_8)$Alkinyl, $(C_1$-$C_6)$Alkoxy, $(C_2$-$C_6)$Alkenyloxy, $(C_2$-$C_6)$Alkinyloxy, $[(C_1$-$C_4)$Alkyl]-carbonyl, $[(C_1$-$C_4)$Alkoxy]-carbonyl oder $[(C_1$-$C_4)$Alkylthio]-carbonyl, wobei die kohlenwasserstoffhaltigen Teile in den letztgenannten

9 Resten unsubstituiert oder substituiert sind, oder einen Rest der Formel -B°-R°, wobei B° wie unten definiert und R° einen aromatischen, gesättigten oder teilgesättigten carbocyclischen oder heterocyclischen Rest bedeutet, wobei der cyclische Rest substituiert oder unsubstituiert ist, oder zwei benachbarte Reste X gemeinsam einen ankondensierten Cydus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, $(C_1-C_4)$Alkyl und Oxo substituiert ist,
n 0, 1, 2, 3, 4 oder 5,
$B^0$,$B^1$,$B^2$ jeweils unabhängig voneinander eine direkte Bindung oder eine divalente Gruppe der Formel -O-, $-S(O)_p-$, $-S(O)_p-O-$, $-O-S(O)_p-$, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
$Y^1$,$Y^2$ jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N. O und S, wobei jeder der drei letztgenannten Reste unsubstituiert oder substituiert ist,

bedeuten, enthalten sind.

**3.** Herbizidkombination nach Anspruch 1, **dadurch gekennzeichnet, dass** als Komponente (A) eine oder mehrere Verbindungen der Formel (X),

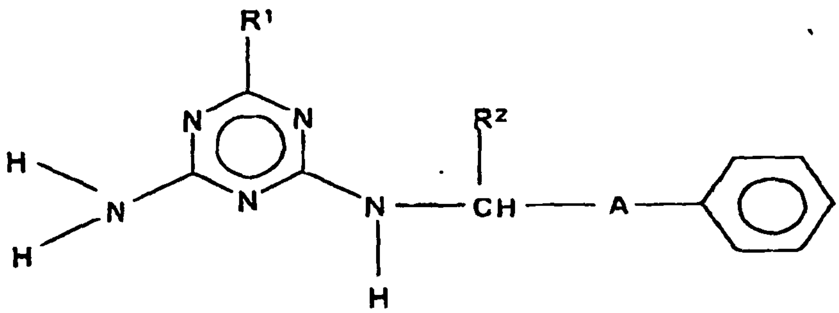

(X)

worin

$R^1$ $(C_1-C_4)$-Alkyl oder $(C_1-C_4)$-Haloalkyl;
$R^2$ $(C_1-C_4)$-Alkyl, $(C_3-C_6)$-Cycloalkyl oder $(C_3-C_8)$-Cycloalkyl-$(C_1-C_4)$-Alkyl und
A $-CH_2-$, $-CH_2-CH_2-$ oder $-CH_2-CH_2-CH_2-$

bedeuten, enthalten sind.

**4.** Herbizidkombination nach Anspruch 1, **dadurch gekennzeichnet, dass** als Komponente (A) eine oder mehrere Verbindungen der Formel (IV) oder deren Salze,

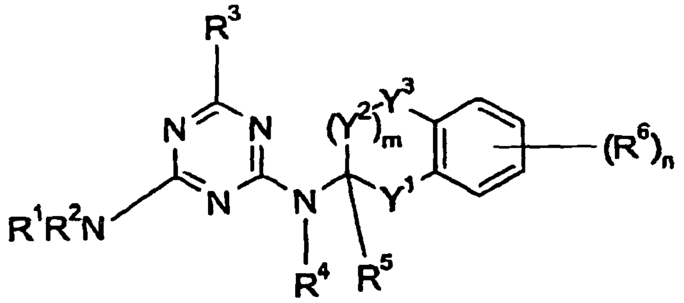

(IV)

worin $R^1$, $R^2$, $R^3$, $R^4$, $R^5$, $R^6$, $Y^1$, $Y^2$, $Y^3$, m und n wie in Anspruch 1 für Formel (IV) definiert ist, enthalten sind.

5. Herbizidkombination nach einem der Ansprüche 1 bis 3. **dadurch gekennzeichnet, dass** als Komponente (A) eine oder mehrere Verbindungen der Formeln (A1), (A2) und (A3) enthalten sind:

(A1)

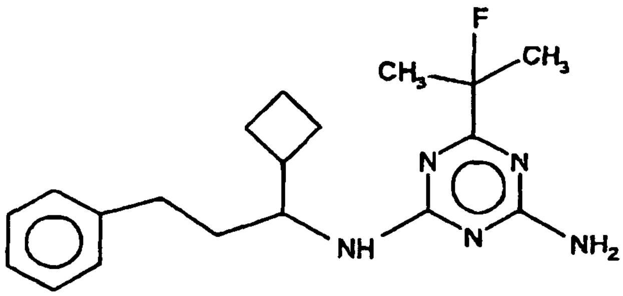

(A2)

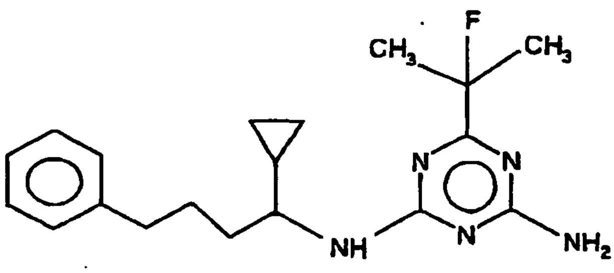

(A3)

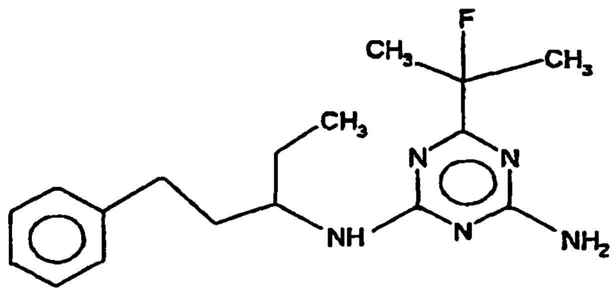

6. Herbizid-Kombinationen nach einem der Ansprüche 1 bis 5, **dadurch gekennzeichnet, daß** sie eine oder mehrere weitere Komponenten aus der Gruppe enthaltend Pflanzenschutzmittelwirkstoffe anderer Art, im Pflanzenschutz übliche Zusatzstoffe und Formulierungshilfsmittel enthalten.

7. Verfahren zur Bekämpfung von Schadpflanzen **dadurch gekennzeichnet, daß** man die Herbizide der Herbizid-Kombination, definiert gemäß einem oder mehreren der Ansprüche 1 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

8. Verfahren nach Anspruch 7 zur selektiven Bekämpfung von Schadpflanzen in Pflanzenkulturen.

9. Verfahren nach Anspruch 7 zur Bekämpfung von Schadpflanzen in Getreide.

10. Verwendung der nach einem der Ansprüche 1 bis 6 definierten Herbizid-Kombinationen zur Bekämpfung von Schadpflanzen.

**Claims**

1. A herbicide combination comprising a synergistically effective amount of components (A) and (B), where

(A) comprises one or more herbicidally active aminotriazine compounds (I) from the group of the compounds of the formulae (II), (III), (IV) and (V), where the compounds are:

- compounds of the formula (II) and their salts

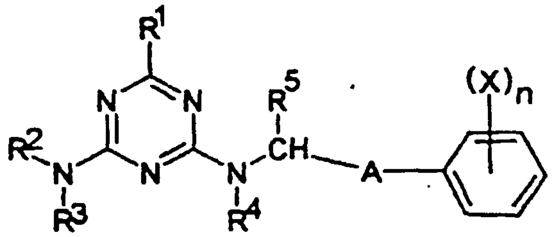

(II)

in which

$R^1$ is $(C_1-C_6)$-alkyl,
which is unsubstituted or substituted by one or more radicals selected from the group consisting of halogen, cyano, nitro, thiocyanato, $(C_1-C_4)$-alkoxy, $(C_1-C_4)$-alkylthio, $(C_1-C_4)$-alkylsulfinyl, $(C_1-C_4)$-alkylsulfonyl, $(C_2-C_4)$-alkenyl, $(C_2-C_4)$-alkynyl, phenyl, which is unsubstituted or substituted, and heterocyclyl having 3 to 6 ring atoms and 1 to 3 hetero ring atoms selected from the group consisting of N, O and S, the ring being unsubstituted or substituted,
$R^2$ and $R^3$ in each case independently of one another are hydrogen, amino or alkylamino or dialkylamino having in each case 1 to 6 carbon atoms in the alkyl radical, an acyclic or cyclic hydrocarbon radical or hydrocarbonoxy radical having in each case 1 to 10 carbon atoms or a heterocyclyl radical, heterocyclyloxy radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical or
$R^2$ and $R^3$ together with the nitrogen atom of the group $NR^2R^3$ are a heterocyclic radical having 3 to 6 ring atoms and 1 to 4 hetero ring atoms, where the further hetero ring atoms which are optionally present in addition to the nitrogen atom are selected from the group consisting of N, O and S and the radical is unsubstituted or substituted,
$R^4$ is hydrogen, amino, alkylamino or dialkylamino having in each case 1 to 6 carbon atoms in the alkyl radical, an acyclic or cyclic hydrocarbon radical or hydrocarbonoxy radical having in each case 1 to 10

carbon atoms, preferably having 1 to 6 carbon atoms or a heterocyclyl radical, heterocyclyloxy radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical,

$R^5$ is hydrogen, halogen, nitro, cyano, thiocyanato or a radical of the formula $-B^1-Y^1$, where $B^1$ and $Y^1$ are as defined below,

A is an alkylene radical having 1 to 5 straight-chain carbon atoms or alkenylene or alkynylene having in each case 2 to 5 straight-chain carbon atoms, where each of the three last-mentioned diradicals is unsubstituted or substituted by one or more radicals selected from the group consisting of halogen, nitro, cyano, thiocyanato and a radical of the formula $-B^2-Y^2$,

$(X)_n$ are n substituents X, where X in each case independently of one another, is halogen, $(C_1-C_6)$-alkyl, $(C_2-C_6)$-alkenyl, $(C_2-C_6)$-alkynyl, $(C_1-C_6)$-alkoxy, $(C_2-C_6)$-alkenyloxy, $(C_2-C_6)$-alkynyloxy, $[(C_1-C_4)$-alkyl]-carbonyl, $[(C_1-C_4)$-alkoxy]-carbonyl or $[(C_1-C_4)$-alkylthio]-carbonyl, where the hydrocarbon-containing moieties in the 9 last-mentioned radicals are unsubstituted or substituted, or is a radical of the formula $-B^0-R^0$, where $B^0$ is as defined below and $R^0$ is an aromatic, saturated or partially saturated carbocyclic or heterocyclic radical, where the cyclic radical is substituted or unsubstituted, or two adjacent radicals X together are a fused-on cycle having 4 to 6 ring atoms which is carbocyclic or contains hetero ring atoms selected from the group consisting of O, S and N and which is unsubstituted or substituted by one or more radicals selected from the group consisting of halogen, $(C_1-C_4)$-alkyl and oxo,

n is 0, 1, 2, 3, 4 or 5,

$B^0,B^1,B^2$ in each case independently of one another are a direct bond or a divalent group of the formula -O-, $-S(O)_p-$, $-S(O)_p-O-$, $-O-S(O)_p-$, -CO-, -O-CO-, -CO-O-, -NR'-, -O-NR'-, -NR'-O-, -NR'-CO-, -CO-NR'-, where p = 0, 1 or 2 and R' is hydrogen, alkyl having 1 to 6 carbon atoms, phenyl, benzyl, cycloalkyl having 3 to 6 carbon atoms or alkanoyl having 1 to 6 carbon atoms,

$Y^1,Y^2$ in each case independently of one another are H or an acyclic hydrocarbon radical having in each case, for example, 1 to 20 carbon atoms or a cyclic hydrocarbon radical having 3 to 8 carbon atoms or a heterocyclic radical having 3 to 9 ring atoms and 1 to 3 hetero ring atoms selected from the group consisting of N, O and S, where each of the three last-mentioned radicals is unsubstituted or substituted.

- compounds of the formula (III) or their salts

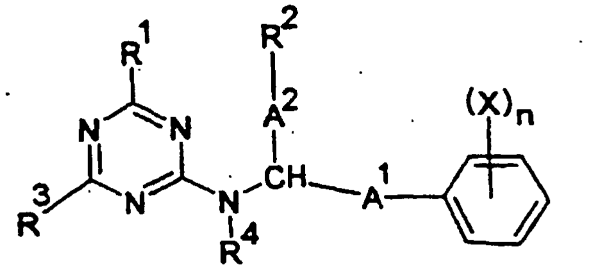

(III)

in which

$R^1$ is aryl, which is unsubstitued or substituted, or $(C_3-C_9)$-cycloalkyl, which is unsubstituted or substituted, or heterocyclyl, which is substituted or unsubstituted, or

$(C_1-C_6)$-alkyl, $(C_2-C_6)$-alkenyl or $(C_2-C_6)$-alkynyl,

where each of the 3 last-mentioned radicals is unsubstituted or substituted by one or more radicals selected from the group consisting of halogen, hydroxyl, cyano, nitro, thiocyanato, $(C_1-C_4)$-alkoxy, $(C_1-C_4)$-haloalkoxy, $(C_2-C_4)$-alkenyloxy, $(C_2-C_4)$-haloalkenyloxy, $(C_1-C_4)$-alkylthio, $(C_1-C_4)$-alkylsulfinyl, $(C_1-C_4)$-alkylsulfonyl, $(C_1-C_4)$-haloalkylsulfinyl, $(C_1-C_4)$-haloalkylsuffonyl and $(C_3-C_9)$-cycloalkyl, which is unsubstituted or substituted, and phenyl, which is unsubstituted or substituted, and heterocyclyl, which is unsubstituted or substituted, and radicals of the formulae R'-C(=Z')-, R'-C(=Z')-Z-, R'-Z-C(=Z')-, R'R"N-C(=Z')-, R'-Z-C(=Z')-O-, R'R"N-C(=Z')-Z-, R'-C(=Z')-NR"- and R'R"N-C(=Z')-NR'"-, in which R', R" and R'" in each case independently of one another are $(C_1-C_6)$-alkyl, aryl, aryl-$(C_1-C_6)$-alkyl,

($C_3$-$C_9$)-cycloalkyl or ($C_3$-$C_9$)-cycloalkyl-($C_1$-$C_6$)-alkyl, where each of the 5 last-mentioned radicals is unsubstituted or substituted, and in which Z and Z' independently of one another are each an oxygen or sulfur atom,

$R^2$ is ($C_3$-$C_9$)-cycloalkyl, which is unsubstituted or substituted, ($C_4$-$C_9$)-cycloalkenyl, which is unsubstituted or substituted, heterocyclyl, which is unsubstituted or substituted, or phenyl, which is unsubstituted or substituted,

$R^3$ is hydrogen, ($C_1$-$C_6$)-alkyl, aryl or ($C_3$-$C_9$)-cycloalkyl, where each of the 3 last-mentioned radicals is unsubstituted or substituted, or a radical of the formula -N($B^1$-$D^1$)($B^2$-$D^2$) or -NR'-N($B^1$-$D^1$)($B^2$-$D^2$), in which in each case $B^1$, $B^2$, $D^1$ and $D^2$ are as defined below and R' is hydrogen, ($C_1$-$C_6$)-alkyl or [($C_1$-$C_4$)-alkyl]-carbonyl,

$R^4$ is a radical of the formula -$B^3$-$D^3$, where $B^3$ and $D^3$ are as defined below,

$A^1$ is straight-chain alkylene having 1 to 5 carbon atoms or straight-chain alkenylene or alkynylene having in each case 2 to 5 carbon atoms, where each of the three last-mentioned diradicals is unsubstituted or substituted by one or more radicals selected from the group consisting of halogen, nitro, cyano, thiocyanato and radicals of the formula -$B^4$-$D^4$, where $B^4$ and $D^4$ are as defined below,

$A^2$ is a direct bond or straight-chain alkylene having 1 to 4 carbon atoms or straight-chain alkenylene or alkynylene having in each case 2 to 5 carbon atoms, where each of the three last-mentioned diradicals is unsubstituted or substituted by one or more radicals selected from the group consisting of halogen, nitro, cyano, thiocyanato and radicals of the formula -$B^5$-$D^5$, or a divalent radical of the formula $V^1$, $V^2$, $V^3$, $V^4$ or $V^5$,

$-CR^6R^7$-W*-$CR^8R^9$- ($V^1$)

$-CR^{10}R^{11}$-W*-$CR^{12}R^{13}$-$CR^{14}R^{15}$- ($V^2$)

$-CR^{16}R^{17}$-$CR^{18}R^{19}$-W*-$CR^{20}R^{21}$- ($V^3$)

$-CR^{22}R^{23}$-$CR^{24}R^{25}$-W*- ($V^4$)

$-CR^{26}R^{27}$-W*- ($V^5$)

where each of the radicals $R^6$ to $R^{27}$, in each case independently of one another, is hydrogen, halogen, nitro, cyano, thiocyanato or a radical of the formula -$B^6$-$D^6$,

W* is in each case an oxygen atom, a sulfur atom or a group of the formula N($B^7$-$D^7$) and

$B^5$, $B^6$, $B^7$, $D^5$, $D^6$ and $D^7$ are as defined below,

$B^1$, $B^2$, $B^3$ and $B^7$ in each case independently of one another are a direct bond or a divalent group of the formulae -C(=Z*)-, -C(=Z*)-Z**-, -C(=Z*)-NH- or -C(=Z*)-NR*-, where Z* = an oxygen or sulfur atom, Z** = an oxygen or sulfur atom and R* = ($C_1$-$C_6$)-alkyl, aryl, aryl-($C_1$-$C_6$)-alkyl, ($C_3$-$C_9$)-cycloalkyl or ($C_3$-$C_9$)-cycloalkyl-($C_1$-$C_6$)-alkyl, where each of the 5 last-mentioned radicals is unsubstituted or substituted,

$B^4$, $B^5$ and $B^6$ in each case independently of one another are a direct bond or a divalent group of the formulae -O-, -S(O)$_p$-, -S(O)$_p$-O-, -O-S(O)p-, -CO-, -O-CO-, -CO-O-, -S-CO-, -CO-S-, -S-CS-, -CS-S-, -O-CO-O-, -$NR^0$-, -O-$NR^0$-, -$NR^0$-O-, -$NR^0$-CO-, -CO-$NR^0$-, -O-CO-$NR^0$- or -$NR^0$-CO-O-, where p is the integer 0, 1 or 2 and $R^0$ is hydrogen, ($C_1$-$C_6$)-alkyl, aryl, aryl-($C_1$-$C_6$)-alkyl, ($C_3$-$C_9$)-cycloalkyl or ($C_3$-$C_9$)-cycloalkyl-($C_1$-$C_6$)-alkyl, where each of the 5 last-mentioned radicals is unsubsituted or substituted,

$D^1$, $D^2$, $D^3$, $D^4$, $D^5$ and $D^6$ in each case independently of one another are hydrogen, ($C_1$-$C_6$)-alkyl, aryl, aryl-($C_1$-$C_6$)-alkyl, ($C_3$-$C_9$)-cycloalkyl or ($C_3$-$C_9$)-cycloalkyl-($C_1$-$C_6$)-alkyl, where each of the 5 last-mentioned radicals is unsubstituted or substituted, or in each case two radicals $D^5$ of two groups -$B^5$-$D^5$ attached to one carbon atom are attached to one another forming an alkylene group having 2 to 4 carbon atoms which is unsubstituted or substituted by one or more radicals selected from the group consisting of ($C_1$-$C_4$)-alkyl and ($C_1$-$C_4$)-alkoxy,

$(X)_n$ are n substituents X, where X, in each case independently of one another, is halogen, hydroxyl, amino, nitro, formyl, carboxyl, cyano, thiocyanato, aminocarbonyl or ($C_1$-$C_6$)-alkyl, ($C_1$-$C_6$)-alkoxy, ($C_1$-$C_6$)-alkylthio, mono-($C_1$-$C_6$)-alkylamino, di-($C_1$-$C_4$)-alkylamino, ($C_2$-$C_6$)-alkenyl, ($C_2$-$C_6$)-alkynyl, [($C_1$-$C_6$)-alkyl]-carbonyl, [($C_1$-$C_6$)-alkoxy]-carbonyl, mono-($C_1$-$C_6$)-alkylaminocarbonyl, di-($C_1$-$C_4$)-alkylamino-carbonyl, N-($C_1$-$C_6$)-alkanoyl-amino or N-($C_1$-$C_4$)-alkanoyl-N-($C_1$-$C_4$)-alkylamino, where each of the 13 last-mentioned radicals is unsubsituted or substituted, preferably unsubstituted or substituted by one or more radicals selected from the group consisting of halogen, hydroxyl, amino, nitro, formyl, carboxyl, cyano, thiocyanato, $(C_1-C_4)$-alkoxy, $(C_1-C_4)$-haloalkoxy, $(C_1-C_4)$-alkylthio, $(C_1-C_4)$-haloalkylthio, mono-$(C_1-C_4)$-alkylamino, di-$(C_1-C_4)$-alkylamino, $(C_3-C_9)$-cycloalkyl, $(C_3-C_9)$-cycloalkylamino, $[(C_1-C_4)$-alkyl]-carbonyl, $[(C_1-C_4)$-alkoxy]-carbonyl, aminocarbonyl, mono-$(C_1-C_4)$-alkylamino-carbonyl, di-$(C_1-C_4)$-alkylaminocarbonyl, phenyl, phenoxy, phenylthio, phenylcarbonyl, heterocyclyl, heterocyclyloxy, heterocyclylthio and heterocyclylamino, where each of the 8 last-mentioned radicals is unsubstituted or substituted by one or more substituents selected from the group consisting of halogen, nitro, cyano, $(C_1-C_4)$-alkyl, $(C_1-C_4)$-alkoxy, $(C_1-C_4)$-alkylthio, $(C_1-C_4)$-haloalkyl, $(C_1-C_4)$-haloalkoxy, formyl, $(C_1-C_4)$-alkyl-carbonyl and $(C_1-C_4)$-alkoxy-carbonyl,
or $(C_3-C_9)$-cycloalkyl, $(C_3-C_9)$-cycloalkoxy, $(C_3-C_9)$-cycloalkylamino, phenyl, phenoxy, phenylthio, phenylcarbonyl, heterocyclyl, heterocyclyloxy, heterocyclylthio or heterocyclylamino, where each of the 11 last-mentioned radicals is unsubstituted or substituted, or two adjacent radicals X together are a fused-on cycle having 4 to 6 ring atoms which is carbocyclic or contains hetero ring atoms selected from the group consisting of O, S and N and which is unsubstituted or substituted by one or more radicals selected from the group consisting of halogen, $(C_1-C_4)$-alkyl and oxo,
n is 0, 1, 3, 4 or 5 and
"heterocyclyl" in the radicals mentioned above, independently of one another, is in each case a heterocyclic radical having 3 to 7 ring atoms and 1 to 3 heteroatoms selected from the group consisting of N, O and S,

where

a) the total of the carbon atoms in the radicals $A^1$ and $A^2$-$R^2$ is at least 6 carbon atoms or
b) the total of the carbon atoms in the radicals $A^1$ and $A^2$-$R^2$ is 5 carbon atoms and $A^1$ = a group of the formula $-CH_2-$ or $-CH_2CH_2-$ and $R^1$ = $(C_1-C_4)$-alkyl, $(C_1-C_4)$-haloalkyl, $(C_2-C_6)$-haloalkenyl or $(C_3-C_9)$-cycloalkyl, which is unsubstituted or substituted;

- compounds of the formula (IV) or their salts

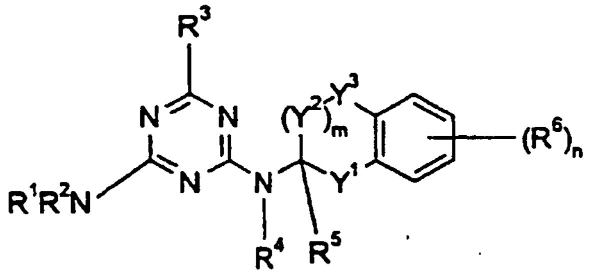

(IV)

in which

$R^1$ and $R^2$ in each case independently of one another are hydrogen, amino, alkylamino or dialkylamino having in each case 1 to 6 carbon atoms in the alkyl radical, an acyclic or cyclic hydrocarbon radical or hydrocarbonoxy radical having in each case 1 to 10 carbon atoms or a heterocyclyl radical, heterocyclyloxy radical, heterocyclylthio radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical or
$R^1$ and $R^2$ together with the nitrogen atom of the group $NR^1R^2$ are a heterocyclic radical having 3 to 6 ring atoms and 1 to 4 hetero ring atoms, where any further hetero ring atoms present in addition to the nitrogen atom are selected from the group consisting of N, O and S and the radical is unsubstituted or substituted,
$R^3$ is halogen, cyano, thiocyanato, nitro or a radical of the formula $-Z^1-R^7$,
$R^4$ is hydrogen, amino, alkylamino or dialkylamino having in each case 1 to 6 carbon atoms in the alkyl radical, an acyclic or cyclic hydrocarbon radical or hydrocarbonoxy radical having in each case 1 to 10 carbon atoms or a heterocyclyl radical, heterocyclyloxy radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical,

$R^5$ is halogen, cyano, thiocyanato, nitro or a radical of the formula $-Z^2-R^8$,
$R^6$, in the case where n=1, or the radicals $R^6$ in each case independently of one another, if n is greater than 1, is/are halogen, cyano, thiocyanato, nitro or a group of the formula $-Z^3-R^9$,
$R^7$, $R^8$, $R^9$ in each case independently of one another are

- hydrogen or
- an acyclic hydrocarbon radical, where carbon atoms in the chain may be substituted by heteroatoms selected from the group consisting of N, O and S, or
- a cyclic hydrocarbon radical or
- a heterocyclic radical,

where each of the 3 last-mentioned radicals is unsubstituted or substituted,
$Z^1$, $Z^2$, $Z^3$ in each case independently of one another are

- a direct bond or
- a divalent group of the formula -O-, $-S(O)_p-$, $-S(O)_p-O-$, $-O-S(O)_p-$, -CO-, -CS-, -S-CO-, -CO-S-, -O-CS-, -CS-O-, -S-CS-, -CS-S-, -OCO-, -CO-O-, -NR'-, -O-NR'-, -NR'-O-, -NR'-CO- or -CO-NR'-, where
p = 0, 1 or 2 and R' is hydrogen, alkyl having 1 to 6 carbon atoms, phenyl, benzyl, cycloalkyl having 3 to 6 carbon atoms or alkanoyl having 1 to 6 carbon atoms,

$Y^1$, $Y^2$, $Y^3$ and, if m is 2, 3 or 4, further groups $Y^2$ are, in each case independently of one another,

- a divalent group of the formula $CR^aR^b$, where $R^a$ and $R^b$ are identical or different and are in each case a radical selected from the group of the radicals possible for $R^7$ to $R^9$, or
- a divalent group of the formula -O-, -CO-, -C(=NR')-, -S(O)q-, -NR*- or -N(O)-, where q = 0, 1 or 2 and R* is hydrogen or alkyl having 1 to 4 carbon atoms, or
- $Y^1$ or $Y^3$ is a direct bond,

where two oxygen atoms of groups $Y^2$ and $Y^3$ are not adjacent,
m is 1, 2, 3 or 4,
n is 0, 1, 2, 3 or 4;

- substituted 2,4-diamino-1,3,5-triazines of the formula (V),

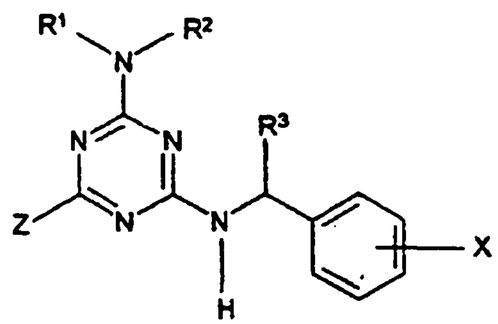

(V)

in which

$R^1$ is hydrogen or unsubstituted or hydroxyl-, cyano-, halogen- or $C_1$-$C_4$-alkoxy-substituted alkyl having 1 to 6 carbon atoms,
$R^2$ is hydrogen, formyl, in each case unsubstituted or cyano-, halogen- or $C_1$-$C_4$-alkoxy-substituted alkyl, alkylcarbonyl, alkoxycarbonyl or alkylsulfonyl having in each case 1 to 6 carbon atoms in the alkyl groups, or is in each case unsubstituted or cyano-, halo-$C_1$-$C_4$-alkyl-, $C_1$-$C_4$-alkoxy-, halo-$C_1$-$C_4$-alkoxy- or $C_1$-$C_4$-alkoxycarbonyl-substituted phenylcarbonyl, naphthylcarbonyl, phenylsulfonyl or naphthylsulfonyl,
$R^3$ is unsubstituted or cyano-, halogen- or $C_1$-$C_4$-alkoxy-substituted alkyl having 1 to 6 carbon atoms

or is unsubstituted or cyano-, halogen- or $C_1$-$C_4$-alkyl-substituted cycloalkyl having 3 to 6 carbon atoms,
X is a substituent selected from the group below:
hydroxyl, cyano, nitro, halogen, in each case unsubstituted or hydroxyl-, cyano- or halogen-substituted alkyl or alkoxy having in each case 1 to 6 carbon atoms, in each case unsubstituted or halogen-substituted alkylcarbonyl, alkoxycarbonyl, alkylthio, alkylsulfinyl or alkylsulfonyl having in each case 1 to 6 carbon atoms in the alkyl groups, in each case unsubstituted or hydroxyl-, cyano-, nitro-, halogen-, $C_1$-$C_4$-alkyl, $C_1$-$C_4$-haloalkyl-, $C_1$-$C_4$-alkoxy- or $C_1$-$C_{4}$-haloalkoxy-substituted phenyl or phenoxy, and
Z is hydrogen, hydroxyl, halogen, is in each case unsubstituted or hydroxyl-, cyano-, nitro-, halogen-, $C_1$-$C_4$-alkoxy-, $C_1$-$C_{4}$-alkylcarbonyl-, $C_1$-$C_4$-alkoxycarbonyl-, $C_1$-$C_4$-alkylthio-, $C_1$-$C_{4}$-alkylsulfinyl- or $C_1$-$C_4$-alkylsulfonyl-substituted alkyl, alkoxy, alkylcarbonyl, alkoxycarbonyl, alkylthio, alkylsulfinyl or alkylsulfonyl, having in each case 1 to 6 carbon atoms in the alkyl groups, is in each case unsubstituted or halogen-substituted alkenyl or alkynyl having in each case 2 to 6 carbon atoms or is unsubstituted or cyano-, halogen- or $C_1$-$C_4$-alkyl-substituted cycloalkyl having 3 to 6 carbon atoms,

and
(B) is one or more herbicides selected from the group of compounds consisting of

(B1) foliar- and/or soil-acting herbicides which are active against monocotyledonous harmful plants selected from the group consisting of

(B1.1.1) isoproturon,
(B1.1.2) chlorotoluron,
(B1.2.1) flufenacet,
(B1.2.2) pendimethalin,
(B1.2.3) prosulfocarb,
(B1.3.1) clodinafop-propargyl,
(B1.3.2) diclofop-methyl,
(B1.3.3) fenoxaprop-P-ethyl and fenoxaprop-ethyl,
(B1.3.4) quizalofop-P and its salts and esters and quizalofop and its salts and esters,
(B1.3.5) fluazifop-P and its esters and fluazifop and its esters,
(B1.3.6) haloxyfop and haloxyfop-P and their esters,
(B1.3.7) propaquizafop (PM, p. 1021-1022),
(B1.3.8) cyhalofop and its esters,
(B1.4.1) sethoxydim,
(B1.4.2) cycloxydim
(B1.4.3) clethodim,
(B1.4.4) clefoxidim,
(B1.4.5) tralkoxidim,
(B1.5.1) dimethenamid,
(B1.5.2) penthoxamid,
(B1.5.3) butachlor,
(B1.5.4) pretilachlor,
(B1.6.1) imazamethabenz-methyl
(B1.6.2) simazin
(B1.6.3) molinate
(B1.6.4) thiobencarb
(B1.6.4) MY 100,
(B1.6.5) anilofos,
(B1.6.6) cafenstrole,
(B1.6.7) mefenacet,
(B1.6.8) fentrazamid,
(B1.6.9) thiazopyr,
(B1.6.10) oxadiazon,
(B1.6.11) esprocarb,
(B1.6.12) pyributicarb,
(B1.6.13) azimsulfuron,
(B1.6.14) AEB391 and related azoles,
(B1.6.15) thenylchlor,

(B1.6.16) pentoxazone,
(B1.6.17) pyriminobac and pyriminobac-methyl,
(B1.6.18) flucarbazone and its salts and
(B1.6.19) procarbazone and its salts,

(B2) herbicides which are active predominantly against dicotyledonous harmful plants selected from the group consisting of

(B2.1.1) tribenuron-methyl,
(B2.1.2) thifensulfuron and its esters,
(B2.1.3) prosulfuron,
(B2.1.4) amidosuffuron,
(B2.1.5) chlorimuron and its esters,
(B2.1.6) halosulfuron and its esters and salts,
(B2.1.7) LAB271272, (= tritosulfuron),
(B2.1.8) bensulfuron-methyl,
(B2.1.9) ethoxysulfuron,
(B2.1.10) cinosulfuron,
(B2.1.11) pyrazosulfuron and its esters,
(B2.1.12) imazosulfuron,
(B2.1.13) cyclosulfamuron,
(B2.2.1) MCPA,
(B2.2.2) 2,4-D,
(B2.2.3) dichlorprop,
(B2.2.4) mecoprop-(P),
(B2.2.5) fluoroxypyr,
(B2.2.6) dicamba,
(B2.2.7) clopyralid,
(B2.2.8) picloram,
(B.2.3.1) bromoxynil,
(B.2.3.2) ioxynil,
(B2.4.1) fluoroglycofen-ethyl,
(B2.4.2) aclonifen,
(B2.4.3) acifluorfen and its salts,
(B2.5.1) cloransulam and its esters
(B2.5.2) florasulam,
(B2.6.1) bentazone,
(B2.6.2) bifenox,
(B2.6.3) carfentrazone-ethyl,
(B2.6.4) pyraflufen,
(B2.6.5) pyridate,
(B2.6.6) linuron,
(B2.6.7) diflufenzopyr and its salts,
(B2.6.8) cinidon-ethyl,
(B2.6.9) clopyralid and its salts and esters,
(B2.6.10) metribuzin,
(B2.6.11) picolinafen,
(B2.6.12) clomazone,
(B2.6.13) bromobutide,
(B2.6.14) benfuresate,
(B2.6.15) dithiopyr and
(B2.6.16) triclopyr and its salts and esters,

(B3) herbicides which are active against monocotyledonous and

dicotyledonous harmful plants selected from the group consisting of
(B3.1.1) metsulfuron and its esters,
(B3.1.2) triasulfuron,

(B3.1.3) chlorsulfuron,
(B3.1.4) iodosulfuron-methyl,
(B3.1.5) AEF060,
(B3.1.6) sulfosulfuron,
(B3.1.7) flupyrsulfuron and its salts,
(B3.1.8) nicosulfuron,
(B3.1.9) rimsulfuron,
(B3.1.10) primisulfuron and esters,
(B3.1.11) AEF360,
(B3.2.1) cyanazin
(B3.2.2) atrazin
(B3.2.3) terbuthylazin,
(B3.2.4) terbutryn,
(B3.3.1) acetochlor
(B3.3.2) metolachlor,
(B3.3.3) alachlor,
(B3.4.1) clomazone,
(B3.4.2) diflufenican,
(B3.4.3) flumetsulam,
(B3.4.4) flurtamone,
(B3.4.5) isoxaflutole,
(B3.4.6) metosulam,
(B3.4.7) metribuzin,
(B3.4.8) paraquat (salts),
(B3.4.9) benoxacor,
(B3.4.10) sulcotrione,
(B3.4.11) mesotrione,
(B3.4.12) quinclorac,
(B3.4.13) propanil,
(B3.4.14) bispyribac, bispyribac-Na,
(B3.4.15) LGC 40863 (pyribenzoxim),
(B3.4.16) oxadiargyl,
(B3.4.17) norflurazon,
(B3.4.18) fluometuron,
(B3.4.19) methylarsonic acid and its salts (DSMA, MSMA).
(B3.4.20) prometryn,
(B3.4.21) trifluralin,

(B4) herbicides which are active against monocotyledonous and dicotyledonous harmful plants and which can be employed specifically in tolerant crops or on non-crop land, selected from the group consisting of

(B4.1.1) glufosinate,
(B4.1.2) glufosinate monoammonium salt,
(B4.1.3) L-glufosinate,
(B4.1.4) L-glufosinate monoammonium salt,
(B4.1.5) bilanafos,
(B4.2.1) glyphosate,
(B4.2.2) glyphosate monoisopropylammonium salt,
(B4.2.3) glyphosate sodium salt,
(B4.2.4) sulfosate,
(B4.3.1) imazapyr,
(B4.3.2) imazethapyr
(B4.3.3) imazamethabenz, and its salts and esters,
(B4.3.4) imazamox and its salts and esters,
(B4.3.5) imazaquin and its salts and esters,
(B4.3.6) imazapic (AC 263,222) and its salts and esters
(B4.4.1) WC9717 or CGA276854,
(B4.4.2) azafenidin,

(B4.4.3) diuron and
(B4.4.4) oxyfluorfen,

and, if appropriate, their agriculturally useful salts.

**2.** The herbicide combination as claimed in claim 1 which comprises, as component (A), one or more compounds of the formula (II) and their salts,

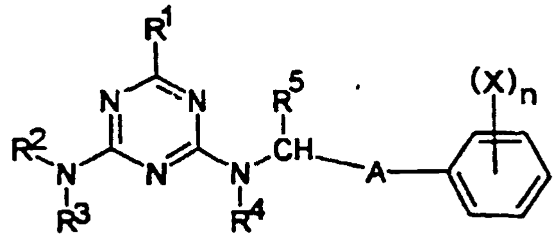

(II)

in which

$R^1$ is $(C_1\text{-}C_6)$-alkyl,
which is unsubstituted or substituted by one or more radicals selected from the group consisting of halogen, cyano, nitro, thiocyanato, $(C_1\text{-}C_4)$-alkoxy, $(C_1\text{-}C_4)$-alkylthio, $(C_1\text{-}C_4)$-alkylsulfinyl, $(C_1\text{-}C_4)$-alkylsulfonyl, $(C_2\text{-}C_4)$-alkenyl, $(C_2\text{-}C_4)$-alkynyl, phenyl, which is unsubstituted or substituted, and heterocyclyl having 3 to 6 ring atoms and 1 to 3 hetero ring atoms selected from the group consisting of N, O and S, the ring being unsubstituted or substituted,
$R^2$ and $R^3$ in each case independently of one another are hydrogen, amino or alkylamino or dialkylamino having in each case 1 to 6 carbon atoms in the alkyl radical, an acyclic or cyclic hydrocarbon radical or hydrocarbonoxy radical having in each case 1 to 10 carbon atoms or a heterocyclyl radical, heterocyclyloxy radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical or
$R^2$ and $R^3$ together with the nitrogen atom of the group $NR^2R^3$ are a heterocyclic radical having 3 to 6 ring atoms and 1 to 4 hetero ring atoms, where the further hetero ring atoms which are optionally present in addition to the nitrogen atom are selected from the group consisting of N, O and S and the radical is unsubstituted or substituted,
$R^4$ is hydrogen, amino, alkylamino or dialkylamino having in each case 1 to 6 carbon atoms in the alkyl radical, an acyclic or cyclic hydrocarbon radical or hydrocarbonoxy radical having in each case 1 to 10 carbon atoms, preferably having 1 to 6 carbon atoms or a heterocyclyl radical, heterocyclyloxy radical or heterocyclylamino radical having in each case 3 to 6 ring atoms and 1 to 3 hetero ring atoms selected from the group consisting of N, O and S, where each of the five last-mentioned radicals is unsubstituted or substituted, or an acyl radical,
$R^5$ is hydrogen, halogen, nitro, cyano, thiocyanato or a radical of the formula $-B^1\text{-}Y^1$, where $B^1$ and $Y^1$ are as defined below,
A is an alkylene radical having 1 to 5 straight-chain carbon atoms or alkenylene or alkynylene having in each case 2 to 5 straight-chain carbon atoms, where each of the three last-mentioned diradicals is unsubstituted or substituted by one or more radicals selected from the group consisting of halogen, nitro, cyano, thiocyanato and a radical of the formula $-B^2\text{-}Y^2$,
$(X)_n$ are n substituents X, where X in each case independently of one another, is halogen, $(C_1\text{-}C_6)$-alkyl, $(C_2\text{-}C_6)$-alkenyl, $(C_2\text{-}C_6)$-alkynyl, $(C_1\text{-}C_6)$-alkoxy, $(C_2\text{-}C_6)$-alkenyloxy, $(C_2\text{-}C_6)$-alkynyloxy, $[(C_1\text{-}C_4)\text{-alkyl}]$-carbonyl, $[(C_1\text{-}C_4)\text{-alkoxy}]$-carbonyl or $[(C_1\text{-}C_4)\text{-alkylthio}]$-carbonyl, where the hydrocarbon-containing moieties in the 9 last-mentioned radicals are unsubstituted or substituted, or is a radical of the formula -B°-R°, where B° is as defined below and R° is an aromatic, saturated or partially saturated carbocyclic or heterocyclic radical, where the cyclic radical is substituted or unsubstituted, or two adjacent radicals X together are a fused-on cycle having 4 to 6 ring atoms which is carbocyclic or contains hetero ring atoms selected from the group consisting of O, S and N and which is unsubsituted or substituted by one or more radicals selected from the group consisting of halogen, $(C_1\text{-}C_4)$-alkyl and oxo,
n is 0, 1, 2, 3, 4 or 5,
$B^0$,$B^1$,$B^2$ in each case independently of one another are a direct bond or a divalent group of the formula -O-,

-S(O)$_p$-, -S(O)$_p$-O-, -O-S(O)$_p$-, -CO-, -O-CO-, -CO-O-, -NR'-, -O-NR'-, -NR'-O-, -NR'-CO-, -CO-NR'-, where p = 0, 1 or 2 and R' is hydrogen, alkyl having 1 to 6 carbon atoms, phenyl, benzyl, cycloalkyl having 3 to 6 carbon atoms or alkanoyl having 1 to 6 carbon atoms,

$Y^1$,$Y^2$ in each case independently of one another are H or an acyclic hydrocarbon radical having in each case, for example, 1 to 20 carbon atoms or a cyclic hydrocarbon radical having 3 to 8 carbon atoms or a heterocyclic radical having 3 to 9 ring atoms and 1 to 3 hetero ring atoms selected from the group consisting of N, O and S, where each of the three last-mentioned radicals is unsubstituted or substituted.

**3.** The herbicide combination as claimed in claim 1, which comprises, as component (A), one or more compounds of the formula (X)

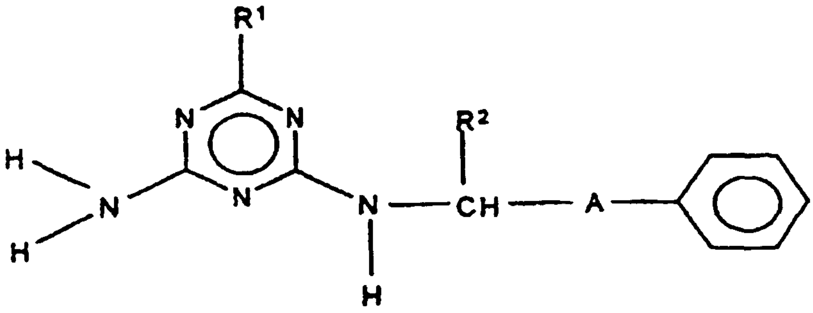

(X)

in which

$R^1$ is ($C_1$-$C_4$)-alkyl or ($C_1$-$C_4$)-haloalkyl;
$R^2$ is ($C_1$-$C_4$)-alkyl, ($C_3$-$C_6$)-cycloalkyl or ($C_3$-$C_6$)-cycloalkyl-($C_1$-$C_4$)-alkyl and
A is -$CH_2$-, -$CH_2$-$CH_2$- or -$CH_2$-$CH_2$-$CH_2$-.

**4.** The herbicide combination as claimed in claim 1, which comprises, as component (A), one or more compounds of the formula (IV) or salts thereof,

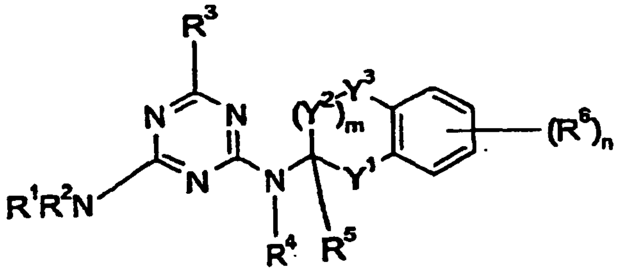

(IV)

in which $R^1$, $R^2$, $R^3$, $R^4$, $R^5$, $R^6$, $Y^1$, $Y^2$, $Y^3$, m and n are as defined in claim 1 for formula (IV).

**5.** The herbicide combination as claimed in any of claims 1 to 3, which comprises, as component (A), one or more compounds of the formulae (A1), (A2) and (A3):

(A1) 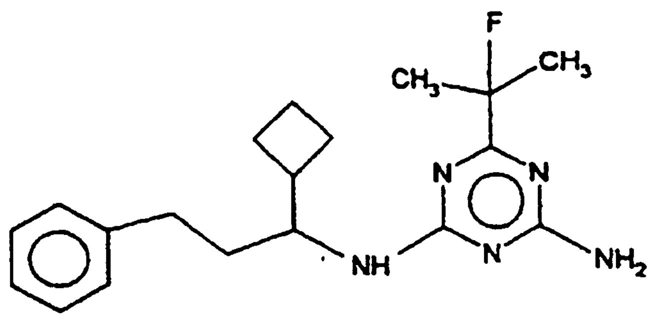

(A2) 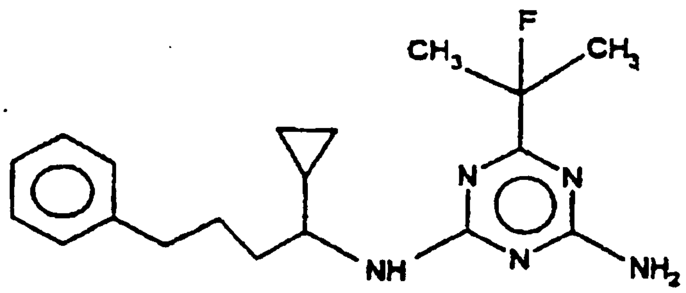

(A3) 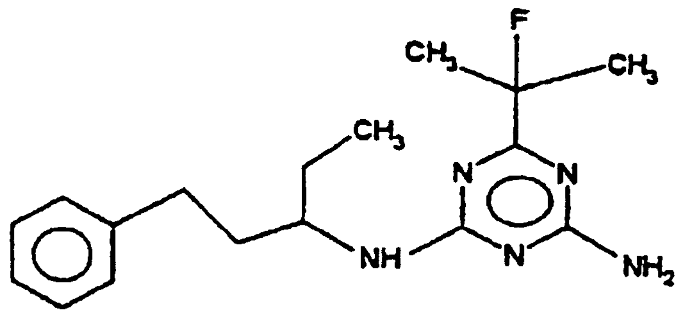

6. The herbicide combination as claimed in any of claims 1 to 5, which comprises one or more further components selected from the group consisting of crop protection agents of a different type, additives which are customary in crop protection and formulation auxiliaries.

7. A method for controlling harmful plants, which comprises applying the herbicides of the herbicide combination as defined in one or more of claims 1 to 6 together or separately, pre-emergence, post-emergence or pre- and post-emergence, to the plants, parts of plants, plant seeds or the area under cultivation.

8. The method as claimed in claim 7 for the selective control of harmful plants in crops of plants.

9. The method as claimed in claim 7 for the control of harmful plants in cereal.

10. The use of the herbicide combinations defined in any of claims 1 to 6 for controlling harmful plants.

**Revendications**

**1.** Combinaisons herbicides avec une teneur en composants (A) et (B) efficace de façon synergique, qui contiennent

(A) un ou plusieurs composés aminotriazine à efficacité herbicide (I) du groupe des composés de formules (II), (III), (IV) et (V), où les composés représentent :

les composés de formule (II) et leurs sels,

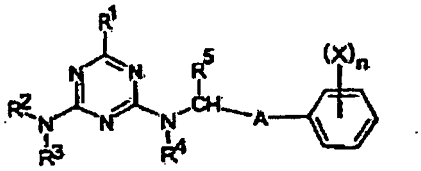

. (II)

dans laquelle

$R^1$ représente un groupe alkyle en $C_1$-$C_6$, qui est non substitué ou substitué par un ou plusieurs restes du groupe constitué d'un atome d'halogène, un groupe cyano, nitro, thiocyanato, alkoxy en $C_1$-$C_4$, alkylthio en $C_1$-$C_4$, alkylsulfinyle en $C_1$-$C_4$, alkylsulfonyle en $C_1$-$C_4$, alcényle en $C_2$-$C_4$, alcinyle en $C_2$-$C_4$, phényle, qui est non substitué ou substitué, et un groupe hétérocyclyle avec 3 à 6 atomes dans le cycle et 1 à 3 hétéroatomes du groupe constitué de N, O et S, où le cycle est non substitué ou substitué,
$R^2$ et $R^3$ représentent, chacun indépendamment l'un de l'autre, un atome d'hydrogène, un groupe amino ou alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone ou un reste hétérocyclyle, hétérocyclyloxy ou hétérocyclylamino avec chacun 3 à 6 atomes dans le cycle et 1 à 3 hétéroatomes du groupe constitué de N, O et S, où chacun des cinq derniers restes est non substitué ou substitué, ou un reste acyle ou
$R^2$ et $R^3$ représentent, conjointement avec l'atome d'azote du groupe $NR^2R^3$, un reste hétérocyclique avec 3 à 6 atomes dans le cycle et 1 à 4 hétéroatomes, où près de l'atome d'azote les autres hétéroatomes éventuels sont choisis dans le groupe constitué de N, O et S et le reste est non substitué ou substitué,
$R^4$ représente un atome d'hydrogène, un groupe amino, alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone, de préférence avec 1 à 6 atomes de carbone, ou un reste hétérocyclyle, hétérocyclyloxy ou hétérocyclylamino avec chacun 3 à 6 atomes dans le cycle et 1 à 3 hétéroatomes du groupe constitué de N; O et S, où chacun des cinq derniers restes est non substitué ou substitué, ou un reste acyle,
$R^5$ représente un atome d'hydrogène, un atome d'halogène, un groupe nitro, cyano, thiocyanato ou un reste de formule $-B^1-Y^1$, où $B^1$ et $Y^1$ sont tels que définis ci-dessous,
A représente un reste alkylène avec 1 à 5 atomes de carbone reliés linéairement ou alcénylène ou alcinylène avec chacun 2 à 5 atomes de carbone reliés linéairement, où chacun des trois derniers diradicaux est non substitué ou substitué par un ou plusieurs restes du groupe constitué d'un atome d'halogène, un groupe nitro, cyano, thiocyanato et un reste de formule $-B^2-Y^2$,
$(X)_n$ représente n substituants X et pour cela X représente, chacun indépendamment l'un de l'autre, un atome d'halogène, un groupe alkyle en $C_1$-$C_6$, alcényle en $C_2$-$C_6$, alcinyle en $C_2$-$C_6$, alkoxy en $C_1$-$C_6$, alcényloxy en $C_2$-$C_6$, alcinyloxy en $C_2$-$C_6$, (alkyle en $C_{1}$-$C_4$)-carbonyle, (alkoxy en $C_1$-$C_4$)-carbonyle ou (alkylthio en $C_1$-$C_4$)-carbonyle, où les parties hydrocarbonées dans les 9 derniers restes sont non substituées ou substituées, ou un reste de formule $-B^0R^0$, où B° est tel que défini ci-dessous et $R^0$ représente un reste aromatique, saturé ou partiellement saturé carbocyclique ou hétérocyclique, où le reste cyclique est substitué ou non substitué, ou deux restes X vicinaux forment conjointement un cycle condensé avec 4 à 6 atomes dans le cycle, qui est carbocyclique ou contient des hétéroatomes du groupe constitué de O, S et N et qui est non substitué ou substitué par un ou plusieurs restes du groupe constitué d'un atome d'halogène, un groupe alkyle en $C_1$-$C_4$ et oxo,
n vaut 0, 1, 2, 3, 4 ou 5,
$B^0$, $B^1$, $B^2$ représentent, chacun indépendamment l'un de l'autre, une liaison directe ou un groupe

bivalent Gruppe de formule -O-, -S(O)p,-S(O)p-O-, -O-S(O)p, -CO-, -O-CO-, -CO-O-, -NR'-, -O-NR'-, -NR'-O-, -NR'-CO-, -CO-NR'-, où p = 0, 1 ou 2 et R' est un atome d'hydrogène, un groupe alkyle avec 1 à 6 atomes de carbone, phényle, benzyle, cycloalkyle avec 3 à 6 atomes de carbone ou alkanoyle avec 1 à 6 atomes de carbone,

$Y^1$, $Y^2$ représentent, chacun indépendamment l'un de l'autre, H ou un reste hydrocarboné acyclique par exemple chacun avec 1 à 20 atomes de carbone ou un reste hydrocarboné cyclique avec 3 à 8 atomes de carbone ou un reste hétérocyclique avec 3 à 9 atomes dans le cycle et 1 à 3 hétéroatomes du groupe constitué de N, O et S, où chacun des trois derniers restes est non substitué ou substitué.

Composés de formule (III) ou leurs sels,

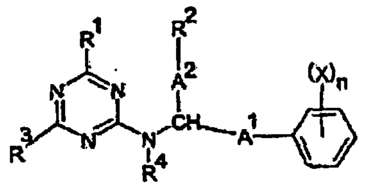

(III)

dans laquelle

$R^1$ représente un groupe aryle, qui est non substitué ou substitué, ou cycloalkyle en $C_3$-$C_9$, qui est non substitué ou substitué, ou hétérocyclyle, qui est substitué ou non substitué, ou un groupe alkyle en $C_1$-$C_6$, alcényle en $C_2$-$C_6$ ou alcinyle en $C_2$-$C_6$, où chacun des 3 derniers restes est non substitué ou substitué par un ou plusieurs restes du groupe constitué d'un atome d'halogène, un groupe hydroxy, cyano, nitro, thiocyanato, alkoxy en $C_1$-$C_4$, halogénoalkoxy en $C_1$-$C_4$, alcényleoxy en $C_2$-$C_4$, halogénoalkenyloxy en $C_2$-$C_4$, alkylthio en $C_1$-$C_4$, alkylsulfinyle en $C_1$-$C_4$, alkylsulfonyle en $C_1$-$C_4$, halogénoalkylsulfinyle en $C_1$-$C_4$, halogénoalkylsulfonyle en $C_1$-$C_4$ et cycloalkyle en $C_3$-$C_9$, qui est non substitué ou substitué, et phényle, qui est non substitué ou substitué, et hétérocyclyle, qui est non substitué ou substitué, et les restes de formules R'=-C(=Z')-, R'-C(=Z')- Z-, R'-Z-C(=Z')-, R'R"N-C(=Z')-, R'=-Z-C(=Z')-O-, R'R"N-C(=Z')-Z-, R'-C(=Z')-NR"- et R'R"N-C(=Z')-NR''', où R', R" et R''', chacun indépendamment l'un de l'autre, représentent un groupe alkyle en $C_1$-$C_6$, aryle, aryle-alkyle en $C_1$-$C_6$, cycloalkyle en $C_3$-$C_9$ ou cycloalkyle en $C_3$-$C_9$-alkyle en $C_1$-$C_6$, où chacun des 5 derniers restes est non substitué ou substitué, et où Z et Z', indépendamment l'un de l'autre, sont chacun un atome d'oxygène ou de soufre,

$R^2$ représente un groupe cycloalkyle en $C_3$-$C_9$, qui est non substitué ou substitué, cycloalcényle en $C_4$-$C_9$, qui est non substitué ou substitué, hétérocyclyle, qui est non substitué ou substitué, ou phényle, qui est non substitué ou substitué, ou

$R^3$ représente un atome d'hydrogène, un groupe alkyle en $C_1$-$C_6$, aryle ou cycloalkyle en $C_3$-$C_9$, où chacun des 3 derniers restes est non substitué ou substitué, ou un reste de formule $-N(B^1-D^1)(B^2-D^2)$ ou $-NR'-N(B^1-D^1)(B^{2-}D^2)$, où chaque $B^1$, $B^2$, $D^1$ et $D^2$ sont tels que définis ci-dessous et R' représente un atome d'hydrogène, un groupe alkyle en $C_{1-}C_6$ ou (alkyle en $C_1$-$C_4$)-carbonyle,

$R^4$ représente un reste de formule $-B^3-D^3$, où $B^3$ et $D^3$ sont tels que définis ci-dessous,

$A^1$ représente un reste alkylène linéaire avec 1 à 5 atomes de carbone ou alcénylène ou alcinylène linéaire avec chacun 2 à 5 atomes de carbone, où chacun des trois derniers diradicaux est non substitué ou substitué par un ou plusieurs restes du groupe constitué d'un atome d'halogène, un groupe nitro, cyano, thiocyanato et des restes de formule $-B^4-D^4$, où $B^4$ et $D^4$ sont tels que définis ci-dessous,

$A^2$ représente une liaison directe ou un reste alkylène linéaire avec 1 à 4 atomes de carbone ou alcénylène ou alcinylène linéaire avec chacun 2 à 5 atomes de carbone, où chacun des trois derniers diradicaux est non substitué ou substitué par un ou plusieurs restes du groupe constitué d'un atome d'halogène, un groupe nitro, cyano, thiocyanato et des restes de formule $-B^5-D^5$, ou un reste bivalent de formule $V^1$, $V^2$, $V^3$, $V^4$ ou $V^5$,

$$-CR^6R^7-W^*-CR^8R^9- \quad (V^1)$$

$$-CR^{10}R^{11}-W^*-CR^{12}R^{13}-CR^{14}R^{15}- \quad (V^2)$$

$-CR^{16}R^{17}-CR^{18}R^{19}-W^*-CR^{20}R^{21}-$ $(V^3)$

$-CR^{22}R^{23}-CR^{24}R^{25}-W^*-$ $(V^4)$

$-CR^{26}R^{27}-W^*-$ $(V^5)$

où chacun des restes $R^6$ à $R^{27}$, chacun indépendamment l'un de l'autre est un atome d'hydrogène, un atome d'halogène, un groupe nitro, cyano, thiocyanato ou un reste de formule $-B^6-D^6$,
chaque W* est un atome d'oxygène, un atome de soufre ou un groupe de formule $N(B^7-D^7)$ et
$B^5$, $B^6$, $B^7$, $D^5$, $D^6$ et $D^7$ sont tels que définis ci-dessous,
$B^1$, $B^2$, $B^3$ et $B^7$ représentent, chacun indépendamment l'un de l'autre, une liaison directe ou un groupe divalent de formules -C(=Z*)-,-C(=Z*)-Z**-, -C(=Z*)-NH- ou -C(=Z*)-NR*-, où Z* = un atome d'oxygène ou de soufre, Z** = un atome d'oxygène ou de soufre et R*=alkyle en $C_1$-$C_6$, aryle, arylealkyle en $C_1$-$C_6$, cycloalkyle en $C_3$-$C_9$ ou cycloalkyle en $C_3$-$C_9$-alkyle en $C_1$-$C_6$, où chacun des 5 derniers restes est non substitué ou substitué,
$B^4$, $B^5$ et $B^6$ représentent, chacun indépendamment l'un de l'autre, une liaison directe ou un groupe bivalent de formules -O-, -S(O)p,-$S(O)_p$-O-, -O-$S(O)_p$-, -CO-, -O-CO-, -CO-O-, -S-CO-, -CO-S-, -S-CS-, -CS-S-, -O-CO-O-, -$NR^0$-, -O-$NR^0$-, -$NR^0$-O-, -$NR^0$-CO-, -CO-$NR^0$-, -O-CO-$NR^0$- ou -$NR^0$-CO-O-, où p est le nombre entier 0, 1 ou 2 et $R^0$ est un atome d'hydrogène, un groupe alkyle en $C_1$-$C_6$, aryle, aryle-alkyle en $C_1$-$C_6$, cycloalkyle en $C_3$-$C_9$ ou cycloalkyle en $C_3$-$C_9$alkyle en $C_1$-$C_6$, où chacun des 5 derniers restes est non substitué ou substitué,
$D^1$ $D^2$, $D^3$, $D^4$, $D^5$ et $D^6$ représentent, chacun indépendamment l'un de l'autre, un atome d'hydrogène, un groupe alkyle en $C_1$-$C_6$, aryle, aryle-alkyle en $C_1$-$C_6$, cycloalkyle en $C_3$-$C_9$ ou cycloalkyle en $C_3$-$C_9$-alkyle en $C_1$-$C_6$, où chacun des 5 derniers restes est non substitué ou substitué, ou chaque couple de restes $D^5$ de deux groupes $-B^5-D^5$ reliés à un atome de carbone sont liés entre eux et donnent un groupe alkylène avec 2 à 4 atomes de carbone, qui est non substitué ou substitué par un ou plusieurs restes du groupe constitué de alkyle en $C_1$-$C_4$ et alkoxy en $C_1$-$C_4$,
(X)n représente n substituants X et pour cela chaque X représente, chacun indépendamment l'un de l'autre, un atome d'halogène, un groupe hydroxy, amino, nitro, formyle, carboxy, cyano, thiocyanato, aminocarbonyle ou alkyle en $C_1$-$C_6$, alkoxy en $C_1$-$C_6$, alkylthio en $C_1$-$C_6$, mono-alkylamino en $C_1$-$C_6$, di-alkylamino en $C_1$-$C_4$, alcényle en $C_2$-$C_6$, alcinyle en $C_2$-$C_6$, (alkyle en $C_1$-$C_6$)carbonyle, (alkoxy en $C_1$-$C_6$)carbonyle, mono-alkyle en $C_1$-$C_6$-amino- carbonyle, di-alkylamino en $C_1$-$C_4$-carbonyle, N-alkanoyle en $C_1$-$C_6$-amino ou N-alkanoyle en $C_1$-$C_4$-N-alkyle en $C_1$-$C_4$-amino, où chacun des 13 derniers restes est non substitué ou substitué, de préférence non substitué ou substitué par un ou plusieurs restes du groupe constitué d'un atome d'halogène, un groupe hydroxy, amino, nitro, formyle, carboxy, cyano, thiocyanato, alkoxy en $C_1$-$C_4$, halogénoalkoxy en $C_1$-$C_4$, alkylthio en $C_1$-$C_4$, halogénoalkylthio en $C_1$-$C_4$, mono-alkylamino en $C_1$-$C_4$, di-alkylamino en $C_1$-$C_4$, cycloalkyle en $C_3$-$C_9$, cycloalkyle en $C_3$-$C_9$-amino, (alkyl en $C_1$-$C_4$)carbonyle, (alkoxy en $C_1$-$C_4$)carbonyle, aminocarbonyle, mono-alkyle en $C_1$-$C_4$-aminocarbonyle, di-alkylamino en $C_1$-$C_4$-carbonyle, phényle, phénoxy, phénylthio, phénylcarbonyle, hétérocyclyle, hétérocyclyloxy, hétérocyclylthio et hétérocyclylamino, où chacun des 8 derniers restes est non substitué ou substitué par un ou plusieurs substituants du groupe constitué d'un atome d'halogène, un groupe nitro, cyano, alkyle en $C_1$-$C_4$, alkoxy en $C_1$-$C_4$, alkylthio en $C_1$-$C_4$, halogénoalkyle en $C_1$-$C_4$, halogénoalkoxy en $C_1$-$C_4$, formyle, alkyl en $C_1$-$C_4$-carbonyle et alkoxy en $C_1$-$C_4$-carbonyle,
ou cycloalkyle en $C_3$-$C_9$, cycloalkoxy en $C_3$-$C_9$, (cycloalkyle en $C_3$-$C_9$) amino, phényle, phénoxy, phénylthio, phénylcarbonyle, hétérocyclyle, hétérocyclyloxy, hétérocyclylthio ou hétérocyclylamino, où chacun des 11 derniers restes est non substitué ou substitué, ou deux restes X voisins forment conjointement un cycle condensé avec 4 à 6 atomes dans le cycle, qui est carbocyclique ou contient des hétéroatomes du groupe constitué de O, S et N et qui est non substitué ou substitué par un ou plusieurs restes du groupe constitué d'un atome d'halogène, un groupe alkyle en $C_1$-$C_4$ et oxo,
n vaut 0, 1, 3, 4 ou 5 et
« hétérocyclyle » représente dans les restes mentionnés ci-dessus, indépendamment l'un de l'autre, chacun un reste hétérocyclique avec 3 à 7 atomes dans le cycle et 1 à 3 hétéroatomes du groupe constitué de N, O et S, où

a) la somme totale des atomes de carbone dans les restes $A^1$ et $A^2-R^2$ s'élève à au moins 6 atomes de carbone ou

b) la somme totale des atomes de carbone dans les restes $A^1$ et $A^2-R^2$ s'élève à 5 atomes de

carbone et $A^1$= un groupe de formule $-CH_2-$ ou $-CH_2CH_2-$ ainsi que $R^1$= alkyle en $C_1$-$C_4$, halogénoalkyle en $C_1$-$C_4$, halogénoalcényle en $C_2$-$C_6$ ou cycloalkyle en $C_3$-$C_9$, qui est non substitué ou substitué,

ou

Composés de formule (IV) ou leurs sels,

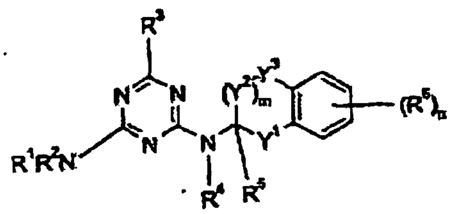

(IV)

dans laquelle

$R^1$ et $R^2$ représentent, chacun indépendamment l'un de l'autre, un atome d'hydrogène, un groupe amino, alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone ou un reste hétérocyclyle, hétérocyclyloxy, hétérocyclylthio ou hétérocyclylamino avec chacun 3 à 6 atomes dans le cycle et 1 à 3 hétéroatomes du groupe constitué de N, O et S, où chacun des cinq derniers restes est non substitué ou substitué, ou
un reste acyle ou
$R^1$ et $R^2$ représentent, conjointement avec l'atome d'azote du groupe $NR^1R^2$, un reste hétérocyclique avec 3 à 6 atomes dans le cycle et 1 à 4 hétéroatomes, où, en plus de l'atome d'azote, les autres hétéroatomes éventuels sont choisis dans le groupe constitué de N, O et S et le reste est non substitué ou substitué,
$R^3$ représente un atome d'halogène, un groupe cyano, thiocyanato, nitro ou un reste de formule $-Z^1-R^7$,
$R^4$ représente un atome d'hydrogène, un groupe amino, alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone ou un reste hétérocyclyle, hétérocyclyloxy ou hétérocyclylamino avec chacun 3 à 6 atomes dans le cycle et 1 à 3 hétéroatomes du groupe constitué de N, O et S, où chacun des cinq derniers restes est non substitué ou substitué, ou un reste acyle,
$R^5$ représente un atome d'halogène, un groupe cyano, thiocyanato, nitro ou un reste de formule $-Z^2-R^8$,
$R^6$, quand n=1, ou les restes $R^6$, chacun indépendamment l'un de l'autre, quand n est supérieur à 1, représentent un atome d'halogène, un groupe cyano, thiocyanato, nitro ou un groupe de formule $-Z^3-R^9$
$R^7$, $R^8$, $R^9$ représentént,chacun indépendamment l'un de l'autre,

1. un atome d'hydrogène ou un reste hydrocarboné acyclique, où dans la chaîne des atomes de carbone peuvent être substitués par des hétéroatomes du groupe constitué de N, O et S, ou
2. un reste hydrocarboné cyclique ou
3. un reste hétérocyclique,

où chacun des 3 derniers restes est non substitué ou substitué,
$Z^1$, $Z^2$, $Z^3$ représentent, chacun indépendamment l'un de l'autre,

1. une liaison directe ou
2. un groupe bivalent de formule -O-, -S(O)p-, -S(O)p-O-, -O-S(O)p-, -CO- , -CS-, -S-CO-, -CO-S-, -O-CS-, -CS-O-, -S-CS-, -CS-S-, -OCO-,
3. -CO-O-, -NR'-, -O-NR'-, -NR'-O-, -NR'-CO- ou -CO-NR'-, où p = 0, 1 ou 2 et R' est un atome d'hydrogène, un groupe alkyle avec 1 à 6 atomes de carbone, phényle, benzyle, cycloalkyle avec 3 à 6 atomes de carbone ou alkanoyle avec 1 à 6 atomes de carbone,

$Y^1$, $Y^2$, $Y^3$ et weitere Gruppen $Y^2$, quand m vaut 2, 3 ou 4, représentent, chacun indépendamment l'un de l'autre,

1. un groupe bivalent de formule $CR^aR^b$, où $R^a$ et $R^b$ sont identiques ou différents et chaque fois un reste du groupe des restes possibles pour $R^7$ à $R^9$ , ou
2. un groupe bivalent de formule -O-, -CO-, -C(=NR*)-, -S(O)q-, -NR*- ou -N(O)-, où q = 0, 1 ou 2 et R* est un atome d'hydrogène ou un groupe alkyle avec 1 à 4 atomes de carbone, ou
3. $Y^1$ ou $Y^3$ une liaison directe,

où deux atomes d'oxygène des groupes $Y^2$ et $Y^3$ ne sont pas voisins,
m vaut 1, 2, 3 ou 4,
n vaut 0, 1, 2, 3 ou 4.

2,4-Diamino-1,3,5-triazines substituées de formule générale (V),

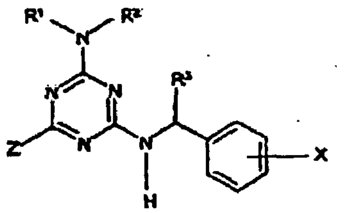

(V)

dans laquelle

$R^1$ représente un atome d'hydrogène ou un groupe alkyle avec 1 à 6 atomes de carbone éventuellement substitué par un groupe hydroxy, cyano, un atome d'halogène ou un groupe alkoxy en $C_1$-$C_4$,
$R^2$ représente un atome d'hydrogène, un groupe formyle, un groupe alkyle, alkylcarbonyle, alkoxycarbonyle ou alkylsulfonyle avec chacun 1 à 6 atomes de carbone dans les groupes alkyles chacun éventuellement substitué par un groupe cyano, un atome d'halogène ou alkoxy en $C_1$-$C_4$, ou un groupe phénylecarbonyle, naphthylcarbonyle, phénylsulfonyle ou naphthylsulfonyle chacun éventuellement substitué par un groupe cyano, halogéno-alkyle en $C_1$-$C_4$, alkoxy en $C_1$-$C_4$, halogéno-alkoxy en $C_1$-$C_4$ ou alkoxy en $C_1$-$C_4$-carbonyle,
$R^3$ représente un groupe alkyle avec 1 à 6 atomes de carbone éventuellement substitué par un groupe cyano, un atome d'halogène ou un groupe alkoxy en $C_1$-$C_4$ ou cycloalkyle avec 3 à 6 atomes de carbone éventuellement substitué par un groupe cyano, un atome d'halogène ou un groupe alkyle en $C_1$-$C_4$,
X représente un substituant du groupe suivant:
hydroxy, cyano, nitro, un atome d'halogène, alkyle ou alkoxy avec chacun 1 à 6 atomes de carbone chacun éventuellement substitué par hydroxy, cyano ou un atome d'halogène, alkylcarbonyle, alkoxycarbonyle, alkylthio, alkylsulfinyle ou alkylsulfonyle avec chacun 1 à 6 atomes de carbone dans les groupes alkyles chacun éventuellement substitué par un atome d'halogène, phényle ou phénoxy chacun éventuellement substitué par hydroxy, cyano, nitro, un atome d'halogène, un groupe alkyle en $C_1$-$C_4$, halogénoalkyle en $C_1$-$C_4$, alkoxy en $C_1$-$C_4$ ou halogénoalkoxy en $C_1$-$C_4$, et
Z représente un atome d'hydrogène, un groupe hydroxy, un atome d'halogène, un groupe alkyle, alkoxy, alkylcarbonyle, alkoxycarbonyle, alkylthio, alkylsulfinyle ou alkylsulfonyle, avec chacun 1 à 6 atomes de carbone dans les groupes alkyles éventuellement substitués par un groupe hydroxy, cyano, nitro, un atome d'halogène, alkoxy en $C_1$-$C_4$, alkyle en $C_1$-$C_4$-carbonyle, alkoxy en $C_1$-$C_4$-carbonyle, alkyle en $C_1$-$C_4$-thio, alkyle en $C_1$-$C_4$-sulfinyle ou alkyle en $C_1$-$C_4$-sulfonyle, alcényle ou alcinyle avec chacun 2 à 6 atomes de carbone chacun éventuellement substitué par un atome d'halogène ou cycloalkyle avec 3 à 6 atomes de carbone éventuellement substitué par un groupe cyano, un atome d'halogène ou un groupe alkyle en $C_1$-$C_4$.

et
(B) un ou plusieurs herbicides du groupe des composés parmi

(B1) les herbicides efficaces contre les plantes adventices monocotylédones avec effet sur les feuilles et/ou au sol du groupe

(B1.1.1) Isoproturon,

(B1.1.2) Chlorotoluron,
(B1.2.1) Flufenacet,
(B1.2.2) Pendimethalin,
(B1.2.3) Prosulfocarb,
(B1.3.1) Clodinafop-propargyl,
(B1.3.2) Diclofop-methyl,
(B1.3.3) Fenoxaprop-p-ethyl et Fenoxaprop-ethyl,
(B1.3.4) Quizalofop-P et ses sels et esters et Quizalofop et ses sels et esters,
(B1.3.5) Fluazifop-P et ses esters et Fluazifop et ses esters,
(B1.3.6) Haloxyfop et Haloxyfop-P- et leurs esters,
(B1.3.7) Propaquizafop (PM, p 1021-1022)
(B1.3.8) Cyhalofop et ses esters,
(B1.4.1) Sethoxydim
(B1.4.2) Cycloxydim
(B1.4.3) Clethodim,
(B1.4.4) Clefoxidim,
(B1.4.5) Tralkoxidim,
(B1.5.1) Dimethenamid,
(B1.5.2) Penthoxamid,
(B1.5.3) Butachlor,
(B1.5.4) Pretilachlor,
(B1.6.1) Imazamethabenz-methyl,
(B1.6.2) Simazin,
(B1.6.3) Molinate,
(B1.6.4) Thiobencarb,
(B1.6.4) MY 100,
(B1.6.5) Anilofos,
(B1.6.6) Cafenstrole,
(B1.6.7) Mefenacet,
(B1.6.8) Thiazopyr,
(B1.6.10) Oxadiazon,
(B1.6.11) Esprocarb,
(B1.6.12) Pyributicarb,
(B1.6.13) Azimsulfuron,
(B1.6.14) AEB391 et azols utilisés,
(B1.6.15) Thenylchlor,
(B1.6.16) Pentoxazone,
(B1.6.17) Pyriminobac et Pyriminobac-methyl,
(B1.6.18) Flucarbazone et ses sels et
(B1.6.19) Procarbazone et ses sels,

(B2) herbicides efficaces principalement contre les plantes adventices monocotylédones du groupe

(B2.1.1.) Tribenuron-methyl,
(B2.1.2) Thifensulfuron et dessen Ester,
(B2.1.3) Prosulfuron,
(B2.1.4) Amidosulfuron,
(B2.1.5) Chlorimuron et ses esters,
(B2.1.6) Halosulfuron et ses esters et sels,
(B2.1.7) LAB271272, (=Tritosulfuron),
(B2.1.8) Bensulfuron-methyl
(B2.1.9) Ethoxysulfuron,
(B2.1.10) Cinosulfuron,
(B2.1.11) Pyrazosulfuron et ses esters,
(B2.1.12) Imazosulfuron,
(B2.1.13) Cyclosulfamuron,
(B2.2.1) MCPA,
(B2.2.2) 2,4-D,

(B2.2.3) Dichlorprop,
(B2.2.4) Mecoprop-(P),
(B2.2.5) Fluoroxypyr,
(B2.2.6) Dicamba,
(B2.2.7) Clopyralid,
(B2.2.8) Picloram,
(B.2.3.1) Bromoxynil,
(B.2.3.2) Ioxynil,
(B2.4.1) Fluoroglycofen-ethyl,
(B2.4.2) Aclonifen,
(B2.4.3) Acifluorfen et ses sels,
(B2.5.1) Cloransulam et ses esters,
(B2.5.2) Florasulam,
(B2.6.1) Bentazone,
(B2.6.2) Bifenox,
(B2.6.3) Carfentrazone-ethyl,
(B2.6.4) Pyraflufen,
(B2.6.5) Pyridate,
(B2.6.6) Linuron,
(B2.6.7) Diflufenzopyr et ses sels,
(B2.6.8) Cinidon-ethyl,
(B2.6.9) Clopyralid et ses sels et esters,
(B2.6.10) Metribuzin,
(B2.6.11) Picolinafen,
(B2.6.12) Clomazone,
(B2.6.13) Bromobutide,
(B2.6.14) Benfuresate,
(B2.6.15) Dithiopyr et
(B2.6.16) Triclopyr et ses sels et esters,

(B3) herbicides efficaces contre les plantes adventices monocotylédones et dicotylédones du groupe

(B3.1.1) Metsulfuron et ses esters,
(B3.1.2) Triasulfuron,
(B3.1.3) Chlorsulfuron,
(B3.1.4) Iodosulfuron-methyl,
(B3.1.5) AEF060,
(B3.1.6) Sulfosulfuron,
(B3.1.7) Flupyrsulfuron et ses sels,
(B3.1.8) Nicosulfuron,
(B3.1.9) Rimsulfuron,
(B3.1.10) Primisulfuron et esters,
(B3.1.11) AEF360,
(B3.2.1) Cyanazin,
(B3.2.2) Atrazin,
(B3.2.3) Terbuthylazin,
(B3.2.4) Terbutryn,
(B3.3.1) Acetochlor,
(B3.3.2) Metolachlor,
(B3.3.3) Alachlor,
(B3.4.1) Chlomazone,
(B3.4.2) Diflufenican,
(B3.4.3) Flumetsulam,
(B3.4.4) Flurtamone,
(B3.4.5) Isoxaflutole,
(B3.4.6) Metosulam,
(B3.4.7) Metribuzin,
(B3.4.8) Paraquat (sels),

(B3.4.9) Benoxacor,
(B3.4.10) Sulcotrione,
(B3.4.11) Mesotrione,
(B3.4.12) Quinclorac,
(B3.4.13) Propanil,
(B3.4.14) Bispyribac, Bispyribac-Na,
(B3.4.15) LGC 10863 (Pyribenzoxim),
(B3.4.16) Oxadiargyl,
(B3.4.17) Norflurazon,
(B3.4.18) Fluometuron,
(B3.4.19)
(B3.4.20) Prometryn,
(B3.4.21) Trifluralin,

(B4) herbicides efficacies contre des plantes adventices monocotylédones et dicotylédones, qui peuvent être utilisés en particulier dans des cultures tolérantes ou sur des terres non cultivées, du groupe

(B4.1.1) Glufosinate,
(B4.1.2) sel de Glufosinate-monoammonium,
(B4.1.3) L-Glufosinate,
(B4.1.4) sel de L-Glufosinate-monoammonium,
(B4.1.5) Bilanafos,
(B4.2.1) Glyphosate,
(B4.2.2) sel de Glyphosate-monoisopropylammonium,
(B4.2.3) sel de Glyphosate-sodium,
(B4.2.4) Sulfosate,
(B4.3.1) Imazapyr,
(B4.3.2) Imazethapyr,
(B4.3.3) Imazamethabenz et ses sels et esters,
(B4.3.4) Imazamox et ses sels et esters,
(B4.3.5) Imazaquin et ses sels et esters,
(B4.3.6) Imazapic (AC 263,222) et ses sels et esters,
(B4.4.1) WC9717 ou CGA276854,
(B4.4.2) Azafenidin,
(B4.4.3) Diuron et
(B4.4.4) Oxyfluorfen,

et éventuellement chaque fois leurs sels utilisables dans l'agriculture.

2. Combinaison herbicide selon la revendication 1, **caractérisée en ce qu'**elle contient en tant que composant (A) un ou plusieurs composés de formule (II) et leurs sels,

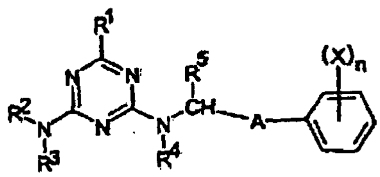

. (II)

dans laquelle

$R^1$ représente un groupe alkyle en $C_1$-$C_6$, qui est non substitué ou substitué par un ou plusieurs restes du groupe constitué d'un atome d'halogène, un groupe cyano, nitro, thiocyanato, alkoxy en $C_1$-$C_4$, alkylthio en $C_1$-$C_4$, alkylsulfinyle en $C_1$-$C_4$, alkylsulfonyle en $C_1$-$C_4$, alcényle en $C_2$-$C_4$, alcinyle en $C_2$-$C_4$, phényle, qui est non substitué ou substitué, et un groupe hétérocyclyle avec 3 à 6 atomes dans le cycle et 1 à 3 hétéroatomes du groupe constitué de N, O et S, où le cycle est non substitué ou substitué,
$R^2$ et $R^3$ représentent, chacun indépendamment l'un de l'autre, un atome d'hydrogène, un groupe amino ou

alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone ou un reste hétérocyclyle, hétérocyclyloxy ou hétérocyclylamino avec chacun 3 à 6 atomes dans le cycle et 1 à 3 hétéroatomes du groupe constitué de N, O et S, où chacun des cinq derniers restes est non substitué ou substitué, ou un reste acyle ou $R^2$ et $R^3$ représentent, conjointement avec l'atome d'azote du groupe $NR^2R^3$, un reste hétérocyclique avec 3 à 6 atomes dans le cycle et 1 à 4 hétéroatomes, où près de l'atome d'azote les autres hétéroatomes éventuels sont choisis dans le groupe constitué de N, O et S et le reste est non substitué ou substitué,

$R^4$ représente un atome d'hydrogène, un groupe amino, alkylamino ou dialkylamino avec chacun 1 à 6 atomes de carbone dans le reste alkyle, un reste hydrocarboné ou hydroxycarboné acyclique ou cyclique avec chacun 1 à 10 atomes de carbone, de préférence avec 1 à 6 atomes de carbone, ou un reste hétérocyclyle, hétérocyclyloxy ou hétérocyclylamino avec chacun 3 à 6 atomes dans le cycle et 1 à 3 hétéroatomes du groupe constitué de N, O et S, où chacun des cinq derniers restes est non substitué ou substitué, ou un reste acyle,

$R^5$ représente un atome d'hydrogène, un atome d'halogène, un groupe nitro, cyano, thiocyanato ou un reste de formule $-B^1-Y^1$, où $B^1$ et $Y^1$ sont tels que définis ci-dessous,

A représente un reste alkylène avec 1 à 5 atomes de carbone reliés linéairement ou alcénylène ou alcinylène avec chacun 2 à 5 atomes de carbone reliés linéairement, où chacun des trois derniers diradicaux est non substitué ou substitué par un ou plusieurs restes du groupe constitué d'un atome d'halogène, un groupe nitro, cyano, thiocyanato et un reste de formule $-B^2-Y^2$,

$(X)_n$ représente n substituants X et pour cela X représente, chacun indépendamment l'un de l'autre, un atome d'halogène, un groupe alkyle en $C_1$-$C_6$, alcényle en $C_2$-$C_6$, alcinyle en $C_2$-$C_6$, alkoxy en $C_1$-$C_6$, alcényloxy en $C_2$-$C_6$, alcinyloxy en $C_2$-$C_6$, (alkyle en $C_1$-$C_4$)-carbonyle, (alkoxy en $C_1$-$C_4$)-carbonyle ou (alkylthio en $C_1$-$C_4$)-carbonyle, où les parties hydrocarbonées dans les 9 derniers restes sont non substituées ou substituées, ou un reste de formule $-B^0R^0$, où $B^0$ est tel que défini ci-dessous et $R^0$ représente un reste aromatique, saturé ou partiellement saturé carbocyclique ou hétérocyclique, où le reste cyclique est substitué ou non substitué, ou deux restes X vicinaux forment conjointement un cycle condensé avec 4 à 6 atomes dans le cycle, qui est carbocyclique ou contient des hétéroatomes du groupe constitué de O, S et N et qui est non substitué ou substitué par un ou plusieurs restes du groupe constitué d'un atome d'halogène, un groupe alkyle en $C_1$-$C_4$ et oxo,

n vaut 0, 1, 2, 3, 4 ou 5,

$B^0$, $B^1$, $B^2$ représentent, chacun indépendamment l'un de l'autre, une liaison directe ou un groupe bivalent Gruppe de formule -O-, -S(O)p,-S(O)p-O-, -O-S(O)p, -CO-, -O-CO-, -CO-O-, -NR'-, -O-NR'-, -NR'-O-, -NR'-CO-, -CO-NR'-, où p = 0, 1 ou 2 et R' est un atome d'hydrogène, un groupe alkyle avec 1 à 6 atomes de carbone, phényle, benzyle, cycloalkyle avec 3 à 6 atomes de carbone ou alkanoyle avec 1 à 6 atomes de carbone,

$Y^1$, $Y^2$ représentent, chacun indépendamment l'un de l'autre, H ou un reste hydrocarboné acyclique par exemple chacun avec 1 à 20 atomes de carbone ou un reste hydrocarboné cyclique avec 3 à 8 atomes de carbone ou un reste hétérocyclique avec 3 à 9 atomes dans le cycle et 1 à 3 hétéroatomes du groupe constitué de N, O et S, où chacun des trois derniers restes est non substitué ou substitué.

3. Combinaison herbicide selon la revendication 1, **caractérisée en ce qu'**elle contient un ou plusieurs composés de formule (X)

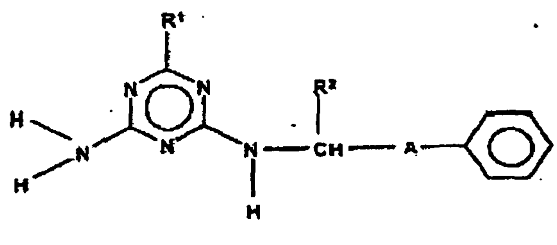

(X)

dans laquelle

$R^1$ représente un groupe alkyle en $C_1$-$C_4$ ou halogénoalkyle en $C_1$-$C_4$,

$R^2$ représente un groupe alkyle en $C_1$-$C_4$, cycloalkyle en $C_3$-$C_6$, cycloalkyle en $C_3$-$C_6$-alkyle en $C_1$-$C_4$ et

A représente $-CH_2-$, $-CH_2-CH_2-$ ou $-CH_2-CH_2-CH_2-$

4. Combinaison herbicide selon la revendication 1, **caractérisée en ce qu'**elle contient en tant que composant (A)

un ou plusieurs composés de formule (IV) ou leurs sels

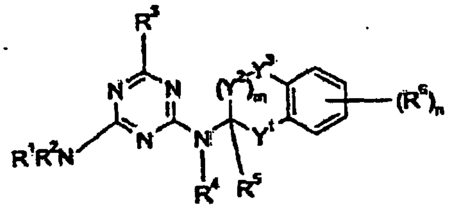 (IV)

dans laquelle $R^1$, $R^2$, $R^3$, $R^4$, $R^5$, $R^6$, $Y^1$, $Y^2$, $Y^3$, m et n sont tels que définis dans la revendication 1 pour la formule (IV).

5. Combinaison herbicide selon une des revendications 1 à 3, **caractérisée en ce qu'**elle contient en tant que composant (A) un ou plusieurs composés de formules (A1), (A2) et (A3)

(A1) 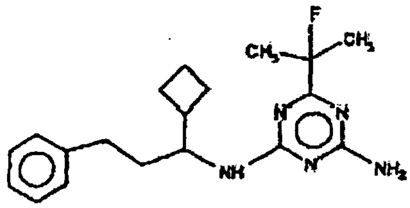

(A2) 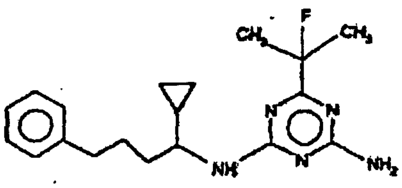

(A3) 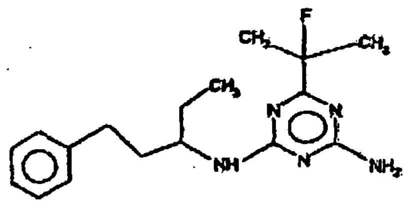

6. Combinaisons herbicides selon une des revendications 1 à 5, **caractérisées en ce qu'**elles contiennent un ou plusieurs autres composants du groupe contenant des substances actives phytosanitaires d'autre sorte, des additifs et des agents de formulation courants dans le domaine phytosanitaire.

7. Procédé de lutte contre les plantes adventices **caractérisé en ce que** l'on applique les herbicides de la combinaison herbicide, définie selon une ou plusieurs des revendications 1 à 6, ensemble ou séparément en pré-levée, post-levée ou en pré- et post-levée sur les plantes, parties de plantes, graines de plantes ou les surfaces cultivées.

8. Procédé selon la revendication 7 pour la lutte sélective contre les plantes adventices dans les cultures de plantes.

9. Procédé selon la revendication 7 pour la lutte contre les plantes adventices dans les céréales.

10. Utilisation des combinaisons herbicides définies selon une des revendications 1 à 6 pour lutter contre les plantes

adventices.